# EUROPEAN PATENT APPLICATION

(11) **EP 4 738 552 A1**
(43) Date of publication of application: **06.05.2026**
(21) Application number: 24892964.8
(22) Date of filing: 30.08.2024
(51) Int. Cl.: H01M 50/134

(54) **BATTERY CELL, BATTERY APPARATUS AND ELECTRICAL APPARATUS**

(30) Priority: 24.11.2023 WO PCT/CN2023/134129; 30.11.2023 WO PCT/CN2023/135607; 27.02.2024 CN 202410217408; 22.04.2024 WO PCT/CN2024/089160; 12.07.2024 WO PCT/CN2024/105243; 19.08.2024 WO PCT/CN2024/113179
(71) Applicant: Contemporary Amperex Technology Co., Limited, Ningde, Fujian 352100 (CN)
(72) Inventor: CAO, Mengkai, Ningde, Fujian 352100 (CN); ZHOU, Wenlin, Ningde, Fujian 352100 (CN); JIANG, Xiangwei, Ningde, Fujian 352100 (CN); HUANG, Shoujun, Ningde, Fujian 352100 (CN); ZHENG, Yulian, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2024/116122
(87) International publication number: WO 2025/107805

(57) **Abstract**

A battery cell, a battery apparatus, and an electrical apparatus. The battery cell includes a housing (11), an electrode assembly (2) and an end cover (12), where at least one end of the housing (11) in a first direction is provided with an opening, and the housing (11) comprises a first side wall part (111). The electrode assembly (2) is at least partially accommodated in the housing (11). The electrode assembly (2) includes a positive pole piece (22) and a negative pole piece (23). At least part of the positive pole piece (22) and at least part of the negative pole piece (23) are stacked in a second direction. The second direction is parallel to the thickness direction of the first side wall part (111). The first direction intersects with the second direction. The end cover (12) is used for sealing the opening, and the first side wall part (111) and the end cover (12) are welded to form a first connecting part (51). The first side wall part (111) comprises, arranged in a first direction, a first area (1111) and a second area (1112). The first area (1111) is located between the first connecting part (51) and the second area (1112). The hardness of the first area (1111) is less than the hardness of the second area (1112). The expansion force of the electrode assembly (2) is released by means of the first area (1111) having a lower hardness, so as to reduce the possibility of cracking of the first connecting part (51) of the first side wall part (111).

## Description

### CROSS-REFERENCE TO RELATED APPLICATIONS

The present application claims the priority of Chinese patent application with the application No. 202410217408.8 and the filing date of February 27, 2024, International Patent Application with the application No. PCT/CN 2024/113179 and the filing date of August 19, 2024, International Patent Application with the application No. PCT/CN 2024/105243 and the filing date of July 12, 2024, and International Patent Application with the application No. PCT/CN 2024/089160 and the filing date of April 22, 2024, International Patent Application No. PCT/CN 2023/135607 and the filing date of November 30, 2023, International Patent Application No. PCT/CN 2023/134129 and the filing date of November 24, 2023, which are incorporated herein by reference in their entirety.

### TECHNICAL FIELD

The present application relates to the field of battery technology, and in particular, to a battery cell, a battery apparatus, and an electrical apparatus.

### BACKGROUND

Batteries are becoming more and more widely used in life and industry. Batteries are used not only in energy storage power systems such as hydropower, thermal power, wind power, and solar power plants, but also in electric tools such as electric bicycles, electric motorcycles, and electric vehicles.

In the related art, an electrode assembly is provided in a housing of a battery cell, and during charging and discharging of the battery cell, the electrode assembly may expand, possibly resulting in cracking of the housing.

### SUMMARY

In view of the above, it is desirable in the embodiments of the present application to provide a battery cell, a battery apparatus, and an electrical apparatus, which are capable of reducing the possibility of cracking of a housing.

In order to achieve the above-mentioned objective, the technical solutions of the embodiments of the present application are achieved as follows:
disclosed in an aspect of embodiments of the present application is a battery cell including:
a housing having an opening in at least one end thereof in a first direction and including a first side wall part;
an electrode assembly at least partially accommodated in the housing, where the electrode assembly includes a positive pole piece and a negative pole piece, at least part of the positive pole piece and at least part of the negative pole piece are stacked in a second direction, the second direction is parallel to the thickness direction of the first side wall part, and the first direction intersects with the second direction;
an end cover used for sealing the opening, where the first side wall part and the end cover are welded to form a first connecting part;
where the first side wall part includes, arranged in a first direction, a first area and a second area, the first area is located between the first connecting part and the second area, and hardness of the first area is greater than hardness of the second area.

The expansion force of the electrode assembly is released by means of the first area having a lower hardness, so as to reduce the possibility of cracking of the first connecting part.

In some embodiments, a ratio of the hardness of the first area to the hardness of the second area is between 0.3 and 0.8.

An appropriate hardness can both reduce the cracking of the first connecting part and restrain the cracking of the first area itself.

In some embodiments, a ratio of the hardness of the first area to the hardness of the second area is between 0.5 and 0.8.

An appropriate hardness can both reduce the cracking of the first connecting part and restrain the cracking of the first area itself.

In some embodiments, the hardness of the second area ranges from 40 HV to 100 HV, and the hardness of the first area ranges from 20 HV to 55 HV.

An appropriate hardness can both reduce the cracking of the first connecting part and restrain the cracking of the first area itself.

In some embodiments, a dimension of the first area in the first direction ranges from 0.05 mm to 0.75 mm.

An appropriate dimension range of the maximum dimension of the first area in the first direction can both reduce the cracking of the first connecting part and restrain the first area from being excessively long and cracking itself.

In some embodiments, a dimension of the first area in the first direction ranges from 0.1mm to 0.6mm.

An appropriate dimension range of the maximum dimension of the first area in the first direction can both reduce the cracking of the first connecting part and restrain the first area from being excessively long and cracking itself.

In some embodiments, at least some of the grains in the first area are first grains, a ratio of a number of the first grains in the first area to a number of all grains in the first area is greater than 50%, and a dimension of the first grains that extends in the first direction is a first dimension, a maximum dimension of the first grains in the second direction is a second dimension, and a ratio of the first dimension to the second dimension ranges from 0.2 to 5.

The ratio of the first dimension to the second dimension ranges from 0.2 to 5, such that the proportion of the first grains is more than 50%, which is advantageous for improving the toughness of the first area.

In some embodiments, the ratio of the first dimension to the second dimension ranges from 0.25 to 4.

The ratio of the first dimension to the second dimension ranges from 0.25 to 4, such that the proportion of the first grains is more than 50%, which is advantageous for improving the toughness of the first area.

In some embodiments, the first dimension ranges from 5 µm to 500 µm, and the second dimension ranges from 5 µm to 500 µm.

When the ratio of the first dimension to the second dimension is in a corresponding range, the first grains corresponding to a suitable range of the first dimension and the second dimension are advantageous for improving toughness of the first area.

In some embodiments, at least some of the grains in the second area are second grains, a ratio of a number of the second grains in the second area to a number of all grains in the second area is greater than 50%, and a dimension of the second grains that extends in the first direction is a third dimension, a maximum dimension of the second grains in the second direction is a fourth dimension, and a ratio of the third dimension to the fourth dimension ranges from 4 to 100.

The ratio of the third dimension to the fourth dimension ranges from 4 to 100, such that the proportion of the second grains is greater than 50%, which is advantageous for reducing the toughness of the second area and reducing the possibility of cracking of the second area itself under the acting force of the expansion force.

In some embodiments, the ratio of the third dimension to the fourth dimension ranges from 4 to 50.

The ratio of the third dimension to the fourth dimension ranges from 4 to 50, such that the proportion of the second grains is greater than 50%, which is advantageous for reducing the toughness of the second area and reducing the possibility of cracking of the second area itself under the acting force of the expansion force.

In some embodiments, the third dimension ranges from 150 µm to 1000 µm, and the fourth dimension ranges from 5 µm to 120 µm.

When the ratio of the third dimension to the fourth dimension is in a corresponding range, a suitable range of the third dimension and the fourth dimension advantageously reduces the toughness of the second area and reduces the possibility of cracking of the second area itself under the acting force of the expansion force.

In some embodiments, at least some of the grains in the first area are first grains, a ratio of a number of the first grains in the first area to a number of all the grains in the first area is greater than 50%, and a dimension of the first grains that extends in the first direction is a first dimension, a maximum dimension of the first grains in the second direction is a second dimension, and a ratio of the first dimension to the second dimension ranges from 0.2 to 5;

at least some of the grains in the second area are second grains, a ratio of a number of the second grains in the second area to a number of all the grains in the second area is more than 50%, and a dimension of the second grains that extends in the first direction is a third dimension, a maximum dimension of the second grains in the second direction is a fourth dimension, and a ratio of the third dimension to the fourth dimension ranges from 4 to 100;

The third dimension is greater than the first dimension.

Within the same dimension in the first direction, the first area has more grains bearing the expansion force, thereby improving toughness of the first area.

In some embodiments, a ratio of the third dimension to the first dimension ranges from 1.5 to 150, or the ratio of the third dimension to the first dimension ranges from 1.8 to 100.

In some embodiments, the first dimension ranges from 5 µm to 500 µm, and the third dimension ranges from 150 µm to 1000 µm.

In some embodiments, a maximum thickness of the first area is greater than a minimum thickness of the second area.

The first area is reinforced by its greater thickness to reduce the possibility of cracking of the first area.

In some embodiments, the first side wall part has a first inner surface and a second inner surface facing the electrode assembly and a first outer surface and a second outer surface facing away from the electrode assembly, the first inner surface and the second inner surface being successively connected in a direction from the end cover toward the electrode assembly, the first outer surface and a second outer surface are successively connected in a direction from the end cover toward the electrode assembly, the first inner surface and the second inner surface are at least partially formed in the first area, the second inner surface and the second outer surface are at least partially formed in the second area, a distance between the first inner surface and the first outer surface in the second direction is larger than a distance between the second inner surface and the second outer surface in the second direction.

The first side wall part reinforces the first area at a thicker part of the first inner surface to reduce the possibility of cracking of the first area.

In some embodiments, the first inner surface includes a first sub-face and a second sub-face successively connected in the direction from the end cover toward the electrode assembly, the first sub-face being formed at least partially in the first area, the first sub-face being more adjacent to the electrode assembly than the second sub-face in the second direction, a distance between the first sub-face and the first outer surface in the second direction being larger than a distance between the second sub-face and the first outer surface in the second direction.

The first side wall part reinforces the first area at a part corresponding to the thicker first sub-face to reduce the possibility of cracking of the first area.

In some embodiments, a distance between the second sub-face and the first outer surface in the second direction is a first preset thickness, and the first preset thickness exhibits a decreasing trend in the direction from the end cover toward the electrode assembly.

The first preset thickness exhibits a decreasing trend in the direction from the end cover toward the electrode assembly, which is advantageous for reducing material consumption costs for the first side wall part.

In some embodiments, the first sub-face spans across the first area and the second area, and the first outer surface spans across the first area and the second area; or, the second sub-face spans across the first area and the second area, and the first outer surface spans across the first area and the second area.

The first side wall part reinforces the first sub-face at a location where the thicker part of the first sub-face meets the first area and the second area to reduce the possibility of cracking at the location where the first area meets the second area.

In some embodiments, the first inner surface spans across the first area and the second area, and the first outer surface spans across the first area and the second area.

The first side wall part reinforces the location where the first area meets the second area at a thicker part corresponding to the first inner surface to reduce the possibility of cracking at the location where the first area meets the second area.

In some embodiments, a dimension of the first inner surface in a third direction is greater than a dimension of the first inner surface in the first direction, and the first direction, the second direction and the third direction are non-coplanar and intersect with each other in pairs.

The first side wall part reinforces the first side wall part by a thicker part in the third direction on the first inner surface and by a longer area that extends in the third direction to reduce the possibility of cracking of the first side wall part.

In some embodiments, in the second direction, a projection obtained by overlapping the projection of the first inner surface with the projection of the first area is a first projection; a dimension of the first projection in the third direction is greater than a dimension of the first projection in the first direction, and the first direction, the second direction, and the third direction are non-coplanar and intersect with each other in pairs.

The dimension of the first projection in the third direction is greater than the dimension of the first projection in the first direction, and the reinforced part in the first area that extends in the third direction has a greater length, which is advantageous for reducing the possibility of cracking of the first area.

In some embodiments, the first inner surface includes a first connecting face that passes through a middle section of the first side wall part, the middle section being perpendicular to the third direction, the middle section being at equal distances from two ends of the first side wall part in the third direction.

The first connecting face passes through the middle section of the first side wall part to reduce cracking at the middle section.

In some embodiments, the first connecting face is formed at least partially in the first area, and a projection obtained by overlapping the projection of the first connecting face with the projection of the first area is a second projection, and the second projection passes through the middle section of the first side wall part.

The second projection passes through the middle section of the first side wall part and reinforces a part of the first area corresponding to the middle section to reduce the possibility of cracking of the first area at the middle section.

In some embodiments, the first inner surface further includes a second connecting face and a third connecting face, the second connecting face, the first connecting face and the third connecting face are arranged in the third direction, the first connecting face connects the second connecting face and the third connecting face, and in the second direction, a distance between the second connecting face and a first outer surface and a distance between the third connecting face and the first outer surface are both smaller than a distance between the first connecting face and the first outer surface.

The first side wall part has a greater thickness at the part corresponding to the first connecting face and a reduced thickness at the parts corresponding to the second connecting face and the third connecting face, which not only reduces cracking of the housing according to the distribution characteristics of expansion forces but also lowers manufacturing costs.

In some embodiments, the first connecting face, the second connecting face, and the third connecting face are each at least partially formed in the first area.

It is advantageous for reducing the cracking of the first area itself.

In some embodiments, the first inner surface further includes a first transition face, the first connecting face, the first transition face and the second connecting face are arranged in the third direction, the first transition face connects the second connecting face and the first connecting face, the distance between the first transition face and the first outer surface in the second direction is a second preset thickness, and the second preset thickness exhibits a decreasing trend in a direction from the second connecting face toward the first connecting face; and/or the first inner surface further includes a second transition face, the first connecting face, the second transition face and the third connecting face are arranged in the third direction, the second transition face connects the third connecting face and the first connecting face, the distance between the second transition face and the first outer surface in the second direction is a third preset thickness, and the third preset thickness exhibits a decreasing trend in a direction from the third connecting face toward the first connecting face.

The transition is smoothly achieved through the transition face.

In some embodiments, the first transition face is at least partially formed in the first area and/or the second transition face is at least partially formed in the first area.

The first transition face and/or the second transition face increases towards the first area to reduce the possibility of cracking of the first area.

In some embodiments, a dimension of the first connecting face in the third direction is L₁, a dimension of the first side wall part in the third direction is L, and 0.2≤L₁/L≤0.6.

Further areas of the first side wall part in the third direction can be reinforced, and the cost can be increased to some extent.

In some embodiments, the first connecting face has a first end and a second end opposite to each other in the third direction, the first side wall part has a third end and a fourth end opposite to each other in the third direction, the first end is adjacent to the third end, the second end is adjacent to the fourth end, a dimension of the first side wall part in the third direction is L, a minimum distance of the first end from the third end in the third direction is L₂, and a minimum distance of the second end from the fourth end in the third direction is L₃; L₂/L≤0.3; and/or, L₃/L≤0.3.

Further areas of the first side wall part in the third direction can be reinforced, and the cost can be increased to some extent.

In some embodiments, 100 mm≤L≤450 mm.

In some embodiments, the housing includes a corner wall to which two ends of the first side wall part in the third direction are connected;

at least one end of the first inner surface in the third direction is not in contact with the corner wall; or, two ends of the first inner surface in the third direction extend to two of the corner walls, respectively.

In some embodiments, the electrode assembly further includes a spacer provided between the positive pole piece and the negative pole piece;

the positive pole piece includes a positive pole body area and a positive pole tab protruding from the positive pole body area, the positive pole body area has a positive pole active material layer, the negative pole piece includes a negative pole body area and a negative pole tab protruding from the negative pole body area, the negative pole body area has a negative pole active material layer, in the first direction, the positive pole body area has a fifth end facing the end cover, the negative pole body area has a sixth end facing the end cover, and the spacer has a seventh end facing the end cover, the seventh end being more adjacent to the end cover than the fifth end and the sixth end.

The spacer has a part that extends beyond the fifth end and the sixth end to reinforce the insulating effect of the spacer between the positive pole piece and the negative pole piece and to reduce the risk of electrical contact between the positive pole piece and the negative pole piece.

In some embodiments, the spacer includes an extension area that extends beyond the fifth end and the sixth end in the first direction, and on a projection plane perpendicular to the second direction, an orthographic projection of the extension area partially overlaps with the orthographic projection of the first inner surface.

The configuration in which the orthographic projection of the extension area partially overlaps with the orthographic projection of the first inner surface increases the dimension of the first inner surface in the first direction, thus enhancing reinforcement capability of the first inner surface.

In some embodiments, the first inner surface is convex to the second inner surface;
on the projection plane perpendicular to the second direction, the orthographic projection of the positive pole body area does not overlap with the orthographic projection of the first inner surface; and/or on the projection plane perpendicular to the second direction, the orthographic projection of the negative pole body area does not overlap with the orthographic projection of the first inner surface.

Interference degree between the expanding electrode assembly and the first inner surface is reduced.

In some embodiments, the negative pole piece includes a negative pole current collector and a negative pole active material layer provided on at least one side of the negative pole current collector, the negative pole active material layer including a negative pole active material.

In some embodiments, the negative pole active material layer includes a negative pole body part and a negative pole thinning part, the negative pole body part and the negative pole thinning part are arranged in the first direction, and the negative pole thinning part is provided at an end, adjacent to the end cover, of the negative pole body part in the first direction.

The negative pole thinning part allows the electrode assembly to have a larger expansion gap, and reduces the expansion force exerted by the electrode assembly on the first side wall part.

In some embodiments, on the projection plane perpendicular to the second direction, an orthographic projection of the negative pole thinning part and an orthographic projection of the first inner surface are provided at intervals in the first direction.

The effect of the negative pole thinning part on the first inner surface is reduced, reducing the expansion force exerted by the electrode assembly on the first inner surface.

In some embodiments, on the projection plane perpendicular to the second direction, a spacing dimension between an orthographic projection of the negative pole thinning part and an orthographic projection of the first inner surface in the first direction is greater than or equal to 1 mm.

The further distance between the first inner surface and the first thinning part is advantageous for reducing the expansion force applied to the first inner surface by the electrode assembly.

In some embodiments, the negative pole active material layer may have a single-sided coating weight of from 90 mg/1540 mm² to 170 mg/1540 mm², and the negative pole active material layer may optionally have a single-sided coating weight of from 110 mg/1540 mm² to 150 mg/1540 mm².

In some embodiments, the negative pole piece has a porosity of from 27% to 40%.

In some embodiments, the negative pole active material includes a silicon-based material in which silicon is contained in the negative pole active material in an amount of 0.3% to 10% by mass, optionally 1% to 6% by mass.

In some embodiments, the silicon-based material includes at least one of a silicon-oxygen compound and a silicon-carbon composite.

In some embodiments, the positive pole piece includes a positive pole current collector and a positive pole active material layer provided on at least one side of the positive pole current collector, the positive pole active material layer including a positive pole active material.

In some embodiments, the positive pole active material layer includes a positive pole body part and a positive pole thinning part, the positive pole body part and the positive pole thinning part are arranged in the first direction, and the positive pole thinning part is provided at an end, adjacent to the end cover, of the positive pole body part in the first direction.

The provision of the positive pole thinning part is advantageous for increasing the expansion gap of the electrode assembly and in reducing the expansion force exerted by the electrode assembly on the first side wall part.

In some embodiments, on the projection plane perpendicular to the second direction, an orthographic projection of the positive thinning part and an orthographic projection of the first inner surface are provided at intervals in the first direction.

The effect of the positive pole thinning part on the first inner surface is reduced, reducing the expansion force exerted by the electrode assembly on the first inner surface.

In some embodiments, on the projection plane perpendicular to the second direction, a spacing dimension between an orthographic projection of the positive thinning part and an orthographic projection of the first inner surface in the first direction is greater than or equal to 1 mm.

The negative pole thinning part is further away from the first inner surface, which is advantageous for reducing the expansion force exerted by the electrode assembly on the first inner surface.

In some embodiments, the positive pole active material layer has a single-sided coating weight of from 200 mg/1540 mm² to 370 mg/1540/mm²; the positive pole active material layer may have a single-sided coating weight of optionally from 240 mg/1540 mm² to 330 mg/1540 mm².

In some embodiments, the positive pole active material is a lithium-containing phosphate.

In some embodiments, the housing includes a material of steel;
the maximum distance between the second inner surface and the second outer surface in the second direction is D₁ and the dimension of the housing in the second direction is D, and 0.001≤D₁/D≤0.012.

The housing maintains superior strength while achieving high energy density.

In some embodiments, the housing includes a material of steel;
the maximum distance between the second inner surface and the second outer surface in the second direction is D₁, 0.08mm≤Di≤0.35mm; and/or the maximum distance between the first inner surface and the first outer surface in the second direction is D₂, 0.1mm≤D₂≤0.6mm.

In some embodiments, the housing includes a material of an aluminum alloy;
the maximum distance between the second inner surface and the second outer surface in the second direction is D₁ and the dimension of the housing in the second direction is D, and 0.005≤D₁/D≤0.065.

The housing maintains superior strength while achieving high energy density.

In some embodiments, the housing includes a material of an aluminum alloy;
the maximum distance between the second inner surface and the second outer surface in the second direction is D₁, 0.4mm≤D₁≤0.8mm; and/or the maximum distance between the first inner surface and the first outer surface in the second direction is D₂, 0.5mm≤D₂≤1.5mm.

In some embodiments, the aluminum alloy includes the following components in the following percentages by mass: aluminum≥99.6%, copper≤0.05%, iron≤0.35%, magnesium≤0.03%, manganese≤0.03%, silicon≤0.25%, titanium≤0.03%, vanadium≤0.05%, zinc≤0.05%, other individual elements≤0.03%.

In some embodiments, the first area is directly connected to the first connecting part, and the first inner surface extends in the first direction to an end of the first area facing the connecting part.

It is advantageous for reinforcing the first area towards one end of the first connecting part.

In some embodiments, the first side wall part further includes a first transition area connected to an end of the first area away from the second area in the first direction, the first transition area being connected to the first connecting part, a connection location of the first transition area and the first connecting part forming a first connecting interface having a first location most adjacent to the first area in the first direction, the first location being at an end of the first area away from the second area in the first direction.

By providing the first connecting interface with a larger contact area between the first transition area and the first connecting part, the connection firmness is improved.

In some embodiments, at least some of the first connecting interfaces extend obliquely with respect to the second direction.

The tensile force exerted by the first connecting part on the first transition area and the acting force applied by the first side wall part on the first transition area are non-collinear, thereby reducing the possibility of fatigue cracking.

In some embodiments, the first connecting interface includes a first interface that extends obliquely from the first location to the direction adjacent to the end cover, at least part of the first transition area being located between the first interface and the end cover in the second direction.

The first transition area is protected against fatigue cracking by stop protection provided by the first connecting part.

In some embodiments, the first interface and the first outer surface are connected to the first location, the first location being at least partially located in the first area.

The corresponding thickened part of the first side wall part at the first outer surface is located as far as possible at the end of the first area facing the first connecting part to reduce the possibility of fatigue cracking at the end of the first area facing the first connecting part.

In some embodiments, the first connecting interface includes a second interface that extends obliquely from the first location in the direction away from the end cover, at least part of the first transition area being located on a side of the second interface facing away from the end cover in the second direction.

The first transition area blocks the first connecting part and reduces the possibility of disengaging the first connecting part from the end cover.

In some embodiments, the second interface and the first inner surface are connected to the first location, the first location being at least partially located in the first area.

The thicker part of the first side wall part corresponding to the first inner surface is arranged more adjacent to the first connecting part, thereby reinforcing the end of the first area adjacent to the first connecting part and reducing the possibility of cracking at the end of the first area facing the first connecting part.

In some embodiments, the hardness of the first transition area is less than the hardness of the second area; and/or the hardness of the first transition area is less than the hardness of the first connecting part.

In some embodiments, the first connecting interface is more adjacent to the second area than an outer surface of the end cover.

The first connecting part is capable of sinking to a deeper position, thereby improving the connection strength between the end cover and the first connecting part.

In some embodiments, the housing further includes a second side wall part and a corner wall, the first side wall part, the corner wall, and the second side wall part being arranged in a circumferential direction of the opening, the corner wall connecting the first side wall part and the second side wall part.

Stress concentration is reduced by the corner wall.

In some embodiments, the corner wall is welded to the end cover to form a second connecting part;
the corner wall includes a third area and a fourth area arranged in the first direction, the hardness of the third area is less than the hardness of the fourth area, and the third area is located between the fourth area and the second connecting part.

The possibility of cracking of the second connecting part is reduced by the third area having a lower hardness.

In some embodiments, the corner wall has a third inner surface and a fourth inner surface that face toward the electrode assembly and third outer surface and the fourth outer surface that face away from the electrode assembly, the third inner surface and the fourth inner surface are successively connected in a direction from the end cover toward the electrode assembly, the third inner surface and the fourth inner surface are at least partially formed in the third area, the fourth inner surface and the fourth outer surface are at least partially formed in the fourth area, a distance between the third inner surface and the third outer surface in the thickness direction of the corner wall is larger than a distance between the fourth inner surface and the fourth outer surface in the thickness direction of the corner wall.

The thicker part of the corner wall corresponding to the third inner surface reinforces the third area to reduce the possibility of fatigue cracking of the third area having a lower hardness.

In some embodiments, the third area is directly connected to the first area, the third inner surface extends to an end of the third area facing the first area, and the first inner surface extends to an end of the first area facing the third area.

The thicker part of the first side wall part at the first inner surface and the thicker part of the corner wall at the third inner surface cooperate to help reduce cracking of the first area and the third area.

In some embodiments, the corner wall has a first connecting end and a second connecting end, the first side wall part is connected to the first connecting end, the second side wall part is connected to the second connecting end, a distance between the third inner surface and the third outer surface in a thickness direction of the corner wall is a fourth preset thickness, and the fourth preset thickness exhibits a decreasing trend in a direction from the first connecting end toward the second connecting end.

The third area is reinforced to reduce the possibility of cracking while minimizing cost.

In some embodiments, the third area is directly connected to the second connecting part, and the third inner surface extends to an end of the third area facing the second connecting part.

The end of the third area facing the second connecting part is reinforced, thereby reducing the possibility of cracking at one end.

In some embodiments, the corner wall further includes a second transition area connected to an end, away from the fourth area, of the third area in the first direction, the second transition area being connected to the second connecting part, a connection location of the second transition area and the second connecting part forming a second connecting interface having a second location most adjacent to the third area in the first direction, the second location being at an end, away from the fourth area, of the third area in the first direction.

The second connecting face increases the contact area and reduces the possibility of cracking between the second transition area and the second connecting part.

In some embodiments, at least part of the second connecting interface extends obliquely with respect to the thickness direction of the corner wall.

The acting force exerted by the contraction of the second connecting part on the second transition area and the acting force exerted on the second transition area by the deformation of the corner wall under expansion force are non-collinear, thereby reducing the possibility of fatigue cracking between the second transition area and the second connecting part.

In some embodiments, the second connecting interface includes a third interface that extends obliquely from the second location toward the end cover, at least part of the second transition area being located between the third interface and the end cover in the thickness direction of the corner wall.

The second connecting part protects the second transition area and reduces the possibility of fatigue cracking of the second transition area.

In some embodiments, the third interface is connected to the third outer surface at a second location, the second location being in the third area.

The thicker part of the corner wall corresponding to the third outer surface is provided adjacent to the second connecting part to help reduce cracking of the third area toward one end of the second connecting part.

In some embodiments, the second connecting interface includes a fourth interface that extends obliquely away from the end cover from the second location, and at least part of the second transition area is located on a side, facing away from the end cover, of the fourth interface in a thickness direction of the corner wall.

The second transition area protects the second connecting part and reduces the possibility of the second connecting part falling off.

In some embodiments, the fourth interface is connected to the third inner surface at a second location, the second location being within the first area.

The thicker part of the corner wall at the third inner surface adjacent to the second connecting part can reduce the possibility of cracking of the third area toward one end of the second connecting part.

In some embodiments, the hardness of the second transition area is less than the hardness of the fourth area; and/or the hardness of the second transition area is less than the hardness of the second connecting part.

In some embodiments, the second connecting interface is more adjacent to the fourth area than an outer surface of the end cover.

The second connecting part is capable of sinking deeper into the corner wall, thereby reinforcing the connection strength between the corner wall and the end cover.

In some embodiments, the hardness of the third area is less than the hardness of the second connecting part.

In some embodiments, the housing includes two of the first side wall parts and two of the second side wall parts, two of the first side wall parts are provided opposite to each other in the second direction, two of the second side wall parts are provided opposite to each other in the third direction, and the first direction, the second direction, and the third direction are perpendicular to each other in pairs.

In some embodiments, the first side wall part has a limiting face facing the end cover, the limiting face abutting against the end cover to restrict the end cover from moving toward the electrode assembly.

During the welding process, the possibility of the end cover moving toward the electrode assembly is reduced, thereby improving welding quality and decreasing welding difficulty.

In some embodiments, the first side wall part further includes a limiting area provided on the limiting face, the limiting area being provided opposite the end cover in the second direction, the limiting area being welded to the end cover to form the first connecting part.

It can reduce the possibility of the end cover moving in the thickness direction of the first side wall part during the welding process, thereby improving welding quality and decreasing welding difficulty.

In some embodiments, the electrode assembly is of a laminated structure, the electrode assembly includes the plurality of positive pole pieces and the plurality of negative pole pieces, and the plurality of the positive pole pieces and the plurality of the negative pole pieces are laminated in the second direction.

In some embodiments, a number of the negative pole pieces is greater than a number of the positive pole pieces, and the one positive pole piece is provided between two adjacent negative pole pieces.

In some embodiments, each of the negative pole pieces is provided with a negative pole tab; and/or each of the positive pole pieces is provided with a positive pole tab.

In some embodiments, the first side wall part has a first inner surface and a second inner surface facing the electrode assembly and a first outer surface and a second outer surface facing away from the electrode assembly, the first inner surface and the second inner surface being successively connected in a direction from the end cover toward the electrode assembly, the first outer surface and a second outer surface are successively connected in a direction from the end cover toward the electrode assembly, the first inner surface and the second inner surface are at least partially formed in the first area, the second inner surface and the second outer surface are at least partially formed in the second area, a distance between the first inner surface and the first outer surface in the second direction is larger than a distance between the second inner surface and the second outer surface in the second direction;
a dimension of the first inner surface is greater than a dimension of the positive pole piece and/or a dimension of the negative pole piece in the third direction, and the first direction, the second direction, and the third direction are perpendicular to each other in pairs.

The thicker part of the first side wall part corresponding to the first inner surface can be reinforced over the entire positive pole piece in the third direction, which is advantageous for reducing cracking of the first side wall part.

In some embodiments, the battery cell further includes two electrode terminals, where the two electrode terminals are provided on the end cover, and the two electrode terminals have opposite polarities and are both electrically connected to the electrode assembly;
the end cover is provided with a lead-out hole, the electrode terminal includes a terminal body, a first limiting part and a second limiting part, the terminal body is connected to the first limiting part and the second limiting part, the terminal body passes through the lead-out hole, and in the first direction, the first limiting part is located on a side, facing away from the electrode assembly, of the end cover, and the second limiting part is located on a side, facing the electrode assembly, of the end cover.

The electrode terminal is mounted on the end cover by riveting, and the installation difficulty is low.

In some embodiments, the electrode assembly has a flat area, and a part of the positive pole piece in the flat area and a part of the negative pole piece in the flat area are stacked in the second direction.

In some embodiments, the electrode assembly includes adjacent fifth outer surface and sixth outer surface, the fifth outer surface being perpendicular to the second direction, the fifth outer surface having a larger area than that of the sixth outer surface, the fifth outer surface being provided opposite the first side wall part in the second direction.

The first area releases expansion forces primarily in the direction of greatest force magnitude, while the first inner surface is structurally reinforced in the high-force direction.

In some embodiments, the fifth outer surface is the surface with the largest area among the outer surfaces of the electrode assembly.

In some embodiments, the electrode assembly is a winding structure, the electrode assembly further has a corner area, at least one end of the flat area in the third direction is provided with the corner area, and the first direction, the second direction, and the third direction are non-coplanar and intersect with each other in pairs;
the outer surface of the flat area includes the fifth outer surface, the outer surface of the corner area includes the sixth outer surface, and at least part of the sixth outer surface is an arc surface.

In some embodiments, the electrode assembly is of a laminated structure, the flat area includes the plurality of positive pole pieces and the plurality of negative pole pieces, the plurality of the positive pole pieces and the plurality of the negative pole pieces are stacked in the second direction, and the fifth outer surface is perpendicular to the sixth outer surface.

The first area releases expansion forces primarily in the direction of greatest force magnitude, while the first inner surface is structurally reinforced in the high-force direction.

In some embodiments, the first side wall part is the wall having the largest outer surface area of the housing.

In some embodiments, the housing includes two of the first side wall parts that are oppositely provided in the second direction, and the electrode assembly is located between the two first side wall parts.

In some embodiments, the hardness of the first area is less than the hardness of the first connecting part.

Embodiments of the present application provide a battery apparatus including a battery cell according to any of the above.

In some embodiments, where the number of the electrode assemblies is N1, each of the electrode assemblies further includes at least one spacer, the number of the positive pole pieces is at least one, the number of the negative pole pieces is at least one, the positive pole pieces, the negative pole pieces, and the spacers are stacked and form a flat area, and at least some of the positive pole pieces, at least some of the negative pole pieces, and at least some of the spacers are laminated in the second direction in the flat area;
the number of layers of the positive pole pieces of each of the electrode assemblies stacked in the flat area is N2, the flat area has an outer surface perpendicular to the second direction, and the area of the outer surface is S, N1≥1, N2≥1, N1 * N2≥50, S≥8000 mm².

In the embodiments of the present application, the use of the first area with higher toughness reduces the possibility of cracking of the first connecting part of the first side wall part under substantial expansion forces.

In some embodiments, the negative pole piece includes a negative pole current collector and a negative pole active material layer provided on at least one side of the negative pole current collector, the negative pole active material layer including a negative pole active material, and a discharge capacity per unit area of the negative pole active material layer is 2.0 mAh/cm² to 5.0 mAh/cm².

In the embodiments of the present application, when the discharge capacity per unit area of the negative pole active material layer falls within the specified range, sufficient lithium intercalation sites are available in the negative pole active material layer, thereby reducing lithium deposition risks; and rapid charging is facilitated while maintaining controlled expansion forces, consequently decreasing the possibility of cracking of the first connecting part under the expansion stress from the electrode assembly.

In some embodiments, the thickness of the negative pole active material layer is T1, and 9 µm≤T1≤75 µm.

In the embodiments of the present application, the thickness of the negative pole active material layer is relatively large, and accordingly the expansion force is relatively large, the use of the first area having a lower hardness reduces the possibility of cracking in the first connecting part of the first side wall part under substantial expansion forces.

The embodiments of the present application provide an electrical apparatus including a battery cell of any of the above for providing electrical energy to the electrical apparatus.

### DESCRIPTION OF DRAWINGS

FIG. 1 is a schematic structural diagram of a vehicle according to some embodiments of the present application;
FIG. 2 is an exploded view of a battery according to some embodiments of this application.
FIG. 3 is an exploded view of a battery cell according to some embodiments of this application.
FIG. 4 is an axonometric view of a battery cell as shown in FIG. 3;
FIG. 5 is a cross-sectional view taken along line A-A of a battery cell as shown in FIG. 4, where the cross-section of a first side wall part shown in the figure is a preset cross-section;
FIG. 6 is an enlarged partial view at B of FIG. 5, showing a cross-section of a first side wall part as a preset cross-section;
FIG. 7 is an axonometric view of a housing as shown in FIG. 5;
FIG. 8 is an enlarged partial view at J in FIG. 7, the dotted line shown in the figure is a dividing line between a first area and a second area, one side of the dotted line in the first direction is the first area, and the other side of the dotted line in the first direction is the second area, and the first sub-face is shown to span across the first area and the second area;

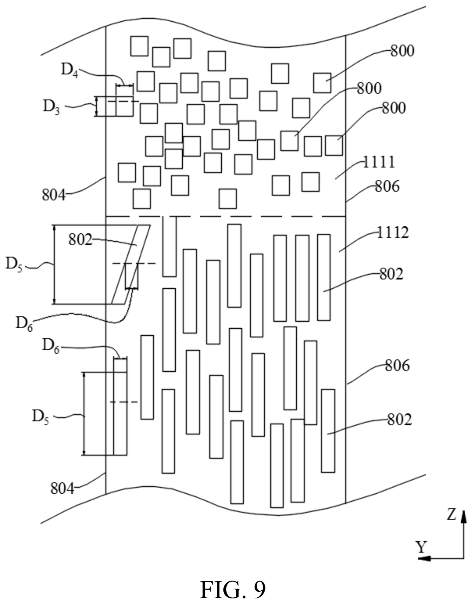

FIG. 9 is a schematic metallographic diagram in a preset cross-section of a first side wall part provided by some embodiments of the present application, where a first grain in a first area is shown, and other grains in the first area are not shown, a second grain in a second area is shown, and other grains in the second area are not shown, a dimension of the first grain in the first area that extends in a first direction and a maximum dimension in a second direction are shown, a dimension of the second grain in the second area that extends in the first direction and the maximum dimension in the second direction are shown, and a dotted line is shown as a dividing line dividing the first area and the second area, one side of the dotted line in the first direction is a first area, and the other side of the dotted line in the first direction is a second area, and the shape of the grain in the figure is merely schematic and is not an actual shape of the grain;
FIG. 10 is an axonometric view of an electrode assembly provided by some embodiments of the present application;
FIG. 11 is a schematic structural diagram showing an electrode assembly shown in FIG. 10;
FIG. 12 is another axonometric view of an electrode assembly provided by some other embodiments of the present application;
FIG. 13 is a schematic structural diagram showing an electrode assembly shown in FIG. 12;
FIG. 14 is a partial view of a first side wall part shown in FIG. 6, where the dotted line is a dividing line between a first area and a second area, a first sub-face spans across the first area and the second area, and the first outer surface spans across the first area and the second area;
FIG. 15 is an axonometric view of a housing provided by some embodiments of the present application;
FIG. 16 is a top view of a housing shown in FIG. 15;
FIG. 17 is an enlarged partial view at K in FIG. 15, showing a dotted line which is a dividing line dividing a first area and a second area, the first area and the second area being located on opposite sides of the dotted line in a first direction, respectively, and a first inner surface spanning across the first area and the second area;
FIG. 18 provides an axonometric view of a housing provided by some other embodiments of the present application;
FIG. 19 is a top view of a housing shown in FIG. 18;
FIG. 20 is an enlarged partial view at M in FIG. 18, showing a dotted line which is a dividing line dividing a first area and a second area, the first area and the second area being located on opposite sides of the dotted line in a first direction, a first connecting face spans across the first area and the second area, and a second connecting face spans across a cross the first area and the second area;
FIG. 21 is an enlarged partial view at N in FIG. 18, showing a dotted line which is a dividing line dividing a first area and a second area, the first area and the second area being located on opposite sides of the dotted line in a first direction, a first connecting face spans across the first area and the second area, and a third connecting face spans across the first area and the second area;
FIG. 22 is an axonometric view of a housing provided by still some other embodiments of the present application;
FIG. 23 is a top view of a housing shown in FIG. 17;
FIG. 24 is an enlarged partial view at P in FIG. 22, showing a dotted line which is a dividing line dividing a first area and a second area, the first area and the second area being located on opposite sides of the dotted line in a first direction, a first connecting face spans across the first area and the second area, a second connecting face spans across the first area and the second area, and a first transition face spans across the first area and the second area;
FIG. 25 is an enlarged partial view at Q in FIG. 22, showing a dotted line which is a dividing line dividing a first area and a second area, the first area and the second area being located on opposite sides of the dotted line in a first direction, a first connecting face spans across the first area and the second area, a third connecting face spans across the first area and the second area, and a second transition face spans across the first area and the second area;
FIG. 26 is a partial view of a battery cell (showing a positive pole piece, a negative pole piece, and a spacer of an electrode assembly) provided by some embodiments of the present application;
FIG. 27 is a view showing a locational relationship of a positive pole piece, a negative pole piece, and a spacer provided by some embodiments of the present application;
FIG. 28 is a view showing a locational relationship of a positive pole piece, a negative pole piece and a spacer provided by some other embodiments of the present application;
FIG. 29 is a partial view of a battery cell (showing a first side wall part) provided by some embodiments of the present application;
FIG. 30 is a partial view of a first side wall part shown in FIG. 29, where the dotted line is a dividing line between a first area and a second area, a first inner spans across the first area and the second area, and the first outer surface spans across the first area and the second area;
FIG. 31 is an axonometric view of a housing as shown in FIG. 29;
FIG. 32 is a partial view of a battery cell (showing a first side wall part) provided by some other embodiments of the present application;
FIG. 33 is a partially enlarged view of C in FIG. 32;
FIG. 34 is a partial view of a battery cell (showing a first side wall part) provided by still some other embodiments of the present application;
FIG. 35 is a partially enlarged view of D in FIG. 34;
FIG. 36 is a partial view of a battery cell (showing a first side wall part) provided by yet some other embodiments of the present application;
FIG. 37 is a partially enlarged view of E in FIG. 36;
FIG. 38 is an axonometric view of a housing provided by yet some other embodiments of the present application;
FIG. 39 is an enlarged partial view at F in FIG. 38, where the dotted line is a dividing line between the first area and the second area, and a dividing line between the third area and the fourth area, the first area and the second area are located on opposite sides of the dotted line in the first direction, the third area and the fourth area are located on opposite sides of the dotted line in the first direction, the first inner surface spans across the first area and the second area, and the third inner surface spans across the third area and the fourth area;
FIG. 40 is a partial view of a battery cell (showing a corner wall) provided by some embodiments of the present application;
FIG. 41 is a schematic structural diagram of a corner wall provided by some embodiments of the present application, where the dotted line is a dividing line between a third area and a fourth area, the third inner surface spans across the third area and the fourth area, and the third outer surface spans across the third area and the fourth area;
FIG. 42 is a schematic structural diagram showing of a corner wall provided by some other embodiments of the present application, where the dotted line is a dividing line between the third area and the fourth area, the third inner surface spans across the third area and the fourth area, and the third outer surface spans across the third area and the fourth area;
FIG. 43 is a partial view of a battery cell (showing a corner wall) provided by some other embodiments of the present application;
FIG. 44 is a partially enlarged view of G in FIG. 43;
FIG. 45 is a partial view of a battery cell (showing a corner wall) provided by still some other embodiments of the present application;
FIG. 46 is a partially enlarged view of H in FIG. 45.
FIG. 47 is a partial view of a battery cell (showing a corner wall) provided by yet some other embodiments of the present application;
FIG. 48 is a partially enlarged view of I in FIG. 47;
FIG. 49 is a view showing a locational relationship between an end cover and a side wall before welding in some embodiments of the present application; and
FIG. 50 provides a schematic diagram of connection of an end cover to an electrode terminal provided by some embodiments of the present application.

Reference numerals: 1. casing; 11. housing; 111. first side wall part; 1111. first area; 11111. first sub-face; 11112. second sub-face; 11113. first connecting face; 11113a. first end; 11113b. second end; 11114. second connecting face; 11115. third connecting face; 11116. first transition face; 11117. second transition face; 1112. second area; 1113. third end; 1114. fourth end; 1115. limiting face; 1116. limiting area; 1117. first transition area; 112. second side wall part; 113. corner wall; 1131. third area; 1132. fourth area; 1133. first connecting end; 1134. second connecting end; 1135. second transition area; 12. end cover; 121. outer surface of an end cover; 2. electrode assembly; 21. tab; 21a. positive pole tab; 21b. negative pole tab; 22. positive pole piece; 221. positive pole body area; 2211. fifth end; 222. positive current collector; 223. positive pole active material layer; 2231. positive pole body part; 2232. positive pole thinning part; 224. insulating layer; 23. negative pole piece; 231. negative pole body area; 2311. sixth end; 232. negative pole current collector; 233. negative pole active material layer; 2331. negative pole body part; 2332. negative pole thinning part; 24. spacer; 241. seventh end; 242. extension area; 25. flat area; 26. corner area; 27. fifth outer surface; 28. sixth outer face; 3. electrode terminal; 31. terminal body; 32. first limiting part; 33. second limiting part; 4. pressure relief mechanism; 5. connecting part; 51. first connecting part; 511. first connecting interface; 5111. first location; 5112. first interface; 5113. second interface; 5114. third location; 5115. fourth location; 52. second connecting part; 521. second connecting interface; 5211. second location; 5212. third interface; 5213. fourth interface; 5214. fifth location; 5215. sixth location; 6. first insulating member; 7. second insulating member; 10. battery cell; 20. box body; 201. first box body; 202. second box body; 100. battery apparatus; 200. controller; 300. motor; 1000. vehicle; Z. first direction; Y. second direction; X. third direction; U. the first interface; V. second interface; 800. first grain; 802. second grain; 804. first inner surface; 805. second inner surface; 806. first outer surface; 807. second outer surface; 810. third inner surface; 811. fourth inner surface; 812. third outer surface; 813. fourth outer surface.

### DESCRIPTION OF EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by a person skilled in the art based on the embodiments of the present application without making creative efforts shall fall within the protection scope of the present application.

Unless otherwise defined, all technical and scientific terms used in the present application have the same meaning as commonly understood by a person skilled in the art of the present application. In the present application, the terms used in the description of the present application are only used for describing specific embodiments and are not intended to limit the present application, and the terms "comprise", "have", and any variations thereof in the description and claims of the present application and the above description of the drawings are intended to cover a non-exclusive inclusion. The terms "first," "second," and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

The term "and/or" in the present application is only an associative relationship for describing associated objects, indicating that three relationships may be present. For example, A and/or B may indicate three cases: presence of only A; presence of both A and B; and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

In the embodiments of the present application, the battery cell may be a secondary battery, and the secondary battery refers to a battery cell that may be continuously used by activating an active material by charging the battery cell after discharging thereof.

The battery cell includes, but is not limited to, a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like.

It should be noted that the battery cell in the embodiments of the present application is a battery in the earlier application document of priority.

The battery cell 10 generally includes an electrode assembly 2. The electrode assembly 2 includes a positive pole, a negative pole, and a spacer 24. During charge and discharge of the battery cell 10, intercalation/de-intercalation of active ions (e.g., lithium ions) are enabled at the positive pole and negative pole by moving the active ions between the positive pole and negative pole. The spacer 24 is disposed between the positive pole and the negative pole, which can reduce the possibility of a short circuit between the positive and negative poles, and at the same time, can allow active ions to pass through.

In some embodiments, the positive pole may be a positive pole piece 22 which may include a positive current collector 222 and a positive active material provided on at least one surface of the positive current collector 222.

As an example, the positive current collector 222 has two surfaces opposite in its own thickness direction, and the positive active material is provided on either one or both of the two opposite surfaces of the positive current collector 222.

As an example, for the positive current collector 222, a metal foil or a composite current collector may be employed. For example, as the metal foil, aluminum or stainless steel which is subjected to surface treatment by silver, stainless steel, copper, aluminum, nickel, a carbon electrode, carbon, nickel, titanium, or the like can be used. The composite current collector may include a high-molecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the positive active material may include at least one of a lithium-containing phosphate, a lithium-transition metal oxide, and respective modified compounds thereof. However, the present application is not limited to these materials, and other conventional materials that can be used as a positive pole active material of a battery may also be used. These positive pole active materials may be used alone or in combination of two or more thereof. Here, examples of the lithium-containing phosphate may include, but are not limited to, at least one of lithium iron phosphate (e.g., LiFePO4, also referred to as LFP), a composite material of lithium iron phosphate and carbon, lithium manganese phosphate (e.g., LiMnPO4), a composite material of lithium manganese phosphate and carbon, lithium ferro-manganese phosphate, and a composite material of lithium ferro-manganese phosphate and carbon. Examples of the lithium transition metal oxide may include but are not limited to at least one of lithium cobalt oxide (e.g., LiCoO2), lithium nickel oxide (for example, LiNiO2), lithium manganese oxide (e.g., LiMnO2 or LiMn2O4), lithium nickel cobalt oxide, lithium manganese cobalt oxide, lithium nickel manganese oxide, lithium nickel cobalt manganese oxide (e.g., LiNi1/3Co1/3Mn1/3O2 (also simply referred to as NCM333), LiNi0.5Co0.2Mn0.3O2 (also simply referred to as NCM523), LiNi0.5Co0.25Mn0.25O2 (also simply referred to as NCM211), LiNi0.6Co0.2Mn0.2O2 (also simply referred to as NCM622), LiNi0.8Co0.1Mn0.1O2 (also simply referred to as NCM811)), lithium nickel cobalt aluminum oxide (e.g., LiNi0.85Co0.15Al0.05O2), modified compounds thereof,, and the like.

In some embodiments, a foamed metal may be used for the positive electrode. The foamed metal may be foamed nickel, foamed copper, foamed aluminum, foamed alloy, or the like. When the foamed metal is used as the positive electrode, its surface the foamed metal may not be provided with the positive active material, and of course, the positive active material may be provided. As an example, within the foamed metal, a lithium source material, which is a lithium metal and/or a lithium-rich material, a potassium metal or a sodium metal may also be filled or/and deposited.

In some embodiments, the negative pole may be a negative pole piece 23 that may include a negative pole current collector 232.

As an example, for the negative pole current collector 232, a metal foil, a foamed metal, or a composite current collector may be employed. For example, as the metal foil, aluminum or stainless steel which is subjected to surface treatment by silver, stainless steel, copper, aluminum, nickel, a carbon electrode, carbon, nickel, titanium, or the like can be used. The foamed metal may be foamed nickel, foamed copper, foamed aluminum, foamed alloy, or the like. The composite current collector may include a high-molecular material base layer and a metal layer. The composite current collector may be formed by forming a metal material (copper, a copper alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the negative pole piece 23 may include a negative pole current collector 232 and a negative active material provided on at least one surface of the negative pole current collector 232.

As an example, the negative pole current collector 232 has two surfaces opposite in its own thickness direction, and the negative active material is provided on either one or both of the two opposite surfaces of the negative pole current collector 232.

As an example, the negative active material may be a negative active material which is known in the art for a battery cell 10. As an example, the negative pole active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and another conventional material that can be used as a negative pole active material of a battery may also be used. These negative pole active materials may be used alone or in combination of two or more thereof.

In some embodiments, the positive current collector 222 may be made of aluminum and the negative pole current collector 232 may be made of copper.

In some implementations, the spacer 24 is a separator. Any known porous structure separator with good chemical stability and mechanical stability may be used for the separator.

As an example, a material of the separator may be selected from at least one of a glass fiber, a non-woven fabric, polyethylene, polypropylene, and polyvinylidene fluoride. The separator may be a single-layer film or a multilayer composite film. When the separator is a multilayer composite film, the materials of respective layers may be the same or different. The spacer 24 may be a single component located between the positive pole and negative pole, or may be attached to the surfaces of the positive pole and negative pole.

In some implementations, the spacer 24 is a solid electrolyte. The solid electrolyte is disposed between the positive electrode and the negative electrode, and serves to transfer ions and separate the positive electrode and negative electrode.

In some implementations, the battery cell 10 further includes an electrolyte that functions to conduct ions between the positive pole and negative pole. The electrolyte may be liquid, gel, or solid. Here, a liquid electrolyte comprises an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from ether solvents. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1, 3-dioxolane, tetrahydrofuran, methyltetrahydrofuran, diphenyl ether, and a crown ether.

Here, a gel electrolyte comprises a backbone network using a polymer as an electrolyte, in combination with an ionic liquid - lithium salt.

Here, a solid electrolyte includes a polymer solid electrolyte, an inorganic solid electrolyte, and a composite solid electrolyte.

As an example, the polymer solid electrolyte may be polyether (polyethylene oxide), polysiloxane, polycarbonate, polyacrylonitrile, polyvinylidene fluoride, polymethyl methacrylate, a single-ion polymer, a poly-ionic liquid-lithium salt, cellulose, or the like.

As an example, the inorganic solid electrolyte may be one or more of an oxide solid electrolyte (crystalline perovskites, sodium superconducting ion conductors, and garnets, amorphous LiPON thin films), a sulfide solid electrolyte (crystalline lithium-superion conductors (lithium germanium phosphorus sulfide, and argyrodite), and amorphous sulfides), and a halide solid electrolyte, a nitride solid electrolyte, and a hydride solid electrolyte.

As an example, the composite solid electrolyte is formed by adding an inorganic solid electrolyte filler in a polymer solid electrolyte.

In some implementations, the electrode assembly 2 is of a winding structure. The positive pole piece 22 and the negative pole piece 23 are wound in a winding structure.

In some other implementations, the electrode assembly 2 is of a laminated structure.

As an example, a plurality of positive pole pieces 22 and a plurality of negative pole pieces 23 may be provided, and are alternately laminated.

As an example, a plurality of positive pole pieces 22 may be provided, the negative pole piece 23 may be folded to form a plurality of laminated folding sections, and one positive pole piece 22 is sandwiched between adjacent folding sections.

As an example, the positive pole piece 22 and negative pole piece 23 are both folded to form a plurality of laminated folding sections.

As an example, a plurality of spacers 24 may be provided, between any adjacent positive pole pieces 22 or negative pole pieces 23, respectively.

As an example, the spacer 24 may be continuously provided between any adjacent positive pole pieces 22 or negative pole pieces 23 by folding or winding.

In some implementations, the electrode assembly 2 may have a cylindrical shape, a flat shape, a polygonal column shape, or the like.

In some implementations, the electrode assembly 2 is provided with a tab 21 that may conduct current from the electrode assembly 2. The tabs 21 include a positive pole tab 21a and a negative pole tab 21b.

In some implementations, the battery cell 10 may include a casing 1. The casing 1 is used to enclose components such as the electrode assembly 2 and the electrolyte. The casing 1 may be a steel casing, an aluminum casing, a plastic casing (e.g., polypropylene), a composite metal casing (e.g., a copper-aluminum composite casing 1), an aluminum plastic film, or the like.

As an example, the battery cell 10 can be a cylindrical battery cell 10, a prismatic battery cell 10, a pouch battery cell 10, or a battery cell 10 of other shapes. The prismatic battery cell 10 includes a square-casing battery cell 10, a blade-shaped battery cell 10, and a polygon prism battery cell 10, for example, a hexagonal prism battery cell 10, and the like.

The battery apparatus 100 mentioned in the embodiments of the present application refers to a single physical module including one or a plurality of battery cells 10 to provide a higher voltage and capacity.

In some embodiments, the battery apparatus 100 may be a battery module; and when there are a plurality of battery cells 10, the plurality of battery cells 10 are arranged and fixed to form a battery module.

In some embodiments, the battery apparatus 100 may be a battery pack including a box 20 and battery cells 10, and the battery cell 10 or the battery module is accommodated in the box 20.

In some embodiments, the box 20 may be a part of a chassis structure of a vehicle 1000. For example, a part of the box 20 may be at least a part of a floor of a vehicle 1000, or a part of the box 20 may be at least a part of a cross beam and a side beam of the vehicle 1000.

In some embodiments, the battery apparatus 100 may be an energy storage device. The energy storage device includes an energy storage container, an energy storage cabinet, and the like.

In the related art, the battery cell 10 generally includes a casing 1 and an electrode assembly 2, where the casing 1 may include a housing 11 having an opening, and an end cover 12, the opening of the housing 11 may be closed by means of the end cover 12 after the electrode assembly 2 is mounted in the housing 11 to form a closed space, which is accommodated in the electrode assembly 2, inside the casing 1.

To achieve a stable connection of the end cover 12 to the housing 11, the end cover 12 may be welded to the housing 11. After the end cover 12 is welded to the housing 11, a connecting part 5 is formed at the location where the end cover 12 is welded to the housing 11, and the hardness of the connecting part 5 is relatively large. During the charging and discharging process of the battery cell 10, the electrode assembly 2 will expand and contract cyclically due to the intercalation and de-intercalation of ions, and the wall of the housing 11 will deform after being subjected to the expansion force of the electrode assembly 2, and the acting force of the expansion and contraction of the electrode assembly 2 will be transmitted to the connecting part 5 at the opening of the housing 11 through the deformation of this part of the housing 11. Since the connecting part 5 has a relatively high hardness and a relatively low toughness, it is difficult to bear the acting force of the expansion and contraction of the electrode assembly 2, which may cause the housing 11 to crack at the connecting part 5 adjacent to the opening, thus affecting the service life of the battery cell 10.

In view of the above considerations, in the embodiments of the present application, a first area 1111 having a lower hardness is provided, and the expansion force of the electrode assembly 2 acting on the connecting part 5 is released by a deformed part of the first area 1111 having a lower hard bottom, thereby reducing the possibility of cracking of the connecting part 5 at the opening of the housing 11, and improving the service life of the battery cell 10.

The battery cell 10 described in the embodiments of the present application is applicable to the battery apparatus 100, and an electrical apparatus using the battery cell 10.

The electrical apparatus may be a vehicle 1000, a mobile phone, a portable device, a notebook computer, a ship, a spacecraft, an electric toy, an electric tool, and the like. The vehicle 1000 may be a fuel vehicle, a gas vehicle, or a new energy vehicle which may be a pure electric vehicle, a hybrid vehicle, a range-extended electric vehicle, or the like; the spacecraft includes an airplane, a rocket, a space plane, a spaceship, or the like; the electric toy includes a stationary or mobile electric toy, such as a game machine, an electric car toy, an electric ship toy, an electric airplane toy, or the like; and the electric tool includes a metal cutting electric tool, a grinding electric tool, an assembly electric tool, and an electric tool for railways, such as, an electric drill, an electric sander, an electric wrench, an electric screwdriver, an electric hammer, an impact drill, a concrete vibrator, an electric planer, or the like. In the embodiments of the present application, the above described electrical apparatus is not particularly limited.

To facilitate description, in the following embodiments, as an example for description, an electrical apparatus is a vehicle 1000.

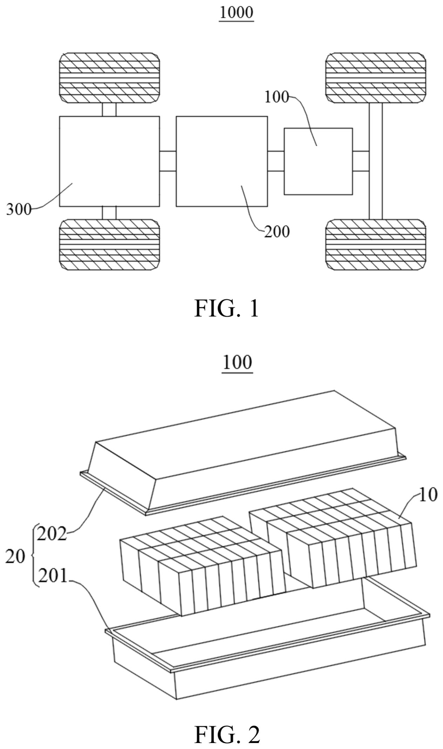

With reference to FIG. 1, FIG. 1 is a schematic structural diagram showing a vehicle 1000 according to some embodiments of the present application. Inside the vehicle 1000, a battery apparatus 100 is provided, which may be provided at the bottom, head, or tail of the vehicle 1000. The battery apparatus 100 may be used to power the vehicle 1000, for example, the battery apparatus 100 may be used as an operating power source of the vehicle 1000.

The vehicle 1000 may further include a controller 200 and a motor 300, where the controller 200 is used to control the battery apparatus 100 to power the motor 300, for example, for a working power requirement of the vehicle 1000 during starting, navigating, and driving.

In some embodiments of the present application, the battery apparatus 100 may be used not only as an operating power source for the vehicle 1000, but also as a driving power source for the vehicle 1000, instead of or partially instead of fuel or natural gas to provide driving power for the vehicle 1000.

With reference to FIG. 2, FIG.2 is an exploded view of a battery apparatus 100 provided by some embodiments of the present application. The battery apparatus 100 may include a battery cell 10 and a box body 20, and the battery cell 10 is accommodated within the box body 20.

Here, the box 20, as a component that accommodates the battery cell 10, provides a receiving space for the battery cell 10, and the box 20 may have various structures. In some embodiments, the box 20 may include a first box 201 and a second box 202, which fit to each other to define a receiving space for accommodating the battery cells 10. The first box 201 and the second box 202 may have various shapes, for example, a rectangular parallelepiped shape, a cylindrical shape, or the like. The first box 201 may be of a hollow structure with one side open, the second box 202 may also have a hollow structure with one side open, and the open side of the second box 202 fits to the open side of the first box 201 to form the box 20 having a receiving space. Also, the first box 201 may be of a hollow structure with one side open, the second box 202 may have a plate-like structure, and when the second box 202 fits to the open side of the first box 201 to form the box 20 having a receiving space. The first box 201 and the second box 202 may be sealed by a sealing member, and the sealing member may be a sealing ring, a sealant, or the like.

In the battery apparatus 100, one or more battery cells 10 may be provided. If a plurality of battery cells 10 are provided, the plurality of battery cells 10 may be subjected to series connection, parallel connection, or series-parallel connection, and the series-parallel connection means that the plurality of battery cells 10 are subjected to both series connection, and parallel connection. The plurality of battery cells 10 are subjected to series connection, or parallel connection, or series-parallel connection to form a battery module, and a plurality of battery modules are integrated by series connection, parallel connection, or series-parallel connection, and accommodated in the box 20. Also, all of the battery cells 10 are integrated by series connection, parallel connection, or series-parallel connection, and then all of the battery cells 10 are accommodated in the box 20.

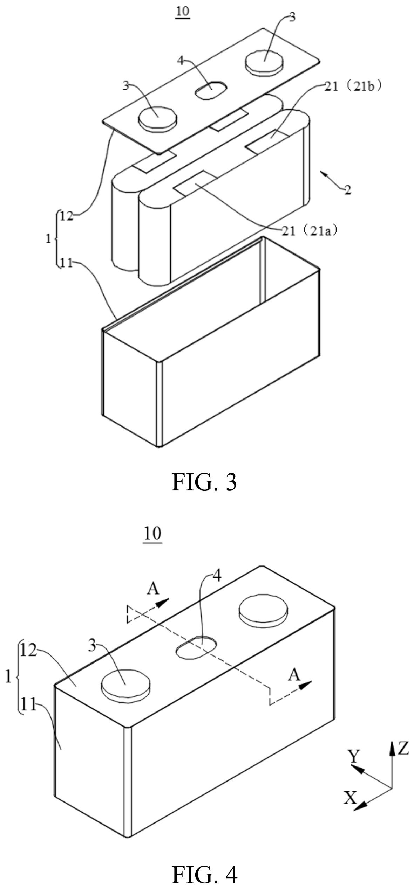

With reference to FIGS. 3, 4, and 5, the battery cell 10 may include a casing 1 and an electrode assembly 2, and the electrode assembly 2 is received in the casing 1.

In some embodiments, the casing 1 may include a housing 11 having an opening at least one end in the first direction Z, and an end cover 12 closing the opening of the housing 11.

The housing 11 is a member for accommodating the electrode assembly 2, and the housing 11 may be of a hollow structure in which an opening is formed at one end in the first direction Z, and the housing 11 may be of a hollow structure in which an opening is formed at opposite ends in the first direction Z. The housing 11 may have various shapes such as a cylinder, a rectangular parallelepiped shape, or the like. The casing 11 may be made of various materials, for example, copper, iron, aluminum, steel, an aluminum alloy, etc. The electrode assembly 2 may be located partially within the housing 11, or may be located entirely within the housing 11.

The end cover 12 is a component that closes the opening of the casing 11 to insulate the internal environment of the battery cell 10 from the external environment. The end cover 12 and the casing 11 define a receiving space for accommodating the electrode assembly 2, electrolytic solution, and other components. The end cover 12 may be connected to the casing 11 by welding or rounded seam to close the opening of the casing 11. The end cover 12 may have a shape adapted to the shape of the housing 11. For example, the end cover 12 is of a rectangular plate-like structure adapted to the housing 11 when the housing 11 is of a rectangular parallelepiped structure, and for another example, the end cover 12 is of a circular plate-like structure adapted to the housing 11 when the housing 11 is of a cylinder structure. The materials for the end cover 12 may also be various, such as, copper, iron, aluminum, steel, an aluminum alloy, or the like, and the materials for the end cover 12 may be the same as or different from that for the housing 11.

In an embodiment where the casing 11 is open at one end, one end cover 12 may be provided correspondingly. In an embodiment where the casing 11 is opened at both opposite ends, two end covers 12 may be provided correspondingly, the two end covers 12 close two openings of the casing 11, and the two end covers 12 and the casing 11 define a receiving space.

In some embodiments, the battery cell 10 may further include an electrode terminal 3. The electrode terminal 3 is disposed on the casing 1 and is configured for electrically connecting with the tab 21 of the electrode assembly 2 to input or output the electrical energy of the battery cell 10. The electrode terminal 3 may be disposed on the housing 11 of the casing 1 or may be disposed on the end cover 12 of the casing 1. The electrode terminal 3 and the tab 21 may be directly connected. For example, the electrode terminal 3 and the tab 21 are welded. The electrode terminal 3 and the tab 21 may also be indirectly connected. For example, the electrode terminal 3 and the tab 21 are indirectly connected through a current collecting member. The current collecting member may be a metal conductor, such as copper, iron, aluminum, steel, an aluminum alloy, or the like.

In some embodiments, the battery cell 10 may also include a pressure relief mechanism 4, which may be provided at the end cover 12, or the housing 11. The pressure relief mechanism 4 may be a pressure relief member, such as a rupture disc, a safety valve, or the like, mounted to the housing 11 or the end cover 12. The pressure relief mechanism 4 may also be integrally formed with the end cover 12 or the housing 11. The pressure relief mechanism 4 may be provided with a pressure relief groove so as to crack along the pressure relief groove when the battery cell 10 is released. The pressure relief groove can be a groove that extends along a closed track, and the closed track can be a circular track, a rectangular track, and the like; the pressure relief groove may also be a groove that extends along a non-closed trajectory, which may be an H-shaped trajectory, a Y-shaped trajectory, a V-shaped trajectory, a U-shaped trajectory, or the like.

As an example, as shown in FIGS. 3, 4, and 5, an opening is formed at an end of the housing 11, one end cover 12 is provided in the casing 1, and the one end cover 12 closes the opening of the housing 11. The end cover 12 is provided with a pressure relief mechanism 4, the end cover 12 is provided with two electrode terminals 3, the two electrode terminals 3 are respectively a positive pole terminal 3 and a negative pole terminal 3, a positive pole tab 21a and a negative pole tab 21b are formed at one end of the electrode assembly 2 facing the end cover 12, the positive pole terminal 3 is electrically connected to the positive pole tab 21a, and the negative pole terminal 3 is electrically connected to the negative pole tab 21b.

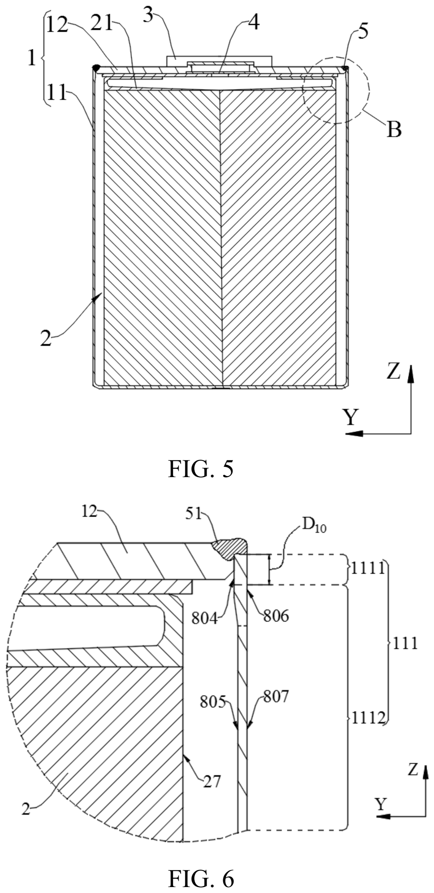

With reference to FIGS. 6 to 9, the battery cell 10 according to the embodiments of the present application includes a housing 11, an electrode assembly 2 and an end cover 12. The housing 11 has an opening in at least one end thereof in a first direction Z and includes a first side wall part 111. The electrode assembly 2 is at least partially accommodated in the housing 11. The electrode assembly 2 includes a positive pole piece 22 and a negative pole piece 23. At least part of the positive pole piece 22 and at least part of the negative pole piece 23 are stacked in a second direction Y. The second direction Y is parallel to a thickness direction of the first side wall part 111. The first direction Z intersects with the second direction Y. The end cover 12 is used for sealing the opening, and the first side wall part 111 and the end cover 12 are welded to form a first connecting part 51. The first side wall part 111 includes, arranged in a first direction, a first area 1111 and a second area 1112. The first area 1111 is located between the first connecting part 51 and the second area 1112. The hardness of the first area 1111 is less than the hardness of the second area 1112.

Only one end of the housing 11 may be open in the first direction Z, and one end cover 12 is correspondingly provided.

Both opposite ends of the housing 11 in the first direction Z may be open, and two end covers 12 may be correspondingly provided.

The housing 11 may have various shapes such as cylindrical, prismatic, and the like. The prism may be a triangular prism, a quadrangular prism, a pentagonal prism, a hexagonal prism, and the like. The quadrangular prism may include a rectangular prism, a square, or the like.

The first direction Z is parallel to the orientation of the opening of the housing 11. In the embodiment in which the housing 11 has a cylindrical shape, the first direction Z may be parallel to the axial direction of the housing 11; in the embodiment in which the housing 11 has a prismatic shape, the first direction Z may be parallel to the extension direction of a side edge of the housing 11.

The second direction Y is parallel to a thickness direction of the first side wall part 111. In the embodiment in which the housing 11 has a cylindrical shape, the first side wall part 111 has a cylindrical shape, the radial direction of the housing 11 is the thickness direction of the first side wall part 111, and the second direction Y is parallel to the radial direction of the housing 11. In the embodiment in which the housing 11 has a prismatic shape, the first side wall part 111 may be of a rectangular plate-like structure. The first direction Z and the second direction Y may be arranged at an acute angle, at a right angle or at an obtuse angle.

The end cover 12 may be welded to the housing 11, and the end cover 12 may be welded to the housing 11 to form a connecting part 5, which may extend in the circumferential direction of the opening of the housing 11. The end cover 12 and the housing 11 are connected and fixed via the connecting part 5, so as to seal the end cover 12 and the housing 11. The connecting part 5 is a part formed with a weld mark from welding the end cover 12 and the housing 11, and may be a connecting part 5 formed from welding to fuse the end cover 12 and the housing 11.

The first side wall part 111 may be one or more in the first housing 11. The first connecting part 51 may correspond to the first side wall part 111 on a one-to-one basis, and the first connecting part 51 is a part formed with a weld mark from welding the end cover 12 and the first side wall part 111, and may be a first connecting part 51 formed from welding to fuse the end cover 12 and the first side wall part 111. A part of the first connecting part 51 is formed on the end cover 12, and another part of the first connecting part 51 is formed on the first side wall part 111. The first side wall part 111 and the end cover 12 may form the first connecting part 51 by stitch welding, or may form the first connecting part 51 by penetration welding. The first connecting part 51 may be a part of the connecting part 5 or may be all of the connecting part 5. In the embodiment in which the housing 11 has a cylindrical shape, there is only one first side wall part 111 in the housing 11, the first side wall part 111 has a cylindrical shape, and the first connecting part 51 is the connecting part 5; in an embodiment in which the housing 11 has a prismatic shape, the housing 11 may include a plurality of side walls arranged along the opening of the housing 11, at least one of the two side walls oppositely provided in the second direction Y may be a first side wall part 111, and the first connecting part 51 is part of the connecting part 5.

The first side wall part 111 may be a wall having the largest outer surface area of the housing 11, or the first side wall part 111 may not be a wall having the largest outer surface area of the housing 11. Taking the housing 11 as a rectangular parallelepiped shape as an example, the housing 11 may include two first side wall parts 111 and two second side wall parts 112, the two first side wall parts 111 are oppositely provided in a second direction Y, the two second side wall parts 112 are oppositely provided in a third direction X, the first direction Z, the second direction Y and the third direction X are perpendicular to each other in pairs, and the first side wall part 111 may be a wall with the largest outer surface area in the housing 11, so that the outer surface area of the first side wall part 111 is greater than the outer surface area of the second side wall part 112; the second side wall part 112 may be the wall having the largest outer surface area of the housing 11, so that the outer surface area of the second side wall part 112 is greater than the outer surface area of the first side wall part 111.

The first area 1111 may be an area having a lower hardness of the first side wall part 111, the first area 1111 having a lower hardness than the second area 1112, and the second area 1112 may be a part of the first side wall part 111 located on a side of the first area 1111 facing away from the first connecting part 51 in the first direction Z. The first area 1111 can be directly connected to the first connecting part 51; the first area 1111 and the second area 1112 may be directly connected or indirectly connected. The maximum hardness of the first area 1111 may be less than the minimum hardness of the second area 1112, such that the hardness of the first area 1111 is less than the hardness of the second area 1112.

The electrode assembly 2 is located within a housing 11 and an end cover 12, which together define a receiving space. The electrode assembly 2 may be of a laminated structure or a winding structure. The electrode assembly 2 may be one or more in the housing 11. If there are a plurality of electrode assemblies 2, the plurality of electrode assemblies 2 may be stacked, for example, the plurality of electrode assemblies 2 may be stacked in the second direction Y.

As an example, the hardness of the first area 1111 and the hardness of the second area 1112 may be measured by a known durometer.

As an example, the first area 1111 extends in the third direction X to opposite ends of the first side wall part 111.

The first area 1111 having a smaller hardness is formed in an unlimited manner. As an example, the housing 11 may be heat softened by a laser to obtain a first area 1111 having a lower hardness. As an example, a partial area of the housing 11 may be annealed to obtain a first area 1111 having a lower hardness.

As an example, the welding power applied to the housing 11 and the end cover 12 may be controlled such that the hardness of the area on one side of the weld mark in the first direction is reduced, i.e., the hardness of the area on one side of the connecting part 5 in the first direction is decreased, thereby forming the first area 1111 having a lower hardness. It should be understood that, in the housing where the welding power of the housing 11 and the end cover 12 is not greater than the maximum allowable power, by appropriately increasing the welding power, the dimension of the first area 1111 having a lower hardness in the first direction can be made larger, which is advantageous for reducing the cracking of the first connecting part 51.

In the embodiments of the present application, at least part of the positive pole piece 22 and at least part of the negative pole piece 23 are stacked in a second direction Y; the electrode assembly 2 expands in the second direction Y during a cycle; the first side wall part 111 is subjected to an expansion force of the electrode assembly 2; since the first area 1111 has a lower hardness than the second area 1112, the first area 1111 has a higher toughness with respect to the second area 1112; and by arranging the first area 1111 having a lower hardness in the first side wall part 111, the toughness of the first area 1111 is higher, so that the expansion force of a part of the electrode assembly 2 is released, the influence of the expansion force of the electrode assembly 2 on the first connecting part 51 is reduced, the possibility of cracking of the first connecting part 51 at the opening of the housing 11 is reduced, and the service life of the battery cell 10 is improved.

In some embodiments, with reference to FIGS. 6 to 9, a ratio of the hardness of the first area 1111 to the hardness of the second area 1112 is between 0.3 and 0.8.

It is to be explained that the type of hardness of the first area 1111 is the same as the type of hardness of the second area 1112.

As an example, the hardness of the first area 1111 and the hardness of the second area 1112 may both be Vickers hardness.

As an example, the hardness of the first area 1111 and the hardness of the second area 1112 may both be Brinell hardness.

The type of hardness of the first area 1111 and the type of hardness of the second area 1112 may also be other known types of hardness as long as the type of hardness of the first area 1111 and the type of hardness of the second area 1112 are the same.

As an example, the ratio of the hardness of the first area 1111 to the hardness of the second area 1112 may be any discrete value of or any range value between two of 0.3, 0.35, 0.4, 0.45, 0.5, 0.6, 0.7, 0.8, and the like.

In the embodiments of the present application, a ratio of the hardness of the first area 1111 to the hardness of the second area 1112 ranges from 0.3 to 0.8, so that the ratio of the hardness of the first area 1111 to the hardness of the second area 1112 is in a suitable range, so thin the first area 1111 having a lower hardness can reduce the possibility of cracking of the first connecting part 51, and also can inhibit the first area 1111 from cracking under a large expansion force of the electrode assembly 2 to a certain extent.

It should be understood that the ratio of the hardness of the first area 1111 to the hardness of the second area 1112 is not limited as long as the first area 1111 has a lower hardness than the second area 1112. As an example, the ratio of the hardness of the first area 1111 to the hardness of the second area 1112 may optionally be less than 0.3, or the ratio of the hardness of the first area 1111 to the hardness of the second area 1112 may optionally be greater than 0.8 and less than 1.

In some embodiments, with reference to FIGS. 6 to 9, a ratio of the hardness of the first area 1111 to the hardness of the second area 1112 is between 0.5 and 0.8.

As an example, the ratio of the hardness of the first area 1111 to the hardness of the second area 1112 may be any discrete value of or any range value between two of 0.5, 0.55, 0.6, 0.65, 0.7, 0.75, 0.8, and the like.

In the embodiments of the present application, a ratio of the hardness of the first area 1111 to the hardness of the second area 1112 ranges from 0.3 to 0.8, so that the ratio of the hardness of the first area 1111 to the hardness of the second area 1112 is in a suitable range, so thin the first area 1111 having a lower hardness can reduce the possibility of cracking of the first connecting part 51, and also can inhibit the first area 1111 from cracking under a large expansion force of the electrode assembly 2 to a certain extent.

It should be understood that the ratio of the hardness of the first area 1111 to the hardness of the second area 1112 is not limited as long as the first area 1111 has a lower hardness than the second area 1112. As an example, the ratio of the hardness of the first area 1111 to the hardness of the second area 1112 may optionally be less than 0.5.

In some embodiments, with reference to FIGS. 6 to 9, the hardness of the second area 1112 ranges from 40 HV to 100 HV, and the hardness of the first area 1111 ranges from 20 HV to 55 HV.

It should be noted that "HV" is the unit of Vickers hardness.

As an example, the hardness of the second area 1112 may range from any discrete value of or any range value between two of 40 HV, 45 HV, 50 HV, 60 HV, 70 HV, 80 HV, 90 HV, 100 HV, and the like.

As an example, the hardness of the first area 1111 may range from any discrete value of or any range value between two of 20 HV, 25 HV, 30 HV, 35 HV, 40 HV, 45 HV, 50 HV, 55 HV, and the like.

In the embodiments of the present application, the range of the hardness of the second area 1112 is relatively suitable, which is advantageous for protecting the electrode assembly 2 in the housing 11, reduce the impact of the external environment on the electrode assembly 2 in the housing 11, and achieve the basic protection of the electrode assembly 2 by the housing 11; the range of the hardness of the first area 1111 is relatively suitable, and the lower hardness of the first area 1111 enables the first area 1111 to both reduce the possibility of cracking of the first connecting part 51, and also can inhibit the first area 1111 from cracking under a large expansion force of the electrode assembly 2 to a certain extent.

It should be understood that the range of the hardness of the first area 1111 and the range of the hardness of the second area 1112 are not limited as long as the first area 1111 has a lower hardness than the second area 1112. As an example, the hardness of the second area 1112 may range from less than 40 HV or greater than 100 HV, and the hardness of the first area 1111 may range from less than 20 HV or greater than 55 HV.

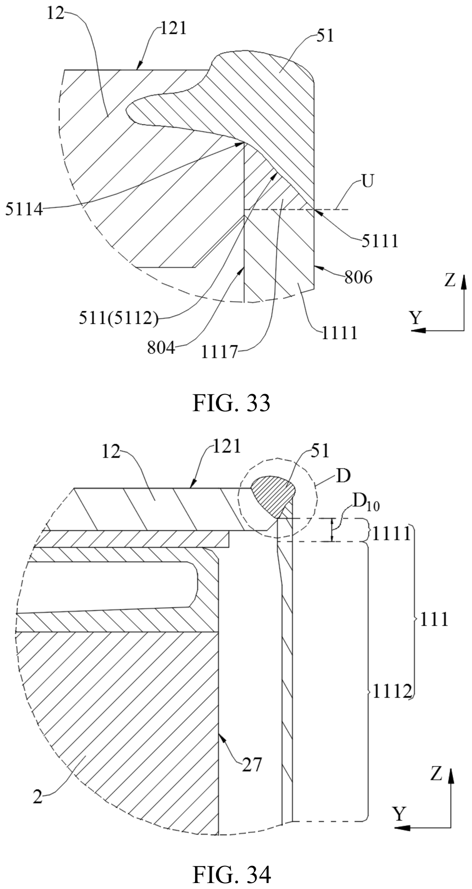

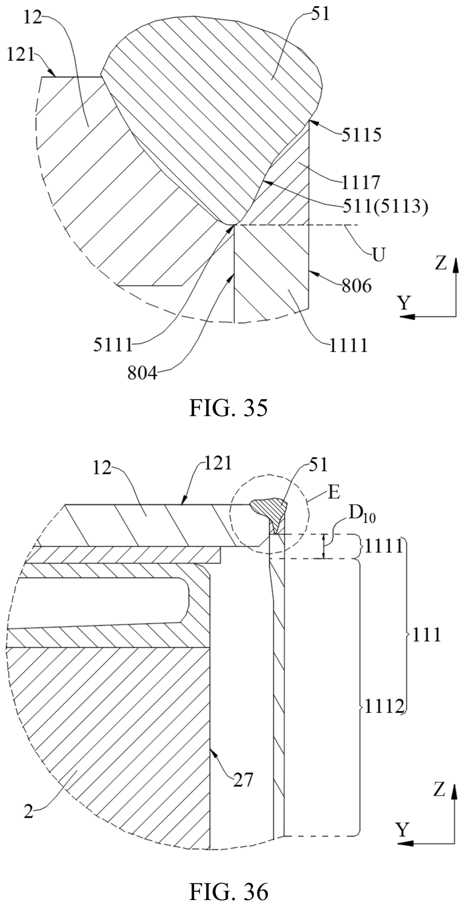

In some embodiments, with reference to FIGS. 6, 26, 29, 32, 34, and 36, the dimension of the first area 1111 in the first direction Z may range from 0.05 mm to 0.75 mm.

As an example, the dimension of the first area 1111 in the first direction Z is D10, and 0.05 mm≤D₁₀≤0.75 mm.

As an example, the dimension of the first area 1111 in the first direction Z may be any discrete value of or any range value between two of 0.05 mm, 0.1 mm, 0.15 mm, 0.2 mm, 0.25 mm, 0.3 mm, 0.4 mm, 0.5 mm, 0.6 mm, 0.7 mm, 0.75 mm, and the like.

As an example, the dimension of the first area 1111 in the first direction Z may be measured by a vernier caliper, a micrometer, or the like.

In the embodiments of the present application, the range of the dimension of the first area 1111 in the first direction Z is appropriate, and forming the first area 1111 having a lower hardness in the appropriate range of the dimension reduces the possibility of cracking of the first connecting part 51 on one hand, and advantageously inhibits the first area 1111 having a lower hardness from cracking under the influence of the expansion force of the electrode assembly 2 due to excessive length on the other hand.

It should be understood that the range of the dimension of the first area 1111 in the first direction Z is not limited. As an example, the dimension of the first area 1111 in the first direction Z may range from less than 0.05 mm or greater than 0.75 mm.

In some embodiments, with reference to FIGS. 6, 26, 29, 32, 34, and 36, the dimension of the first area 1111 in the first direction Z may range from 0.1mm to 0.6mm.

As an example, the dimension of the first area 1111 in the first direction Z may be any discrete value of or any range value between two of 0.1mm, 0.15mm, 0.2mm, 0.25mm, 0.3mm, 0.35mm, 0.4 mm, 0.45mm, 0.5mm, 0.55mm, 0.6mm, and the like.

In the embodiments of the present application, the range of the dimension of the first area 1111 in the first direction Z is appropriate, and the first area 1111 having a lower hardness is formed in an appropriate range of the dimension, the expansion force of the electrode assembly 2 is released through the first area 1111 by deformation of the first area 1111 having a lower hardness on one hand to reduce the possibility of cracking of the first connecting part 51 on one hand, and advantageously inhibits the first area 1111 having a lower hardness from cracking under the influence of the expansion force of the electrode assembly 2 due to excessive length on the other hand.

It should be understood that the range of the dimension of the first area 1111 in the first direction Z is not limited. As an example, the dimension of the first area 1111 in the first direction Z may range from less than 0.1mm or greater than 0.6mm.

In some embodiments, with reference to FIG. 9, at least some of the grains in the first area 1111 are first grains 800, a ratio of a number of the first grains 800 in the first area 1111 to a number of all the grains in the first area 1111 is greater than 50%, and a dimension of the first grains 800 that extends in the first direction Z is a first dimension, a maximum dimension of the first grains 800 in the second direction Y is a second dimension, and a ratio of the first dimension to the second dimension ranges from 0.2 to 5.

As an example, with reference to FIGS. 4 to 6, and FIGS. 9 and 14, the cross-section of the first side wall part 111 is shown as a preset cross-section that is substantially parallel to the first direction Z and the second direction Y, respectively. The preset cross-section intersects with the first area 1111 to form a first cross-section.

As an example, the first grains 800 are equiaxed crystals.

The step of measuring the grains of the first area includes sample cutting, sample machining, and grain measurement.

The sample cutting step specifically includes:
an end cover 12 is connected to a first end of the housing 11 in a first direction Z, a second end of the housing 11 in the first direction Z is oppositely provided to the first end of the housing 11, the housing 11 is cut in the circumferential direction of the housing 11 at a distance of 30 mm from the second end of the housing 11 in the first direction Z, the electrode assembly 2 and the electrolyte in the housing 11 are separated from the housing 11, the cut housing 11 with the first end is cleaned, and the side wall of the cleaned housing 11 is restored to be flat; a first end of the housing 11 with the side wall restored to be flat is arranged downwards in the first direction Z, so that the end cover 12 at the first end is located below the housing 11; crystal adhesive is poured into a space enclosed by the housing 11 and the end cover 12 below the housing 11, so that the height of the crystal adhesive in the space enclosed by the end cover 12 and the housing 11 is greater than or equal to a preset height, where the preset height is half the height of the housing 11 after cutting and with the first end. The first side wall part 111, filled with the crystal adhesive, of the housing 11 is cut to obtain the required sample for measurement; the cutting plane of the housing 11 is approximately perpendicular to a reference plane, and the reference plane is respectively parallel to the first direction Z and the second direction Y, for example, an included angle between the cutting plane of the housing 11 and the reference plane is from 80°to 95°. The end cover 12 is cut down as far as possible from the upper side, filled with the crystal adhesive, of the housing 11 to the lower, side filled with the crystal adhesive, of the housing 11.

The sample processing specifically includes:
After the first side wall part 111 of the housing 11 loaded with the crystal adhesive is cut to obtain a desired sample for measurement, a cross-section of the sample for measurement which is cut out and is substantially parallel to the first direction Z and the second direction Y is a preset cross-section of the first side wall part 111, the cut out preset cross-section is polished using sandpaper, with a grit dimension of the sandpaper for polishing the preset cross-section of no less than 1600 mesh, and the polished preset cross-section is then cleaned and etched to obtain a to-be-tested sample observable under an optical microscope; the etched to-be-tested sample is placed under the optical microscope to observe the preset cross-section of the to-be-tested sample.

The grain structure of the preset cross-section may be measured using an optical microscope of model BX53M manufactured by Olympus Corporation. The measuring location is determined by selecting an approximate to-be-tested area under a small magnification of an optical microscope, and then observing the selected approximate to-be-tested area by increasing the magnification of the optical microscope. It should be understood that a ratio of the number of first grains 800 in the first area 1111 is greater than 50%, and a ratio of the number of second grains 802 in the second area 1112 is greater than 50%, so that the difference in grains between the two areas is significant, and the grains observed under the optical microscope can identify the approximate area to be tested.

The grain structure displayed under the BX53M optical microscope can be measured using corresponding software from Olympus Corporation, for example, by employing the software Capture 2.2.1.

The steps of grain measurement specifically include:
the grains under the BX53M optical microscope are displayed and measured using the software Capture 2.2.1. A rectangular frame of 0.1 mm×0.2 mm is drawn in the first area 1111, with the length of side of 0.2 mm of the rectangular frame parallel to the second direction Y. Grains entirely within the rectangular frame and grains intersecting with the sides of the rectangular frame are all considered grains within the rectangular frame.

The dimension of each grain within the 0.1 mm×0.2 mm rectangular frame that extends in the first direction Z is measured. Specifically, each grain within the rectangular frame is projected in the second direction Y to obtain a corresponding projection line that extends in the first direction Z. The length of this projection line in the first direction Z represents the dimension of the corresponding grain that extends in the first direction Z. The dimension of each grain that extends in the first direction Z corresponds to the dimension of the system associated with the software Capture 2.2.1, i.e., the actual dimension without magnification by the optical microscope. This dimension value does not change with variations in the magnification of the optical microscope.

It should be noted that the 0.1 mm×0.2 mm rectangular frame refers to a frame where the both opposite sides in the first direction Z have a length of side of 0.2 mm, with the length of side of 0.2 mm parallel to the second direction Y, and the both opposite sides in the second direction Y have a length of side of 0.1 mm. The dimension of the rectangular frame corresponds to the dimension of the system associated with the software Capture 2.2.1, i.e., the actual dimension without magnification by the optical microscope. This dimension value does not change with variations in the magnification of the optical microscope.

The maximum dimension of each grain within the 0.1 mm×0.2 mm rectangular frame in the second direction Y is measured. Specifically, multiple intercepting lines parallel to the second direction Y are drawn for each grain. The distance between two intercepting points formed by the intersection of the intercepting line with the corresponding grain and arranged in the second direction Y is the intercept of the intercepting line on the corresponding grain. Of the intercepts of each grain corresponding to a plurality of intercepting lines parallel to the second direction Y, the largest intercept is a maximum dimension of the grain in the second direction Y. The maximum dimension of each grain that extends in the second direction Y corresponds to the dimension of the system associated with the software Capture 2.2.1, i.e., the actual dimension without magnification by the optical microscope. This dimension value does not change with variations in the magnification of the optical microscope.

The grains are screened by the dimension of each grain that extends in the first direction Z and the maximum dimension of each grain in the second direction Y within the rectangular frame of 0.1 mm * 0.2 mm, and when the ratio of the dimension of the grain that extends in the first direction Z to the maximum dimension in the second direction Y within the rectangular frame of 0.1 mm * 0.2 mm ranges from 0.2 to 5, the grain is a first grain 800. In this manner, the first grain 800 within the rectangular frame of 0.1 mm * 0.2 mm is screened out. A ratio of the number of the first grains 800 in the rectangular frame of 0.1 mm * 0.2 mm to the number of all the grains in the rectangular frame of 0.1 mm * 0.2 mm is greater than 50%, i.e., the number of the first grains 800 in the first cross-section and the number of all the grains in the first cross-section are determined to be greater than 50%, thereby determining the number of the first grains 800 in the first area 1111 and the number of all the grains in the first area 1111 to be greater than 50%.

As an example, with reference to FIG. 9, the first dimension is D₃, the second dimension is D₄, and 0.2≤D₃/D₄≤5.

As an example, the ratio of the first dimension to the second dimension may be any discrete value of or any range value between two of 0.2, 0.3, 0.5, 0.8, 1, 2, 2.5, 3, 3.5, 4, 5, and the like.

In the embodiments of the present application, the ratio of the first dimension to the second dimension ranges from 0.2 to 5; the extension dimension of the first grains 800 in the first direction Z is relatively adjacent to the maximum dimension of the first grains 800 in the second direction Y; the structure of the first grains 800 in the first direction Z and the second direction Y is relatively uniform, which is advantageous for improving toughness; and the ratio of the number of the first grains 800 in the first area 1111 to the number of all the grains in the first area 1111 is greater than 50%, so thin the first area 1111 can have better toughness to release the expansion force of the electrode assembly 2 and reduce the possibility of cracking of the first connecting part 51.

It should be understood that the specific metallographic structure of the first areas 1111 is not limited as long as the first areas 1111 has a lower hardness than the second areas 1112.

In some embodiments, with reference to FIG. 9, the ratio of the first dimension to the second dimension may range from 0.25 to 4.

As an example, the ratio of the first dimension to the second dimension may be any discrete value of or any range value between two of 0.25, 0.5, 0.7, 0.9, 1, 2, 2.1, 2.4, 2.5, 2.7, 2.8, 3, 3.5, 4, and the like.

In the embodiments of the present application, the ratio of the first dimension to the second dimension ranges from 0.25 to 4, so that the dimension of the first grains 800 that extends in the first direction Z is more adjacent to the maximum dimension in the second direction Y, and thus the toughness of the first grains 800 is improved, so that the toughness of the first areas 1111 with a larger number of the first grains 800 is higher.

It should be understood that the ratio of the first dimension to the second dimension is not limited to a range of from 0.25 to 4. As an example, the ratio of the first dimension to the second dimension may range from greater than 4 to less than or equal to 5.

In some embodiments, with reference to FIG. 9, the first dimension ranges from 5 µm to 500 µm, and the second dimension ranges from 5 µm to 500 µm.

As an example, with reference to FIG. 9, the first dimension is D₃, and 5 µm≤D₃≤500 µm.

As an example, the first dimension may be any discrete value of or any range value between two of 5 µm, 10 µm, 20 µm, 30 µm, 40 µm, 55 µm, 100 µm, 200 µm, 300 µm, 400 µm, 500 µm, and the like.

As an example, with reference to FIG. 9, the second dimension is D₄, and 5 µm≤D₄≤500 µm.

As an example, the first dimension may be any discrete value of or any range value between two of 5 µm, 10 µm, 20 µm, 30 µm, 40 µm, 55 µm, 100 µm, 200 µm, 300 µm, 400 µm, 500 µm, and the like.

In the embodiments of the present application, the range of the first dimension and the range of the second dimension are substantially similar, and accordingly, the first dimension and the second dimension are relatively similar, and accordingly, the first grains 800 are advantageous for improve toughness, so thin the first area 1111, in which the number of the first grains 800 is relatively large, has better toughness to release the expansion force of the electrode assembly 2 and reduce the possibility of cracking of the first connecting part 51.

It should be understood that the range of the first dimension and the range of the second dimension are not limited, as long as the ratio of the first dimension to the second dimension is within the corresponding ratio range.

In some embodiments, with reference to FIG. 9, at least some of the grains in the second area 1112 are second grains 802, a ratio of a number of second grains 802 in the second area 1112 to a number of all grains in the second area 1112 is greater than 50%, and a dimension of the second grains 802 that extends in the first direction Z is a third dimension, a maximum dimension of the second grains 802 in the second direction Y is a fourth dimension, and a ratio of the third dimension to the fourth dimension ranges from 4 to 100.

As an example, with reference to FIGS. 4 to 6, and FIGS. 9 and 14, the cross-section of the first side wall part 111 is shown as a preset cross-section that is substantially parallel to the first direction Z and the second direction Y, respectively. The preset cross-section intersects with the second area 1112 to form a second cross-section.

As an example, the second grains 802 are banded grains.

The step of measuring the grains of the second area includes sample cutting, sample machining, and grain measurement.

The sample cutting step specifically includes:
an end cover 12 is connected to a first end of the housing 11 in a first direction Z, a second end of the housing 11 in the first direction Z is oppositely provided to the first end of the housing 11, the housing 11 is cut in the circumferential direction of the housing 11 at a distance of 30 mm from the second end of the housing 11 in the first direction Z, the electrode assembly 2 and the electrolyte in the housing 11 are separated from the housing 11, the cut housing 11 with the first end is cleaned, and the side wall of the cleaned housing 11 is restored to be flat; a first end of the housing 11 with the side wall restored to be flat is arranged downwards in the first direction Z, so that the end cover 12 at the first end is located below the housing 11; crystal adhesive is poured into a space enclosed by the housing 11 and the end cover 12 below the housing 11, so that the height of the crystal adhesive in the space enclosed by the end cover 12 and the housing 11 is greater than or equal to a preset height, where the preset height is half the height of the housing 11 after cutting and with the first end. The first side wall part 111, filled with the crystal adhesive, of the housing 11 is cut to obtain the required sample for measurement; the cutting plane of the housing 11 is approximately perpendicular to a reference plane, and the reference plane is respectively parallel to the first direction Z and the second direction Y, for example, an included angle between the cutting plane of the housing 11 and the reference plane is from 80°to 95°. The end cover 12 is cut down as far as possible from the upper side, filled with the crystal adhesive, of the housing 11 to the lower, side filled with the crystal adhesive, of the housing 11.

The sample processing specifically includes:
After the first side wall part 111 of the housing 11 loaded with the crystal adhesive is cut to obtain a desired sample for measurement, a cross-section of the sample for measurement which is cut out and is substantially parallel to the first direction Z and the second direction Y is a preset cross-section of the first side wall part 111, the cut out preset cross-section is polished using sandpaper, with a grit dimension of the sandpaper for polishing the preset cross-section of no less than 1600 mesh, and the polished preset cross-section is then cleaned and etched to obtain a to-be-tested sample observable under an optical microscope; the etched to-be-tested sample is placed under the optical microscope to observe the preset cross-section of the to-be-tested sample.

The grain structure of the preset cross-section may be measured using an optical microscope of model BX53M manufactured by Olympus Corporation. The measuring location is determined by selecting an approximate to-be-tested area under a small magnification of an optical microscope, and then observing the selected approximate to-be-tested area by increasing the magnification of the optical microscope. It should be understood that a ratio of the number of first grains 800 in the first area 1111 is greater than 50%, and a ratio of the number of second grains 802 in the second area 1112 is greater than 50%, so that the difference in grains between the two areas is significant, and the grains observed under the optical microscope can identify the approximate area to be tested.

The grain structure displayed under the BX53M optical microscope can be measured using corresponding software from Olympus Corporation, for example, by employing the software Capture 2.2.1.

The steps of grain measurement specifically include:
the grains under the BX53M optical microscope are displayed and measured using the software Capture 2.2.1. A rectangular frame of 5mm×0.3mm is drawn in the second area 1112, with the length of side of 0.3mm of the rectangular frame parallel to the second direction Y. Grains entirely within the rectangular frame and grains intersecting with the sides of the rectangular frame are all considered grains within the rectangular frame.

The dimension of each grain within the 5mm×0.3mm rectangular frame that extends in the first direction Z is measured. Specifically, each grain within the rectangular frame is projected in the second direction Y to obtain a corresponding projection line that extends in the first direction Z. The length of this projection line in the first direction Z represents the dimension of the corresponding grain that extends in the first direction Z. The dimension of each grain that extends in the first direction Z corresponds to the dimension of the system associated with the software Capture 2.2.1, i.e., the actual dimension without magnification by the optical microscope. This dimension value does not change with variations in the magnification of the optical microscope.

It should be noted that the 5mm×0.3mm rectangular frame refers to a frame where the both opposite sides in the first direction Z have a length of side of 0.3mm, with the length of side of 0.3mm parallel to the second direction Y, and the both opposite sides in the second direction Y have a length of side of 5mm. The dimension of the rectangular frame corresponds to the dimension of the system associated with the software Capture 2.2.1, i.e., the actual dimension without magnification by the optical microscope. This dimension value does not change with variations in the magnification of the optical microscope.

The maximum dimension of each grain within the 5mm×0.3mm rectangular frame in the second direction Y is measured. Specifically, multiple intercepting lines parallel to the second direction Y are drawn for each grain. The distance between two intercepting points formed by the intersection of the intercepting line with the corresponding grain and arranged in the second direction Y is the intercept of the intercepting line on the corresponding grain. Of the intercepts of each grain corresponding to a plurality of intercepting lines parallel to the second direction Y, the largest intercept is a maximum dimension of the grain in the second direction Y. The maximum dimension of each grain that extends in the second direction Y corresponds to the dimension of the system associated with the software Capture 2.2.1, i.e., the actual dimension without magnification by the optical microscope. This dimension value does not change with variations in the magnification of the optical microscope.

The grains are screened by the dimension of each grain that extends in the first direction Z and the maximum dimension of each grain in the second direction Y within the rectangular frame of 5mm * 0.3mm, and when the ratio of the dimension of the grain that extends in the first direction Z to the maximum dimension in the second direction Y within the rectangular frame of 5mm * 0.3mm ranges from 4 to 100, the grain is a second grain 802. In this manner, the second grains 802 within the rectangular frame of 5mm * 0.3mm are screened out. A ratio of the number of the second grains 802 in the rectangular frame of 5mm * 0.3mm to the number of all the grains in the rectangular frame of 5mm * 0.3mm is greater than 50%, i.e., the number of the second grains 802 in the second cross-section and the number of all the grains in the second cross-section are determined to be greater than 50%, thereby determining the number of the second grains 802 in the second area 1112 and the number of all the grains in the second area 1112 to be greater than 50%.

As an example, with reference to FIG. 9, the third dimension is D₅, the fourth dimension is D₆, and 4≤D₅/D₆≤100.

As an example, the ratio of the third dimension to the fourth dimension may be any discrete value of or any range value between two of 4, 5, 6, 10, 30, 40, 50, 60, 70, 80, 90, 100, and the like.

In the embodiments of the present application, the ratio of the third dimension to the fourth dimension ranges from 4-100, the dimension of the second grains 802 that extends in the first direction Z is greater than the maximum dimension of the second grains 802 in the second direction Y to a certain extent, such that the second grains 802 are advantageous for reducing toughness, and the ratio of the number of the second grains 802 in the second area 1112 to the number of all the grains in the second area 1112 is greater than 50%, so that the toughness of the second area 1112 is relatively small, which is advantageous for reducing the cracking of the second area 1112 itself under the expansion force of the electrode assembly 2.

It should be understood that the metallographic structure of the second area 1112 is not limited as long as the first area 1111 has a lower harness than the second area 1112.

In some embodiments, with reference to FIG. 9, the ratio of the third dimension to the fourth dimension may range from 4 to 50.

As an example, the ratio of the third dimension to the fourth dimension may be any discrete value of or any range value between two of 4, 5, 6, 7, 8, 10, 15, 20, 25, 30, 35, 40, 45, 50, and the like.

In the embodiments of the present application, the ratio of the third dimension to the fourth dimension ranges from 4-50, so that the deviation of the maximum dimension of the second grains 802 in the first direction Z and the second direction Y is relatively large, and thus the toughness of the second grains 802 is reduced, so that the toughness of the second area where the number of the second grains is relatively large is relatively low, which is advantageous for reducing the cracking of the second area 1112 itself under the effect of the expansion force of the electrode assembly 2.

It should be understood that a ratio of the third dimension to the fourth dimension is not limited to a range of from 4 to 50. As an example, the ratio of the third dimension to the fourth dimension may be greater than 50, or the ratio of the third dimension to the fourth dimension may be greater than 100.

In some embodiments, with reference to FIG. 9, the third dimension ranges from 150 µm to 1000 µm, and the fourth dimension ranges from 5 µm to 120 µm.

As an example, with reference to FIG. 9, the third dimension is D₅, and 150 µm≤D₅≤1000 µm.

As an example, with reference to FIG. 9, the third dimension may be any discrete value of or any range value between two of 150 µm, 170 µm, 200 µm, 300 µm, 400 µm, 500 µm, 600 µm, 700 µm, 800 µm, 900 µm, 950 µm, 1000 µm, and the like.

As an example, with reference to FIG. 9, the fourth dimension is D₆, and 5 µm≤D₆≤120 µm.

As an example, with reference to FIG. 9, the fourth dimension may be any discrete value of or any range value between two of 5 µm, 10 µm, 15 µm, 20 µm, 30 µm, 40 µm, 50 µm, 60 µm, 70 µm, 80 µm, 90 µm, 100 µm, 110 µm, 120 µm, and the like.

In the embodiments of the present application, the lower limit of the dimension range of the third dimension of 150 µm is greater than the upper limit of the fourth dimension of 120 µm, the deviation of the maximum dimension of the second grains 802 in the first direction Z and the second direction Y is relatively large, and the second grains 802 in the corresponding dimension range are advantageous for reducing the toughness, so that the toughness of the second area where the number of the second grains is relatively large is relatively low, which is advantageous for reducing the cracking of the second area 1112 itself under the effect of the expansion force of the electrode assembly 2.

It should be understood that the range of the third dimension and the range of the fourth dimension are not limited, as long as the ratio of the third dimension to the fourth dimension is within the corresponding ratio range.

In some embodiments, with reference to FIG. 9, at least some of the grains in the first area 1111 are first grains 800, a ratio of a number of the first grains 800 in the first area 1111 to a number of all the grains in the first area 1111 is greater than 50%, and a dimension of the first grains 800 that extends in the first direction Z is a first dimension, a maximum dimension of the first grains 800 in the second direction Y is a second dimension, and a ratio of the first dimension to the second dimension ranges from 0.2 to 5. At least some of the grains in the second area 1112 are second grains 802, a ratio of a number of second grains 802 in the second area 1112 to a number of all grains in the second area 1112 is greater than 50%, and a dimension of the second grains 802 that extends in the first direction Z is a third dimension, a maximum dimension of the second grains 802 in the second direction Y is a fourth dimension, and a ratio of the third dimension to the fourth dimension ranges from 4 to 100. The third dimension is greater than the first dimension.

In the embodiments of the present application, the third dimension of the second grain 802 is greater than the first dimension of the first grain 800, and the maximum dimension of the second grain 802 in the first direction Z is greater than the maximum dimension of the first grain 800 in the first direction Z, and therefore the number of the first grain 800 is greater than the number of the second grain 802 in the same dimension in the first direction Z. Since the number of the first grain 800 in the first area 1111 accounts for more than 50%, and the number of the second grain 802 in the second area 1112 accounts for more than 50%, the first area 1111 has more first grains 800 and the second area 1112 is mainly composed of the second grains 802, and the first area 1111 can have more grains to share the expansion force in substantially the same dimension in the first direction, so thin the first area 1111 adjacent to the first connecting part 51 has better toughness to release the expansion force of the electrode assembly 2, thereby reducing the possibility of cracking of the first connecting part 51.

In some embodiments, with reference to FIG. 9, the ratio of the third dimension to the first dimension may range from 1.5 to 150.

As an example, with reference to FIG. 9, the third dimension is D₅, the first dimension is D₃, and 1.5≤D₃/D₅≤150.

As an example, with reference to FIG. 9, the ratio of the third dimension to the first dimension may be any discrete value of or any range value between two of 1.5, 2, 2.5, 3, 4, 5, 5.5, 6, 7, 8, 9, 10, 20, 40, 50, 70, 90, 120, 130, 150, and the like.

In the embodiments of the present application, the ratio of the third dimension to the first dimension is in a suitable range, so that the toughness of the first area 1111 is suitable with respect to the toughness of the second area, and in the case of reducing the possibility of cracking of the first connecting part 51, it is advantageous for restraining the cracking of the first area 1111 itself.

In some embodiments, with reference to FIG. 9, the ratio of the third dimension to the first dimension may range from 1.8 to 100.

In some embodiments, with reference to FIG. 9, the first dimension ranges from 5 µm to 500 µm, and the third dimension ranges from 150 µm to 1000 µm.

In some embodiments, the hardness of the first area 1111 is less than the hardness of the first connecting part 51.

It should be noted that the first area 1111 has a lower harness than the second area 1112, and the toughness of the first area 1111 is better than the toughness of the second area 1112; and during the cyclic charging and discharging of the battery cell 10, the repeated expansion and contraction of the electrode assembly 2 generates a periodic expansion force acting on the first side wall part 111, so that the first side wall part 1111 is periodically deformed mainly in the first area 1111 with higher toughness to release the expansion force, which may cause fatigue cracking of the first area 1111 itself with higher toughness.

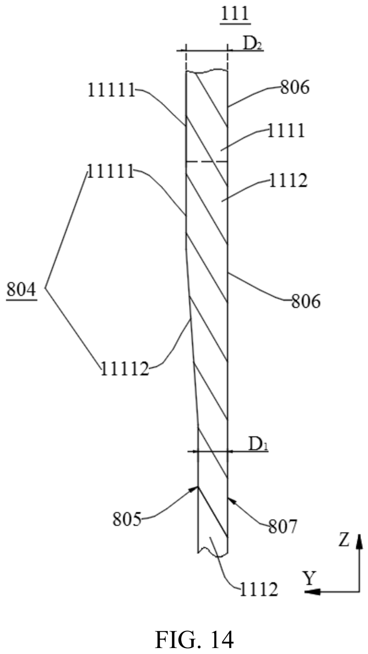

In view of this, in some embodiments, with reference to FIGS. 6 and 14, the maximum thickness of the first area 1111 is greater than the minimum thickness of the second area 1112.

The maximum thickness of the first area 1111 is the maximum dimension of the first area 1111 in the second direction Y. The minimum thickness of the second area 1112 is the minimum dimension of the first area 1111 in the second direction Y.

As an example, the first area 1111 may be of an equal-thickness structure or of an unequal-thickness structure.

As an example, the second area 1112 may be of an equal-thickness structure or of an unequal-thickness structure.

In the embodiments of the present application, the maximum thickness of the first area 1111 is greater than the minimum thickness of the second area 1112, so that at least some of the area of the first area 1111 with higher toughness is thicker than at least some of the area of the second area 1112 with lower toughness, and the area of the first area 1111 with higher toughness is reinforced at a part corresponding to the larger thickness, so that the possibility of fatigue cracking of the first area 1111 itself can be restrained to a certain extent.

It should be understood that the relationship between the thickness of the first area 1111 and the thickness of the second area 1112 is not limited. As an example, the maximum thickness of the first area 1111 may be less than or equal to the minimum thickness of the second area 1112, or the minimum thickness of the first area 1111 may be greater than the maximum thickness of the second area 1112. As an example, the thickness at a part of the first area 1111 is greater than the thickness at a part of the second area 1112, and the thickness at a part of the first area 1111 is less than the thickness at a part of the second area 1112. As an example, the thickness of the first area 1111 and the thickness of the second area 1112 may be equal, with the first area 1111 and the second area 1112 being of an equal thickness structure.

In one embodiment, with reference to FIGS. 6, 8 and 14, the first side wall part 111 has a first inner surface 804 and a second inner surface 805 facing the electrode assembly 2, and a first outer surface 806 and a second outer surface 807 facing away from the electrode assembly 2, the first inner surface 804 and the second inner surface 805 being successively connected in a direction from the end cover 12 toward the electrode assembly 2, and the first outer surface 806 and the second outer surface 807 are successively connected in a direction from the end cover 12 toward the electrode assembly 2, the first inner surface 804 and the first outer surface 806 are at least partially formed in the first area 1111, the second inner surface 805 and the second outer surface 807 are at least partially formed in the second area 1112, a distance between the first inner surface 804 and the first outer surface 806 in the second direction Y is larger than a distance between the second inner surface 805 and the second outer surface 807 in the second direction Y.

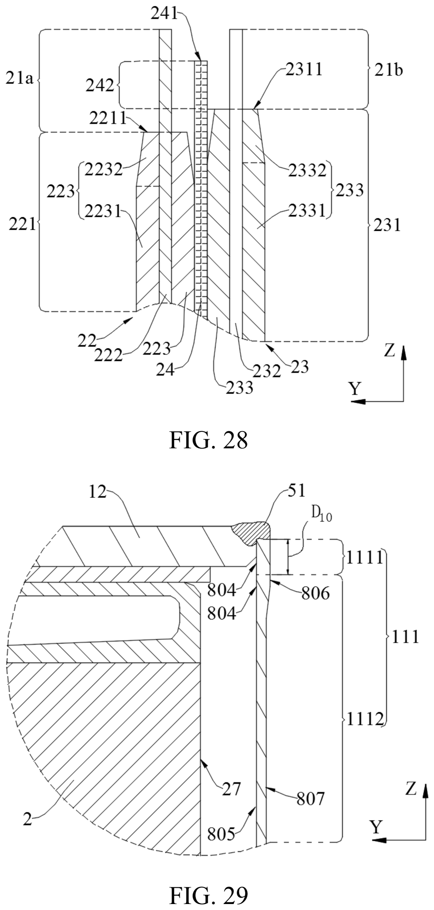

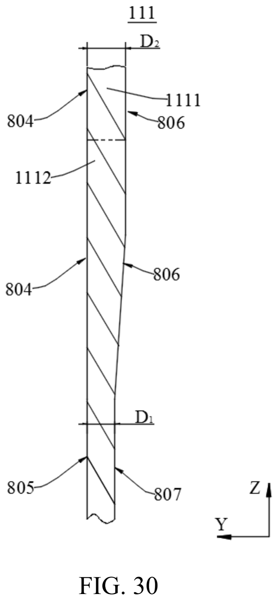

As an example, with reference to FIGS. 29 and 30, the first inner surface 804 and the second inner surface 805 may be in one single plane.

As an example, with reference to FIGS. 6, 14-16, and 18, 19, 22, 23, and 26, the first inner surface 804 may be more adjacent to the electrode assembly 2 in the second direction Y with respect to the second inner surface 805.

As an example, with reference to FIGS. 6, 14-16, and 18, 19, 22, 23, and 26, the first outer surface 806 and the second outer surface 807 may be in one single plane.

As an example, with reference to FIGS. 29 and 30, the first outer surface 806 may be further away from the electrode assembly 2 in the second direction Y with respect to the second outer surface 807.

As an example, with reference to FIGS. 29 and 30, when the first inner surface 804 and the second inner surface 805 are in one plane, the first outer surface 806 may be further away from the electrode assembly 2 in the second direction Y with respect to the second outer surface 807.

As an example, with reference to FIGS. 6, 14-16, 18, 19, 22, 23, and 26, when the first outer surface 806 and the second outer surface 807 are in one plane, the first inner surface 804 may be more adjacent to the electrode assembly 2 in the second direction Y with respect to the second inner surface 805.

As an example, the first outer surface 806 may be further away from the electrode assembly 2 in the second direction Y with respect to the second outer surface 807. The first inner surface 804 may be more adjacent to the electrode assembly 2 in the second direction Y with respect to the second inner surface 805.

As an example, the respective locations of the first inner surface 804 may be at equal distances from the first outer surface 806, i.e., the area between the first inner surface 804 and the first outer surface 806 is of an equal thickness structure.

As an example, the respective locations of the first inner surface 804 may be at unequal distances from the first outer surface 806, i.e., the area between the first inner surface 804 and the first outer surface 806 may be of an unequal thickness structure.

As an example, the respective locations of the second inner surface 805 may be at equal distances from the second outer surface 807, i.e., the area between the second inner surface 805 and the second outer surface 807 is of an equal thickness structure.

As an example, the respective locations of the second inner surface 805 may be at unequal distances from the second outer surface 807, i.e., the area between the second inner surface 805 and the second outer surface 807 may be of an unequal thickness structure.

In the embodiments of the present application, the first inner surface 804 and the first outer surface 806 are at least partially formed in the first area 1111, and the second inner surface 805 and the second outer surface 807 are at least partially formed in the second area 1112, the first area 1111 may advantageously be reinforced by the corresponding thicker parts of the first inner surface 804 and the first outer surface 806, which may advantageously reduce the possibility of fatigue cracking of the first area 1111 itself.

It should be understood that the relationship among the first inner surface 804, the second inner surface 805, the first outer surface 806, and the second outer surface 807 is not limited. As an example, the first inner surface 804 and the second inner surface 805 may be spaced apart and the first outer surface 806 and the second outer surface 807 may be spaced apart.

In some embodiments, with reference to FIG. 14, the first inner surface 804 includes a first sub-face 11111 and a second sub-face 11112 successively connected in a direction from the end cover 12 toward the electrode assembly 2, the first sub-face 11111 is formed at least partially in the first area 1111, the first sub-face 11111 being more adjacent to the electrode assembly 2 than the second sub-face 11112 in the second direction Y, a distance between the first sub-face 11111 and the first outer surface 806 in the second direction Y being larger than a distance between the second sub-face 11112 and the first outer surface 806 in the second direction Y.

The distance between the first sub-face 11111 and the first outer surface 806 in the second direction Y is greater than the distance between the second sub-face 11112 and the first outer surface 806 in the second direction Y. The area between the first sub-face 11111 and the first outer surface 806 in the second direction Y is thicker, and the area between the second sub-face 11112 and the first outer surface 806 in the second direction Y is thinner.

The first sub-face 11111 transitions to the second inner surface 805 through the second sub-face 11112.

As an example, the respective locations on the first sub-face 11111 may be at equal distances from the first outer surface 806, and the area between the first sub-face 11111 and the first outer surface 806 is of an equal thickness structure.

As an example, the respective locations on the first sub-face 11111 may be at unequal distances from the second outer surface 807, and the area between the first sub-face 11111 and the first outer surface 806 may be of an unequal thickness structure.

As an example, the respective locations on the second sub-face 11112 may be at equal distances from the second outer surface 807, and the area between the second sub-face 11112 and the second outer surface 807 is of an equal thickness structure.

As an example, the respective locations on the second sub-face 11112 may be at unequal distances from the second outer surface 807, and the area between the second sub-face 11112 and the second outer surface 807 may be of an unequal thickness structure.

As an example, the minimum distance between the first sub-face 11111 and the first outer surface 806 in the second direction Y may be greater than the maximum distance between the second sub-face 11112 and the first outer surface 806 in the second direction Y.

In the embodiments of the present application, since the distance between the first sub-face 11111 and the first outer surface 806 in the second direction Y is relatively large, and the corresponding thickness is relatively large, the first sub-face 11111 is at least partially formed in the first area 1111, so that the thickness of the first area 1111 is relatively thick, which is advantageous for reinforcing the first area 1111, thereby restraining fatigue cracking of the first area 1111 itself.

It should be understood that the relationship among the first sub-face, the second sub-face, and the first outer surface 806 is not limited. As an example, the distance between the first sub-face 11111 and the first outer surface 806 in the second direction Y may be less than or equal to the distance between the second sub-face 11112 and the first outer surface 806.

In some embodiments, with reference to FIG. 14, the distance between the second sub-face 11112 and the first outer surface 806 in the second direction Y is a first preset thickness that exhibits a decreasing trend in the direction from the end cover 12 toward the electrode assembly 2.

It should be noted that the direction from the end cover 12 toward the electrode assembly 2 is consistent with the direction from the first sub-face 11111 toward the second sub-face 11112 in the first direction Z.

As an example, with reference to FIG. 14, respective locations on the second sub-face 11112 are at unequal distances from the second outer surface 807, and the first preset thickness exhibits a decreasing trend in the direction from the end cover 12 toward the electrode assembly 2, and the second sub-face 11112 may be an inclined face.

As an example, with reference to FIG. 14, respective locations on the first sub-face 11111 are at equal distances from the first outer surface 806, and respective locations on the second sub-face 805 are at equal distances from the second outer surface 807. The first sub-face 11111 is parallel to the first outer surface 806 and the second inner surface 805 is parallel to the second outer surface 807. The first outer surface 806 and the second outer surface 807 are coplanar. The first sub-face 11111 is more adjacent to the electrode assembly 2 than the second sub-face 11112 in the second direction Y, the second sub-face 11112 is more adjacent to the electrode assembly 2 than the second inner surface 805 in the second direction Y, and the second sub-face 11112 connects the first sub-face 11111 and the second inner surface 805, respectively.

In the embodiments of the present application, the first preset thickness exhibits a decreasing trend in a direction from the end cover 12 toward the electrode assembly 2. On the one hand, the transition between the first sub-face and the second inner surface 805 can be made relatively smooth, the influence of the second sub-face 11112 on the electrode assembly 2 can be reduced, and the possibility of interference between the second sub-face 11112 and the electrode assembly 2 can be reduced. On the other hand, the reinforcing effect of the part of the first side wall part 111 corresponding to the second sub-face 11112 exhibits a decreasing trend in a direction from the electrode assembly 2 toward the end cover 12, so that the part of the second sub-face 11112 of the first side wall part 111 adjacent to the first sub-face 11111 has a better reinforcing effect to reduce the possibility of fatigue cracking of the first area 1111. Furthermore, the transition between the first sub-face and the second inner surface 805 can be relatively smooth, which is advantageous for reducing stress concentrations.

It should be understood that the embodiments of the present application are not limited to the first preset thickness exhibiting a decreasing trend in a direction from the end cover 12 toward the electrode assembly 2. As an example, the first preset thickness may be constant in the direction from the end cover 12 toward the electrode assembly 2.

In some embodiments, with reference to FIG. 14, the first sub-face 11111 spans across the first area 1111 and the second area 1112, and the first outer surface 806 spans across the first area 1111 and the second area 1112.

The first sub-face 11111 spanning across the first area 1111 and the second area 1112 means that the first sub-face 11111 is partially formed in the first area 1111, and the first sub-face 11111 is partially formed in the second area 1112.

The first outer surface 806 spanning across the first area 1111 and the second area 1112 means that the first outer surface 806 is partially formed in the first area 1111 and the first outer surface 806 is partially formed in the second area 1112.

In the embodiments of the present application, since the distance between the first sub-face 11111 and the first outer surface 806 is greater than the distance between the second inner surface 805 and the second outer surface 807, and the distance between the first sub-face 11111 and the first outer surface 806 is greater than the distance between the second sub-face 11112 and the first outer surface 806, the first side wall part 111 is thicker at the corresponding part of the first sub-face 11111, and the first sub-face 11111 spans across the first area 1111 and the second area 1112, such that the thicker part of the first side wall part 111 spans across the first area 1111 and the second area 1112, a location where the first area 1111 and the second area 1112 having different toughness intersect with each other is reinforced, which is advantageous for restraining cracking at the place where the first area 1111 and the second area 1112 having different toughness intersect with each other.

In some embodiments, the second sub-face 11112 spans across the first area 1111 and the second area 1112, and the first outer surface 806 spans across the first area 1111 and the second area 1112.

The second sub-face 11112 spanning across the first area 1111 and the second area 1112 means that the second sub-face 11112 is partially formed in the first area 1111 and the second sub-face 11112 is partially formed in the second area 1112.

The first outer surface 806 spanning across the first area 1111 and the second area 1112 means that the first outer surface 806 is partially formed in the first area 1111 and the first outer surface 806 is partially formed in the second area 1112.

In the embodiments of the present application, since the distance between the second sub-face 11112 and the first outer surface 806 is greater than the distance between the second inner surface 805 and the second outer surface 807, the part of the first side wall part 111 corresponding to the second sub-face 11112 is thicker than the part of the first side wall part 111 corresponding to the second inner surface 805, and the second sub-face 11112 spans across the first area 1111 and the second area 1112, such that the thicker part of the first side wall part 111 spans across the first area 1111 and the second area 1112, a location where the first area 1111 and the second area 1112 having different toughness intersect with each other is reinforced, which is advantageous for restraining cracking at the place where the first area 1111 and the second area 1112 having different toughness intersect with each other.

It should be understood that in the embodiments of present application, the relationship among the first sub-face 11111, the second sub-face 11112, the first area 1111, and the second area 1112 is not limited. As an example, the first sub-face 11111 and the second sub-face 11112 may both be located in the first area 1111.

In some embodiments, with reference to FIGS. 6, 8, 14, 17, 20, 21, 24, 25, 26, 29, and 30, the first inner surface 804 spans across the first area 1111 and the second area 1112, and the first outer surface 806 spans across the first area 1111 and the second area 1112.

The first inner surface 804 spanning across the first area 1111 and the second area 1112 means that the first inner surface 804 is partially formed in the first area 1111 and the first inner surface 804 is partially formed in the second area 1112.

The first outer surface 806 spanning across the first area 1111 and the second area 1112 means that the first outer surface 806 is partially formed in the first area 1111 and the first outer surface 806 is partially formed in the second area 1112.

As an example, the first sub-face 11111 is located in the first area 1111, the second sub-face 11112 is located in the second area 1112, and the location where the first sub-face 11111 and the second sub-face 11112 intersect with each other is located just at a location where the first area 1111 intersect with the second area 1112.

As an example, the first sub-face 11111 is partially formed in the first area 1111 and the first sub-face 11111 is partially formed in the second area 1112. The second sub-face 11112 is located in the second area 1112.

As an example, the second sub-face 11112 is partially formed in the first area 1111 and the second sub-face 11112 is partially formed in the second area 1112. The first sub-face 11111 is located in the first area 1111.

In the embodiments of the present application, since the distance between the first inner surface 804 and the first outer surface 806 is greater than the distance between the second inner surface 805 and the second outer surface 807, the part of the first side wall part 111 corresponding to the first inner surface 804 is thicker than the part of the first side wall part 111 corresponding to the second inner surface 805, the first inner surface 804 spans across the first area 1111 and the second area 1112, and the first outer surface 806 spans across the first area 1111 and the second area 1112, and the thicker part of the first side wall part 111 spans across the first area 1111 and the second area 1112, such that the thicker part of the first side wall part 111 spans across the first area 1111 and the second area 1112, a location where the first area 1111 and the second area 1112 having different toughness intersect with each other is reinforced, which is advantageous for restraining cracking at the place where the first area 1111 and the second area 1112 having different toughness intersect with each other.

It should be understood that the relationship among the first inner surface 804, the first outer surface 806, the first area 1111, and the second area 1112 is not limited. As an example, the first inner surface 804 and the first outer surface 806 are each located in the first area 1111, the second inner surface 805 and the second outer surface 807 are each located in the second area 1112, a location where the first inner surface 804 intersects with the second inner surface 805 also precisely coincides with a location where the first area 1111 intersects with the second area 1112, and a location where the first outer surface 806 intersects with the second outer surface 807 also precisely coincides with a location where the first area 1111 intersects with the second area 1112.

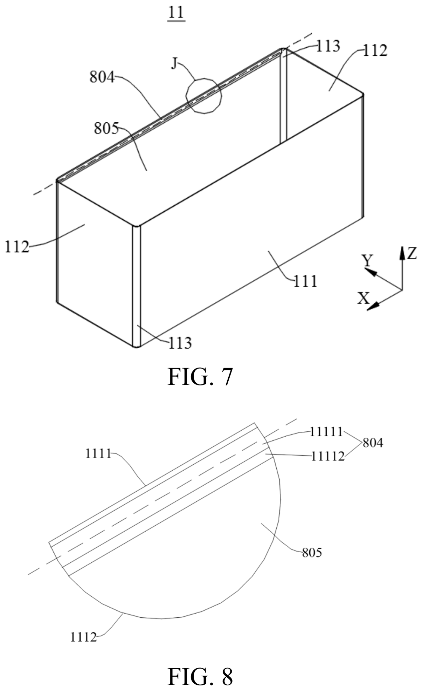

In some embodiments, with reference to FIGS. 7, 15, 16, 18, 19, 22, and 23, the dimension of the first inner surface 804 in the third direction X is greater than the dimension of the first inner surface 804 in the first direction Z, the first direction Z, the second direction Y, and the third direction X are non-coplanar and intersect with each other in pairs.

The dimension of the first inner surface 804 in the third direction X is the length of the first inner surface 804, the dimension of the first inner surface 804 in the first direction Z is the width of the first inner surface 804, and the length of the first inner surface 804 is greater than the width of the first inner surface 804, such that the part of the first side wall part 111 between the first inner surface 804 and the first outer surface 806 is an elongated structure that extends in the third direction X.

As an example, the housing 11 has a rectangular parallelepiped shape, and the housing 11 includes two first side wall parts 111 and two second side wall parts 112, the two first side wall parts 111 are oppositely provided to each other in a second direction Y, the two second side wall parts 112 are oppositely provided to each other in a third direction X, the first direction Z, the second direction Y, and the third direction X are perpendicular to each other in pairs, the first direction Z is parallel to a height direction of the housing 11, the second direction Y is parallel to a width direction of the housing 11, and the third direction X is parallel to a length direction of the housing 11.

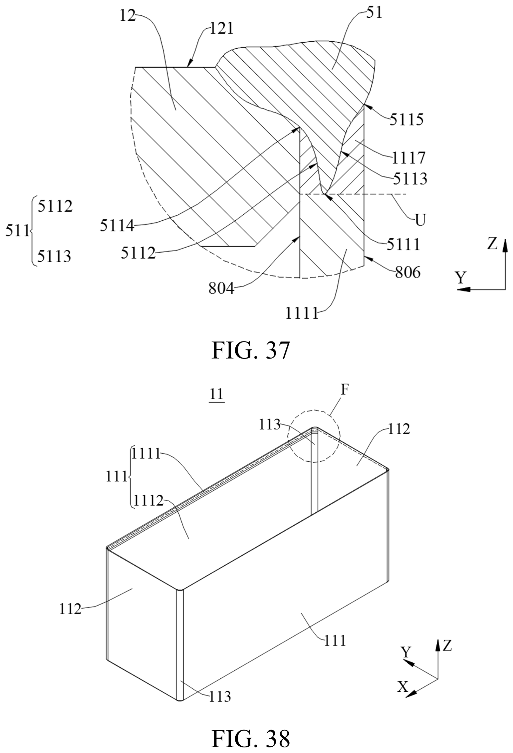

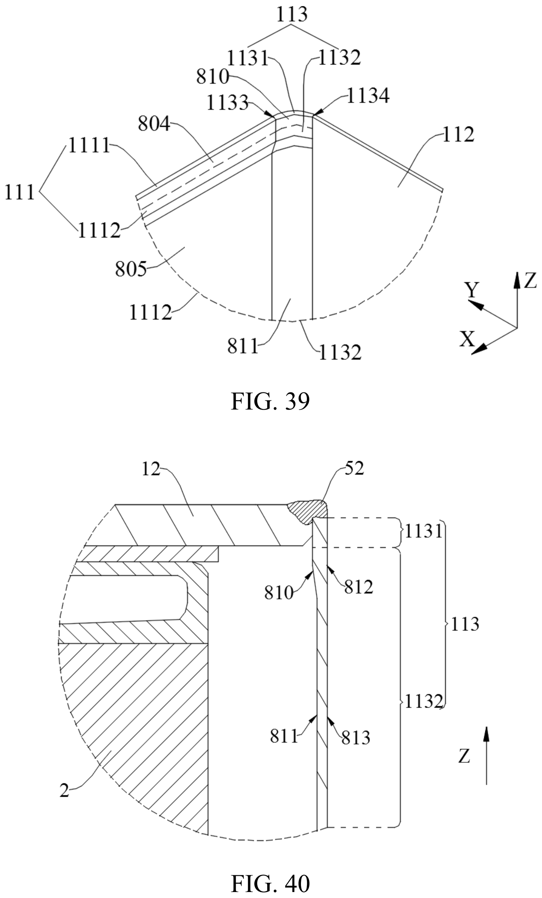

As an example, with reference to FIGS. 38 and 39, the first area 1111 extends in the third direction X to opposite ends of the first side wall part 111.

In the present embodiment, the dimension of the first inner surface 804 in the third direction X is greater than the dimension of the first inner surface 804 in the first direction Z, so that the dimension of the first inner surface 804 in the third direction X is larger, and more area of the first side wall part 111 in the third direction X is reinforced by the corresponding thicker thickness part of the first inner surface 804, which is advantageous for preventing the housing 11 from being cracked.

It should be understood that the dimension relationship between the dimension of the first inner surface 804 in the third direction X and the dimension of the first inner surface 804 in the first direction Z is not particularly limited. As an example, the dimension of the first inner surface 804 in the third direction X may be less than or equal to the dimension of the first inner surface 804 in the first direction Z.

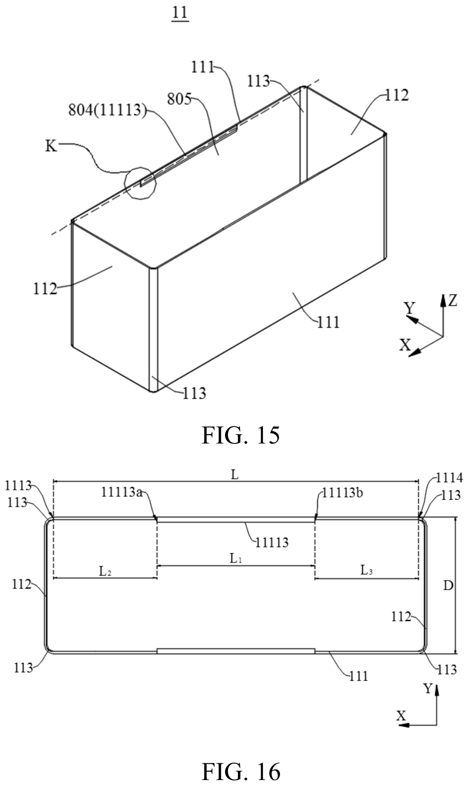

In some embodiments, with reference to FIGS. 15 to 25, in the second direction Y, a projection obtained by overlapping the projection of the first inner surface 804 with the projection of the first area 1111 is a first projection; a dimension of the first projection in the third direction X is greater than a dimension of the first projection in the first direction Z, and the first direction Z, the second direction Y, and the third direction X are non-coplanar and intersect with each other in pairs.

The location corresponding to the first projection is the location where the corresponding thickened part of the first inner surface 804 reinforces the first area 1111.

As an example, the first direction Z, the second direction Y and the third direction X are perpendicular to each other.

In the embodiments of the present application, since the dimension of the first projection in the third direction X is greater than the dimension of the first projection in the first direction Z, the corresponding part of the first inner surface 804 that reinforces the first area 1111 has a greater dimension in the third direction X, so thin the first area 1111 with higher toughness has more area to be reinforced in the third direction X, further reducing the possibility of fatigue cracking of the first area 1111 itself.

It should be understood that the dimensional relationship between the dimension of the first projection in the third direction X and the dimension of the first projection in the first direction Z is not limited. As an example, the dimension of the first projection in the third direction X is less than or equal to the dimension of the first projection in the first direction Z.

In some embodiments, with reference to FIGS. 15 to 25, the first inner surface 804 includes a first connecting face 11113 that passes through a middle section of the first side wall part 111, the middle section being perpendicular to the third direction X, the middle section being at equal distances from two ends of the first side wall part 111 in the third direction X.

The first connecting face 11113 may be a part of the first inner surface 804, or the first connecting face 11113 may be the first inner surface 804. Respective locations on the first connecting face 11113 are at equal or unequal distances from the first outer surface 806. The first connecting face 11113 has opposite ends in the third direction X, and the first connecting face 11113 passes through a middle section of the first side wall part 111, such that the middle section of the first side wall part 111 is located between the opposite ends of the first connecting face 11113 in the third direction X. Opposite ends of the first connecting face 11113 in the third direction X may be at equal or unequal distances from the middle section. If the opposite ends of the first connecting face 11113 in the third direction X are at equal distances to the middle section of the first side wall part 111, the first connecting face 11113 may be of a symmetrical structure provided symmetrically with respect to the middle section of the first side wall part 111. It should be noted that the middle section of the first side wall part 111 is an imaginary plane, which is not shown in the drawing.

As an example, with reference to FIGS. 15 to 17, the first connecting face 11113 is the first inner surface 804, respective locations on the first connecting face 11113 are at equal distances from the first outer surface 806, the opposite ends of the first connecting face 11113 in the third direction X are at equal distances from the middle section of the first side wall part 111.

Taking the housing 11 having a rectangular parallelepiped shape as an example, the middle section of the first side wall part 111 is at an equal distance from two ends of the first side wall part 111 in the third direction X, that is, the middle section of the first side wall part 111 is at an equal distance from two second side wall parts 112 of the housing 11 which are oppositely provided to each other in the third direction X is equal.

It should be noted that in the third direction X, the middle section of the first side wall part 111 is at a substantially equal distance from two ends of the first side wall part 111, and it should be understood that the middle section is at an equal distance from two ends of the first side wall part 111.

In the embodiments of the present application, when the first side wall part 111 is subjected to the expansion force of the electrode assembly 2 of the battery cell 10, the middle area of the first side wall part 111 in the third direction X is greatly affected by the expansion force of the electrode assembly 2, and since the first connecting face 11113 passes through the middle section of the first side wall part 111, the thickness of the first side wall part 111 is large at the middle section location, so that the first side wall part 111 is reinforced to a certain extent at the middle section, which is advantageous for reducing the influence of the expansion force of the electrode assembly 2 on the middle area of the first side wall part 111 in the third direction X.

It should be understood that the locations of the first connecting face 11113 and the middle section of the first side wall part 111 are not limited. As an example, the first connecting face 11113 may not pass through the middle section. As an example, the first connecting face 11113 is located on one side of the middle section of the first side wall part 111 in the third direction X.

In some embodiments, with reference to FIGS. 16, 17, 19, 20, 21, 23, 24, and 25, the first connecting face 11113 is formed at least partially in the first area 1111, a projection of the first connecting face 11113 coinciding with a projection of the first area 1111 in the second direction Y is a second projection, and the second projection passes through the middle section of the first side wall part 111.

The first connecting face 11113 may be a part of the first inner surface 804, or alternatively, the first connecting face 11113 may be the first inner surface 804.

The first connecting face 11113 is at least partially formed in the first area 1111, and in the second direction Y, a projection of the first connecting face 11113 may at least partially coincide with a projection of the first area 1111. The location corresponding to the overlapping second projection is a location where the thicker part of the first side wall part 111 at the first connecting face 11113 reinforces the first area 1111.

In the embodiments of the present application, since the second projection passes through the middle section of the first side wall part 111, and accordingly the first area 1111 of higher toughness passes through the middle section, the first area 1111 of higher toughness can release the expansion force of the electrode assembly 2 at the middle section to some extent, which is advantageous for reducing the cracking of the first connecting part 51 at the middle section of the first side wall part 111. Since the second projection passes through the middle section of the first side wall part 111, the thicker part of the first side wall part 111 corresponding to the first connecting face 11113 can be located at least partially at the middle section corresponding to the first area 1111, which is advantageous for restraining fatigue cracking of the first area 1111 having higher toughness at the middle section of the first side wall.

It should be understood that the relationship of locations of the second projection and the middle section of the first side wall part 111 is not limited. Illustratively, the second projection may be located on one side of the middle section of the first side wall part 111 in the third direction X.

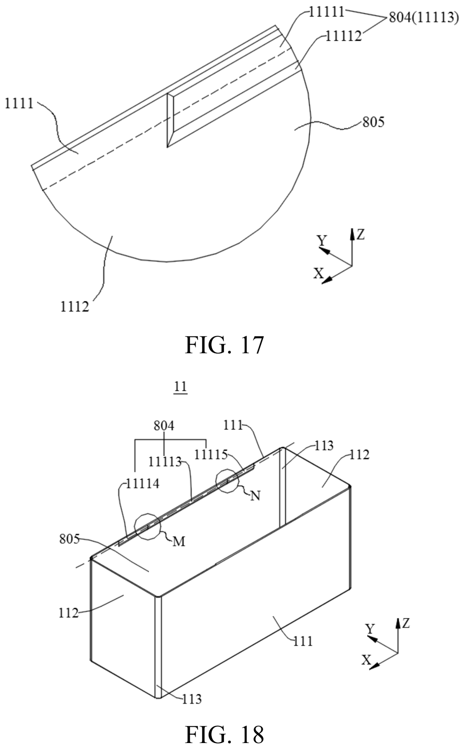

In some embodiments, with reference to FIGS. 18 to 25, the first inner surface 804 further includes a second connecting face 11114 and a third connecting face 11115, the second connecting face 11114, the first connecting face 11113, and the third joint section surface are arranged in a third direction X, the first connecting face 11113 connects the second connecting face 11114 and the third connecting face 11115, and in the second direction Y, a distance between the second connecting face 11114 and the first outer surface 806 and a distance between the third connecting face 11115 and the first outer surface 806 are both smaller than a distance between the first connecting face 11113 and the first outer surface 806.

The first connecting face 11113 is a segment of the first inner surface 804 which passes through the middle section of the first side wall part 111, and the second connecting face 11114 and the third connecting face 11115 are two segments of the first inner surface 804 which are located at two ends in the third direction X, respectively. The second connecting face 11114 and the first connecting face 11113 may be directly connected or indirectly connected, and the third connecting face 11115 and the first connecting face 11113 may be directly connected or indirectly connected.

Respective locations on the first connecting face 11113 may be at equal or unequal distances from the first outer surface 806. Respective locations on the second connecting face 11114 may be at equal or unequal distances from the first outer surface 806. Respective locations on the third connecting face 11115 may be at equal or unequal distances from the first outer surface 806. If respective locations of at least one of the first connecting face 11113 and the second connecting face 11114 is at an unequal distance from the first outer surface 806, it may be that the maximum distance between the second connecting face 11114 and the first outer surface 806 is smaller than or equal to the minimum distance between the first connecting face 11113 and the first outer surface 806 to achieve that the distance between the second connecting face 11114 and the first outer surface 806 is smaller than the distance between the first connecting face 11113 and the first outer surface 806. If respective locations of at least one of the third connecting face 11115 and the first connecting face 11113 is at an unequal distance from the first outer surface 806, it may be that the maximum distance between the third connecting face 11115 and the first outer surface 806 is smaller than or equal to the minimum distance between the first connecting face 11113 and the first outer surface 806 to achieve that the distance between the third connecting face 11115 and the first outer surface 806 is smaller than the distance between the first connecting face 11113 and the first outer surface 806.

The dimension of the second connecting face 11114 in the third direction X may be equal or may be unequal to the dimension of the third connecting face 11115 in the third direction X. If the dimension of the second connecting face 11114 in the third direction X is equal to the dimension of the third connecting face 11115 in the third direction X, the second connecting face 11114 and the third connecting face 11115 may be symmetrically provided with respect to the middle section of the first side wall part 111.

It should be understood that in the embodiment in which the first inner surface 804 includes a first sub-face and a second sub-face 11112, at least one of the first connecting face 11113, the second connecting face 11114, and the third connecting face 11115 includes a first sub-face 11111 and a second sub-face 11112 arranged in the first direction Z.

The second connecting face 11114 may be in part more adjacent to the electrode assembly 2 in the second direction Y than the second inner surface 805 and/or the first outer surface 806 may be in part further from the electrode assembly 2 in the second direction Y than the second outer surface 807, the first connecting face 11113 may be in part more adjacent to the electrode assembly 2 in the second direction Y than the second inner surface 805 and/or the first outer surface 806 may be in part further from the electrode assembly 2 in the second direction Y than the second outer surface 807, the third connecting face 11115 may be in part more adjacent to the electrode assembly 2 in the second direction Y than the second inner surface 805 and/or the first outer surface 806 may be in part further away from the electrode assembly 2 in the second direction Y than the second outer surface 807.

As an example, with reference to FIGS. 18 to 25, the second connecting face 11114 and the third connecting face 11115 are each directly connected to the first connecting face 11113, the distance between the second connecting face 11114 and the first outer surface 806 gradually decreases in the direction from the third connecting face 11115 toward the second connecting face 11114, and the distance between the third connecting face 11115 and the first outer surface 806 gradually decreases in the direction from the second connecting face 11114 toward the third connecting face 11115. A part of the second connecting face 11114, a part of the first connecting face 11113, and a part of the third connecting face 11115 are each more adjacent to the electrode assembly 2 in the second direction Y with respect to the second inner surface 805. The second connecting face 11114 connects the first connecting face 11113 and the second inner surface 805, and the third connecting face 11115 connects the inner surface of the first connecting face 11113 and the second inner surface 805, and the first outer surface 806 is planar.

In the embodiments of the present application, when the expansion force of the electrode assembly 2 is applied to the first side wall part 111, the expansion degree of the electrode assembly 2 in the third direction X of the first side wall part 111 adjacent to the middle area is large, the expansion degree of the electrode assembly 2 in the third direction X of the first side wall part 111 adjacent to the two ends is relatively small, and the expansion force of the electrode assembly 2 in the third direction X of the two ends and the middle area of the first side wall part 111 is different. The distance between the second connecting face 11114 and the first outer surface 806 and the distance between the third connecting face 11115 and the first outer surface 806 are both smaller than the distance between the first connecting face 11113 and the first outer surface 806, and the first side wall part 111 is reinforced to a greater extent in an area adjacent to the middle corresponding to the first connecting face 11113, facilitating bearing a greater expansion force of the electrode assembly 2 acting on the first side wall part 111 adjacent to the middle in the third direction X; the areas of the first side wall part 111 adjacent to two ends corresponding to the second connecting face 11114 and the third connecting face 11115 are reinforced to a certain extent so as to be able to carry expansion forces acting on the first side wall part 111 at two ends of the electrode assembly 2 in the third direction X, and the thicknesses of the areas of the first side wall part 111 adjacent to two ends corresponding to the second connecting face 11114 and the third connecting face 11115 are small, which is advantageous for reducing costs.

It should be understood that the relationship among the distance between the second connecting face 11114 and the first outer surface 806, the distance between the third connecting face 11115 and the first outer surface 806, and the distance between the first connecting face 11113 and the first outer surface 806 is not limited. As an example, the distance between the second connecting face 11114 and the first outer surface 806 may be greater than or equal to the distance between the first connecting face 11113 and the first outer surface 806, and the distance between the third connecting face 11115 and the first outer surface 806 may be greater than or equal to the distance between the first connecting face 11113 and the first outer surface 806.

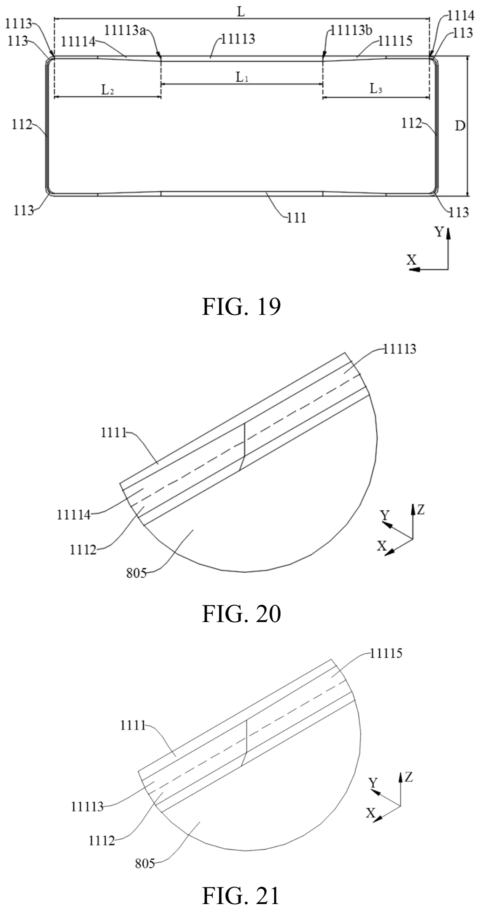

In some embodiments, with reference to FIGS. 20, 21, 24, and 25, the first connecting face 11113, the second connecting face 11114, and the third connecting face 11115 are all at least partially formed in the first area 1111.

As an example, with reference to FIGS. 20, 21, 24, and 25, the first connecting face 11113 is partially formed in the first area 1111, the second connecting face 11114 is partially formed in the first area 1111, and the third connecting face 11115 is partially formed in the first area 1111.

As an example, with reference to FIGS. 20, 21, 24, and 25, the first connecting face 11113 spans across the first area 1111 and a second area 1112, a second connecting face 11114 spans across the first area 1111 and the second area 1112, and the third connecting face 11115 spans across the first area 1111 and the second area 1112.

The first connecting face 11113 spanning across the first area 1111 and the second area 1112 means that the first connecting face 11113 is partially formed in the first area 1111 and the first connecting face 11113 is partially formed in the second area 1112.

The second connecting face 11114 spanning across the first area 1111 and the second area 1112 means that the second connecting face 11114 is partially formed in the first area 1111, and the second connecting face 11114 is partially formed in the second area 1112.

The third connecting face 11115 spanning across the first area 1111 and the second area 1112 means that the third connecting face 11115 is partially formed in the first area 1111, and the third connecting face 11115 is partially formed in the second area 1112.

In the embodiments of the present application, the part of the first area 1111 located at the location corresponding to the first connecting face 11113 releases the expansion force of the electrode assembly 2 at the first connecting face 11113, which is advantageous for reducing the cracking of the first connecting part 51 at the first connecting face 11113, and the part of the first area 1111 located at the location corresponding to the first connecting face 11113 is subjected to a relatively large periodic expansion force due to the repeated expansion of the electrode assembly 2. The distance between the second connecting face 11114 and the first outer surface 806 and the distance between the third connecting face 11115 and the first outer surface 806 are both smaller than the distance between the first connecting face 11113 and the first outer surface 806, so that a thicker part of the first side wall part 111 at the first connecting face 11113 can better reinforce the first area 1111, which is advantageous for restraining the possibility of fatigue cracking of a part of the first area 1111 located at a location corresponding to the first connecting face 11113. The part of the first area 1111 located at the location corresponding to the second connecting face 11114 releases the expansion force of the electrode assembly 2 at the second connecting face 11114, which is advantageous for reducing the cracking of the first connecting part 51 at the second connecting face 11114. The part of the first area 1111 located at the location corresponding to the third connecting face 11115 releases the expansion force of the electrode assembly 2 at the third connecting face 11115, which is advantageous for reducing the cracking of the first connecting part 51 at the third connecting face 11115. Since the periodic expansion force of the electrode assembly 2 to the first side wall part 111 at the locations corresponding to the second connecting face 11114 and the third connecting face 11115 is small, and the distance between the second connecting face 11114 and the first outer surface 806 and the distance between the third connecting face 11115 and the first outer surface 806 are both smaller than the distance between the first connecting face 11113 and the first outer surface 806, the fatigue cracking of the first area 1111 at the parts corresponding to the second connecting face 11114 and the third connecting face 11115 may be restrained, and the material consumption for the first side wall part 111 at the locations corresponding to the second connecting face 11114 and the third connecting face 11115 may also be reduced, which is advantageous for saving costs.

It should be understood that the relationship among the first connecting face 11113, the second connecting face 11114, the third connecting face 11115 and the first area 1111 is not limited. As an example, one of the first connecting face 11113, the second connecting face 11114, and the third connecting face 11115 may be at least partially formed in the first area 1111, and the remaining two may not be formed in the first area 1111. As an example, two of the first connecting face 11113, the second connecting face 11114, and the third connecting face 11115 may be formed at least partially in the first area 1111, and the remaining one may not be formed in the first area 1111.

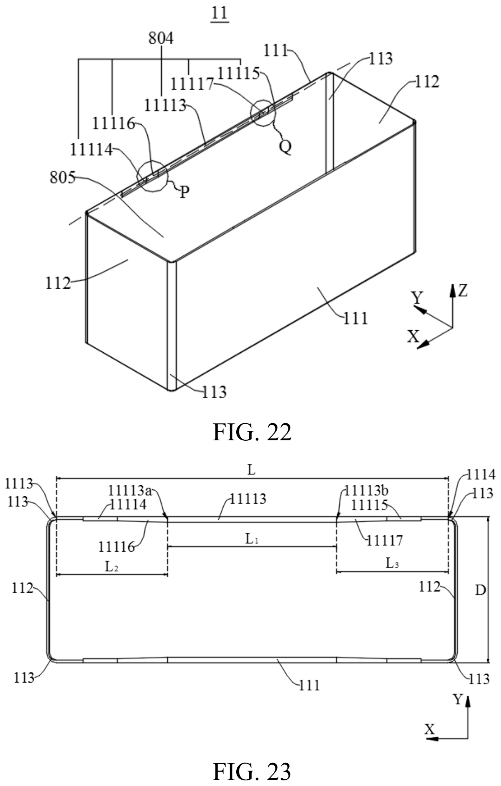

In some embodiments, with reference to FIGS. 22 to 25, the first inner surface 804 further includes a first transition face 11116, a first connecting face 11113, the first transition face 11116 and a second connecting face 11114 arranged in a third direction X, the first transition face 11116 connects the second connecting face 11114 and the first connecting face 11113, the distance between the first transition face 11116 and the first outer surface 806 in the second direction Y is a second preset thickness, and the second preset thickness exhibits a decreasing trend in a direction from the second connecting face 11114 toward the first connecting face 11113; and/or the first inner surface 804 further includes a second transition face 11117, the first connecting face 11113, the second transition face 11117 and the third connecting face 11115 are arranged in the third direction X, the second transition face 11117 connects the third connecting face 11115 and the first connecting face 11113, the distance between the second transition face 11117 and the first outer surface 806 in the second direction Y is a third preset thickness, and the third preset thickness exhibits a decreasing trend in a direction from the third connecting face 11115 toward the first connecting face 11113.

Respective locations on the first transition face 11116 are at unequal distances from the first outer surface 806. As an example, the second preset thickness gradually increases in the direction from the second connecting face 11114 toward the first connecting face 11113. Respective locations on the second transition face 11117 are at unequal distances from the first outer surface 806. As an example, the third preset thickness gradually increases in the direction from the third connecting face 11115 toward the first connecting face 11113.

If a first transition face 11116 is provided between the second connecting face 11114 and the first connecting face 11113, and a second transition face 11117 is provided between the third connecting face 11115 and the first connecting face 11113, the dimension of the first transition face 11116 in the third direction X may be equal or unequal to the dimension of the second transition face 11117 in the third direction X. If the dimension of the first transition face 11116 in the third direction X is equal to the dimension of the second transition face 11117 in the third direction X, the first transition face 11116 and the second transition face 11117 may be symmetrically provided with respect to the middle section of the first side wall part 111.

It can be understood that if a first transition face 11116 is provided between the second connecting face 11114 and the first connecting face 11113, the first transition face 11116 may be more adjacent to the electrode assembly 2 in the second direction Y with respect to the second inner surface 805 and/or a part of the first outer surface 806 corresponding to the first transition face 11116 may be further away from the electrode assembly 2 in the second direction Y with respect to the second outer surface 807; if a second transition face 11117 is provided between the third connecting face 11115 and the first connecting face 11113, the second transition face 11117 may be more adjacent to the electrode assembly 2 in the second direction Y with respect to the second inner surface 805 and/or a part of the first outer surface 806 corresponding to the second transition face 11117 may be further away from the electrode assembly 2 in the second direction Y with respect to the second outer surface 807.

As an example, with reference to FIGS. 22 to 25, the second connecting face 11114 is indirectly connected to the first connecting face 11113 via a first transition face 11116, the third connecting face 11115 is indirectly connected to the first connecting face 11113 via a second transition face 11117, the second preset thickness gradually increases in the direction from the second connecting face 11114 toward the first connecting face 11113, and the third preset thickness gradually increases in the direction from the third connecting face 11115 toward the first connecting face 11113. A part of the second connecting face 11114, a part of the first connecting face 11113, a part of the third connecting face 11115, a part of the first transition face 11116, and a part of the second transition face 11117 are each more adjacent to the electrode assembly 2 in the second direction Y with respect to the second inner surface 805. The first transition face 11116 connects the first connecting face 11113 and the second connecting face 11114, the second transition face 11117 connects the first connecting face 11113 and the third connecting face 11115, and the first outer surface 806 is planar.

In the embodiments of the present application, if the second connecting face 11114 and the first connecting face 11113 are connected via the first transition face 11116, and the second preset thickness exhibits a decreasing trend in a direction from the second connecting face 11114 toward the first connecting face 11113, the first transition face 11116 can realize the transition between the second connecting face 11114 and the first connecting face 11113, so as to reduce stress concentrations. If the third connecting face 11115 and the first connecting face 11113 are connected via the second transition face 11117, and the third preset thickness exhibits a decreasing trend in a direction from the third connecting face 11115 toward the first connecting face 11113, the second transition face 11117 can realize the transition between the third connecting face 11115 and the first connecting face 11113, so as to reduce stress concentrations.

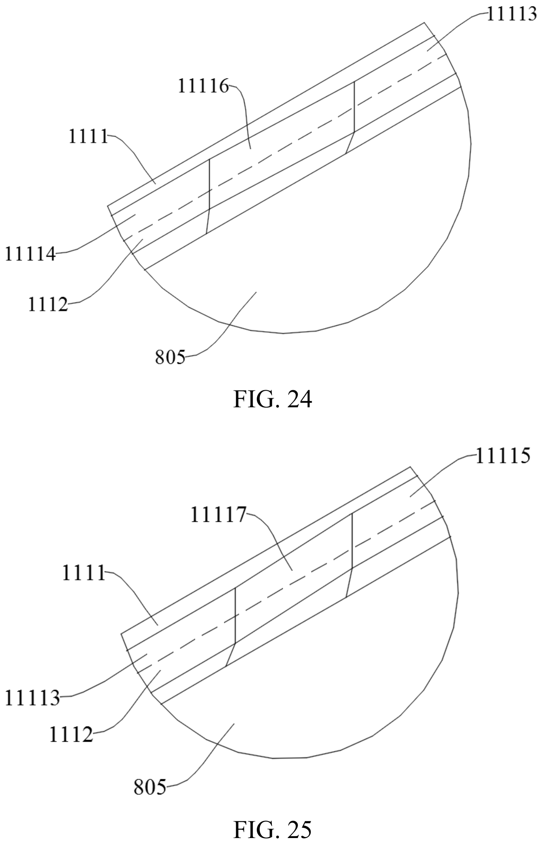

In some embodiments, with reference to FIGS. 24 and 25, the first transition face 11116 is formed at least partially in the first area 1111 and/or the second transition face 11117 is formed at least partially in the first area 1111.

In the embodiments of the present application, the part of the first side wall part 111 corresponding to the first transition face 11116 and the second transition face 11117 is thicker than the part of the first side wall part 111 corresponding to the second inner surface 805. The thicker first transition face 11116 can reinforce the corresponding first area 1111, and serves to restrain fatigue cracking at the corresponding location of the first area 1111. The thicker second transition face 11117 can reinforce the corresponding first area 1111, and serves to restrain fatigue cracking at the corresponding location of the first area 1111.

It should be understood that a relationship of locations of the first transition face 11116, the second transition face 11117 and the first area 1111 is not limited. As an example, the first transition face 11116 is outside the first area 1111 and/or the second transition face 11117 is outside the first area 1111.

In some embodiments, with reference to FIGS. 16, 19, and 23, dimension of the first connecting face 11113 in the third direction X is L₁, and a dimension of first side wall part 111 in the third direction X is L, where 0.2≤L₁/L≤0.6.

The dimension of the first connecting face 11113 in the third direction X is the length of the first connecting face 11113, the dimension of the first side wall part 111 in the third direction X is the length of the first side wall part 111, the dimension of the first side wall part 111 in the second direction Y is the thickness of the first side wall part 111, and the dimension of the first side wall part 111 in the first direction Z is the width of the first side wall part 111.

L₁/L may take any discrete value of or any range value between two of 0.2, 0.22, 0.25, 0.28, 0.3, 0.32, 0.35, 0.38, 0.4, 0.42, 0.45, 0.48, 0.5, 0.52, 0.55, 0.58, 0.6, and the like.

In the embodiments of the present application, L₁/L≥0.2, which increases a dimension ratio of the first connecting face 11113 in the first side wall part 111 in the third direction X, so that the middle area of the first side wall part 111 in the third direction X is reinforced to a greater extent, and the strength of the middle area of the first side wall part 111 in the third direction X is improved; L₁/L≤0.6, which reduces the ratio of dimension of the first connecting face 11113 in the first side wall part 111 in the third direction X, reduces the material consumption of the first side wall part 111 in the corresponding part of the first connecting face 11113, and reduces the production cost. Therefore, by setting the ratio of the dimension of the first connecting face 11113 in the third direction X to the dimension of the first side wall part 111 in the third direction X to be 0.2 to 0.6, while allowing the first side wall part 111 to have a sufficient reinforcing capacity at a location corresponding to the first connecting face 11113, the material consumption of the first side wall part 111 at the first connecting face 11113 is reduced, and both the reinforcing capacity requirement and the economic requirement of the first side wall part 111 at the first connecting face 11113 are satisfied.

In some embodiments, with reference to FIGS. 16, 19 and 23, the first connecting face 11113 has a first end 11113a and a second end 11113b opposite to each other in the third direction X, the first side wall part 111 has a third end 1113 and a fourth end 1114 opposite to each other in the third direction X, the first end 11113a is adjacent to the third end 1113, the second end 11113b is adjacent to the fourth end 1114, the dimension of the first side wall part 111 in the third direction X is L, a minimum distance between the first end 11113a and the third end 1113 in the third direction X is L₂, and a minimum distance between the second end 11113b and the fourth end 1114 in the third direction X is L₃; L₂/L≤0.3; and/or, L₃/L≤0.3.

It should be understood that in the third direction X, the first end 11113a is more adjacent to the third end 1113 than the second end 11113b and the second end 11113b is more adjacent to the fourth end 1114 than the first end 11113a.

It may be L₂=L₃; it may also be L₂>L₃ or L₂<L₃.

L₂/L may take any discrete value of or any range value between two of 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, and the like.

L₃/L may take any discrete value of or any range value between two of 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, and the like.

In the embodiments of the present application, if L₂/L≤0.3, a ratio of the minimum distance between the first end 11113a and the third end 1113 in the third direction X to the dimension of the first side wall part 111 in the third direction X is reduced, so that more areas of the first side wall part 111 in the third direction X have reinforced strength. If L₃/L≤0.3, a ratio of the minimum distance of the second end 11113b from the fourth end 1114 in the third direction X to the dimension of the first side wall part 111 in the third direction X is reduced, so that more areas of the first side wall part 111 in the third direction X have reinforced strength.

In some embodiments, with reference to FIGS. 16, 19 and 23, 100mm≤L≤450mm.

L may take any discrete value of or any range value between two of 100 mm, 120 mm, 150 mm, 180 mm, 200 mm, 220 mm, 250 mm, 260 mm, 280 mm, 300 mm, 310 mm, 320 mm, 350 mm, 390 mm, 400 mm, 410 mm, 420 mm, 430 mm, 440 mm, 450 mm, and the like.

In some embodiments, with reference to FIGS. 15, 18, and 22, the housing 11 includes a corner wall 113 connected to two ends of the first side wall part 111 in the third direction X;

at least one end of the first inner surface 804 in the third direction X is not in contact with the corner wall 113; or, two ends of the first inner surface 804 in the third direction X extend to the two corner walls 113, respectively.

In the third direction X, the first inner surface 804 has opposite ends, and either one end of the first inner surface 804 extends to one corner wall 113, and the other end does not extend to the other corner wall 113, or two ends of the first inner surface 804 do not extend to the corner wall 113, so that at least one end of the first inner surface 804 in the third direction X is not in contact with the corner wall 113.

As an example, with reference to FIGS. 15 and 16, in the third direction X, one end of the first inner surface 804 is not in contact with the corner wall 113 at one end of the first side wall part 111, and the other end of the first inner surface 804 is not in contact with the corner wall 113 at the other end of the first side wall part 111.

In the embodiments of the present application, if at least one end of the first inner surface 804 in the third direction X is not in contact with the corner wall 113, material consumption of the first side wall part 111 in the corresponding part of the first inner surface 804 can be reduced, thereby reducing production costs. If two ends of the first inner surface 804 extend to the two corner walls 113 in the third direction X, respectively, the length of the first inner surface 804 is increased, and the reinforcing ability of the first side wall part 111 at the corresponding part of the first inner surface 804 is increased, so that more areas of the first side wall part 111 in the third direction X are reinforced.

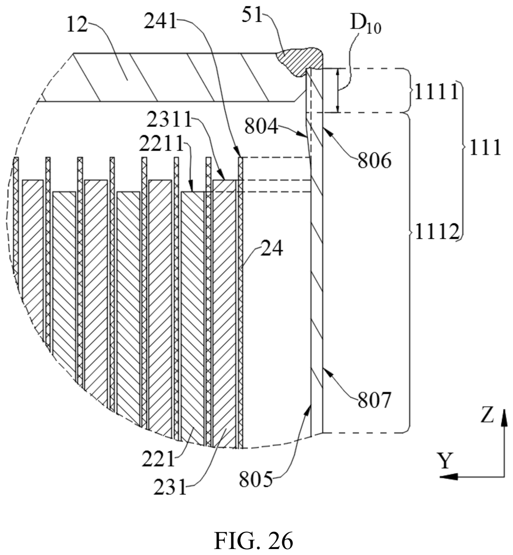

In some embodiments, with reference to FIGS. 26, 27 and 28, the electrode assembly 2 further includes a spacer 24 provided between the positive pole piece 22 and the negative pole piece 23. The positive pole piece 22 includes a positive pole body area 221 and a positive pole tab 21a protruding from the positive pole body area 221, the positive pole body area 221 has a positive pole active material layer 223, the negative pole piece 23 includes a negative pole body area 231 having a negative pole active material layer 233 and a negative pole tab 21b protruding from the negative pole body area 231, the positive pole body area 221, in the first direction Z, has a fifth end 2211 facing the end cover 12, the negative pole body area 231 has a sixth end 2311 facing the end cover 12, and the spacer 24 has a seventh end 241 facing the end cover 12, the seventh end 241 being more adjacent to the end cover 12 than the fifth end 2211 and the sixth end 2311.

As an example, the electrode assembly 2 may be of a winding structure or may be of a laminated structure.

The positive pole piece 22 may include a positive pole current collector 222 and a positive pole active material layer 223, and the positive pole current collector 222 is provided with the positive pole active material layer 223 on one or two surfaces thereof in the thickness direction. With reference to FIGS. 26, 27 and 28, the positive pole piece 22 further includes an insulating layer 224; the insulating layer 224 is provided on two surfaces of the positive pole current collector 222 opposite in the thickness direction; the insulating layer 224 and the positive pole active material layer 223 are arranged in the first direction Z; the insulating layer 224 is provided at an end of the positive pole active material layer 223; a part of the positive pole piece 22 corresponding to the positive pole active material layer 223 and the insulating layer 224 as a whole is a positive pole body area 221; one end of the insulating layer 224 adjacent to the end cover 12 forms a fifth end 2211 of the positive pole body area 221; and a part of the positive pole current collector 222 that extends beyond the insulating layer 224 forms a positive pole tab 21a. With reference to FIGS. 26, 27 and 28, the positive pole piece 22 is not provided with the insulating layer 224, the part of the positive pole piece 22 corresponding to the positive pole active material layer 223 is the positive pole body area 221, the end of the positive pole active material layer 223 adjacent to the end cover 12 forms the fifth end 2211 of the positive pole body area 221, and the part of the positive pole current collector 222 that extends beyond the positive pole active material layer 223 forms the positive pole tab 21a.

The negative pole piece 23 may include a negative pole current collector 232 and a negative pole active material layer 233, and the negative pole current collector 232 is provided with the negative pole active material layer 233 on one or two surfaces thereof in the thickness direction. The part of the negative pole piece 23 corresponding to the negative pole active material layer 233 is a negative pole body area 231, the end of the negative pole active material layer 233 adjacent to the end cover 12 forms a sixth end 2311 of the negative pole body area 231, and a part of the negative pole current collector 232 that extends beyond the negative pole active material layer 233 forms a negative pole tab 21b.

The fifth end 2211 may be flush with the sixth end 2311. With reference to FIGS. 26, 27 and 28, the fifth end 2211 may also be more adjacent to the end cover 12 than the sixth end 2311. With reference to FIGS. 26, 27 and 28, the sixth end 2311 may be more adjacent to the end cover 12 than the fifth end 2211.

In the embodiments of the present application, the seventh end 241 of the spacer 24 is more adjacent to the end cover 12 than the fifth end 2211 of the positive pole body area 221 and the sixth end 2311 of the negative pole body area 231, so that the spacer 24 has a part that extends beyond the fifth end 2211 and the sixth end 2311 to reinforce the insulation effect of the spacer 24 between the positive pole piece 22 and the negative pole piece 23 and to reduce the risk of electrical contact between the positive pole piece 22 and the negative pole piece 23.

In some embodiments, with reference to FIGS. 26, 27, and 28, the spacer 24 includes an extension area 242 that extends beyond the fifth end 2211 and the sixth end 2311 in the first direction Z, on the projection plane perpendicular to the second direction Y, the orthographic projection of the extension area 242 partially overlaps with the orthographic projection of the first inner surface 804.

The extension area 242 is the part of the spacer 24 that extends beyond both the fifth end 2211 of the positive pole body area 221 and the sixth end 2311 of the negative pole body area 231. It should be understood that, with reference to figures, in the embodiment in which the fifth end 2211 is more adjacent to the end cover 12 than the sixth end 2311, the part of the spacer 24 that extends beyond the fifth end 2211 is the extension area 242. With reference to figures, in the embodiment in which the sixth end 2311 is more adjacent to the end cover 12 than the fifth end 2211, the part of the spacer 24 that extends beyond the sixth end 2311 is the extension area 242.

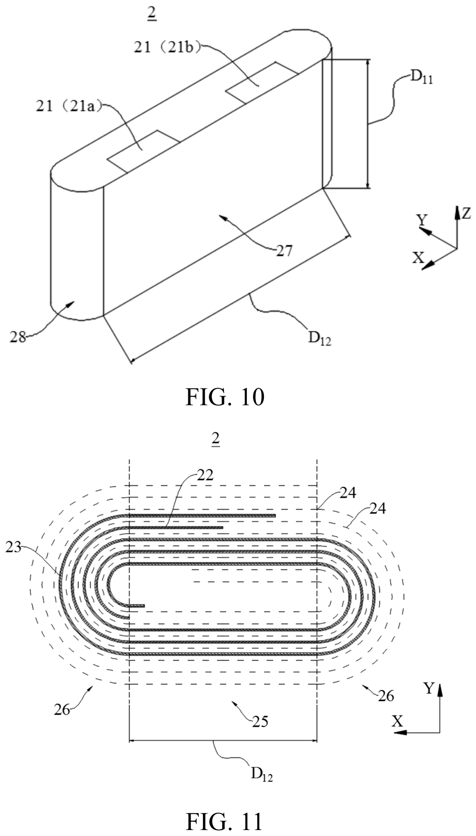

As an example, with reference to FIG. 11, the part of the positive pole piece 22, the negative pole piece 23, and the spacer 24 in the flat area 25 in the electrode assembly 2 are stacked in the second direction Y.

In the embodiments of the present application, on a projection plane perpendicular to the second direction Y, the configuration in which the orthographic projection of the extension area 242 partially overlaps with the orthographic projection of the first inner surface 804 increases the dimension of the first inner surface 804 in the first direction Z, thus enhancing reinforcement capability of the first sidewall part 111 at the part corresponding to the first inner surface 804, so that more areas of the first side wall part 111 in the first direction Z are reinforced.

In some embodiments, with reference to FIG. 26, the first inner surface 804 protrudes from the second inner surface 805. On the projection plane perpendicular to the second direction Y, the orthographic projection of the positive pole body area 221 does not overlap with the orthographic projection of the first inner surface 804; and/or on the projection plane perpendicular to the second direction Y, the orthographic projection of the negative pole body area 231 does not overlap with the orthographic projection of the first inner surface 804.

It should be noted that the first inner surface 804 protrudes from the second inner surface 805, i.e., the first inner surface 804 is more adjacent to the electrode assembly 2 in the second direction Y with respect to the second inner surface 805.

The first inner surface 804 may extend to the first connecting part 51, such that the first inner surface 804 is directly connected to the first connecting part 51.

It should be understood that in the embodiment in which the first inner surface 804 includes a first sub-face 11111 and a second sub-face 11112 arranged in the first direction Z, both the first sub-face 11111 and the second sub-face 11112 may be more adjacent to the electrode assembly 2 with respect to the second inner surface 805 in the second direction Y. In the embodiment in which the first inner surface 804 includes the second connecting face 11114, the first connecting face 11113, and the third connecting face 11115 arranged in the third direction X, the second connecting face 11114, the first connecting face 11113, and the third connecting face 11115 are each more 'adjacent to the electrode assembly 2 in the second direction Y with respect to the second inner surface 805.

As an example, with reference to FIG. 26, on the projection plane perpendicular to the second direction Y, the positive pole body area 221 does not overlap with the orthographic projection of the first inner surface 804, and the negative pole body area 231 does not overlap with the orthographic projection of the first inner surface 804.

In the embodiments of the present application, on the projection plane perpendicular to the second direction Y, the orthographic projection of the positive pole body area 221 does not overlap with the orthographic projection of the first inner surface 804, so that the housing 11 can provide a larger expansion space for the electrode assembly 2, reduce the expansion force exerted by the expansion of the electrode assembly 2 directly to the part of the first side wall part 111 corresponding to the first inner surface 804, and reduce the amount of deformation of the first side wall part 111. On the projection plane perpendicular to the second direction Y, the orthographic projection of the negative pole body area 231 does not overlap with the orthographic projection of the first inner surface 804, so that the housing 11 can provide a larger expansion space for the electrode assembly 2, reduce the expansion force exerted by the expansion of the electrode assembly 2 directly to the part of the first side wall part 111 corresponding to the first inner surface 804, and reduce the amount of deformation of the first side wall part 111.

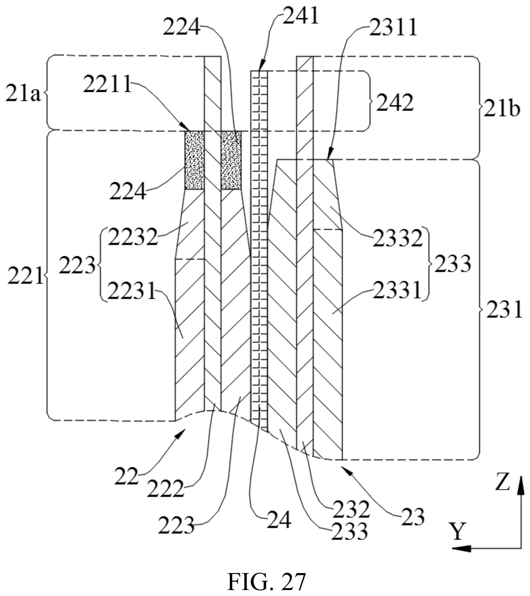

In some embodiments, with reference to FIGS. 27 and 28, the negative pole piece 23 includes a negative pole current collector 232 and a negative pole active material layer 233 provided on at least one side of the negative pole current collector 232, the negative pole active material layer 233 including a negative pole active material.

The negative pole active material layer 233 can be provided on only one side of the negative pole current collector 232, i.e., only one surface of the negative pole current collector 232 is provided with the negative pole active material layer 233 in the thickness direction; the negative pole active material layers 233 may be provided on both opposite sides of the negative pole current collector 232, i.e., the negative pole active material layers 233 may be provided on both opposite surfaces of the negative pole current collector 232 in the thickness direction.

The negative pole active material may include at least one of the following materials: synthetic graphite, natural graphite, soft carbon, hard carbon, a silicon-based material, a tin-based material, lithium titanate, and the like.

In some embodiments, with reference to FIGS. 27 and 28, the negative pole active material layer 233 includes a negative pole body part 2331 and a negative pole thinning part 2332, the negative pole body part 2331 and the negative pole thinning part 2332 are arranged in the first direction Z, and the negative pole body part 2331 is provided, at an end, adjacent to the end cover 12, of the negative pole thinning part 2332 in the first direction Z.

The thickness of the negative pole body part 2331 is greater than the thickness of the negative pole thinning part 2332. The negative pole thinning part 2332 may be provided at only one end of the negative pole body part 2331 adjacent to the end cover 12 in the first direction Z, or the negative pole thinning part 2332 may be provided at two ends of the negative pole body part 2331 in the first direction Z. The negative pole body part 2331 may be of an equal thickness structure or of an unequal thickness structure, and the negative pole thinning part 2332 may be of an equal thickness structure or of an unequal thickness structure. If at least one of the negative pole body part 2331 and the negative pole thinning part 2332 is of an unequal thickness structure, the maximum thickness of the negative pole thinning part 2332 may be less than or equal to the minimum thickness of the negative pole body part 2331, so that the thickness of the negative pole body part 2331 is greater than the thickness of the negative pole thinning part 2332.

As an example, the negative pole body part 2331 is of an equal thickness structure, and the thickness of the negative pole thinning part 2332 exhibits a decreasing trend in a direction from the negative pole body part 2331 toward the negative pole thinning part 2332.

In the present embodiment, the negative pole thinning part 2332 is provided at the end of the negative pole body part 2331 adjacent to the end cover 12, the electrode assembly 2 has a larger expansion gap in the area corresponding to the negative pole thinning part 2332, and the electrode assembly 2 exerts a smaller force on the first side wall part 111 in the area corresponding to the negative pole thinning part 2332 after expansion, which is advantageous for reducing the cracking of the housing 11.

In some embodiments, with reference to FIGS. 26 to 28, on the projection plane perpendicular to the second direction Y, the orthographic projection of the negative pole thinning part 2332 is spaced from the orthographic projection of the first inner surface 804 in the first direction Z.

It should be understood that on the projection plane perpendicular to the second direction Y, the orthographic projection of the negative pole thinning part 2332 at the end of the negative pole body part 2331 adjacent to the end cover 12 does not overlap with the orthographic projection of the first inner surface 804.

In the present embodiment, on the projection plane perpendicular to the second direction Y, the orthographic projection of the negative pole thinning part 2332 located at the end of the negative pole body part 2331 adjacent to the end cover 12 and the orthographic projection of the first inner surface 804 are spaced apart in the first direction Z, so that the influence of the negative pole thinning part 2332 on the corresponding part of the first side wall part 111 at the first inner surface 804 can be reduced, the expansion force exerted by the expansion of the electrode assembly 2 directly to the corresponding part of the first side wall part 111 at the first inner surface 804 can be reduced, and the possibility of cracking of the first side wall part 111 of the housing 11 can be further reduced.

In some embodiments, with reference to FIGS. 26 to 28, on the projection plane perpendicular to the second direction Y, a spacing dimension between the orthographic projection of the negative pole thinning part 2332 and the orthographic projection of the first inner surface 804 in the first direction Z is greater than or equal to 1 mm.

On the projection plane perpendicular to the second direction Y, a spacing dimension between the orthographic projection of the negative pole thinning part 2332 at the end of the negative pole body part 2331 adjacent to the end cover 12 and the orthographic projection of the first inner surface 804 in the first direction Z is W₁, W₁≥1 mm, which is the minimum distance in the first direction Z between the orthographic projection of both the negative pole thinning part 2332 and the first inner surface 804 on the projection plane perpendicular to the second direction Y. W₁ may take any discrete value of or any range value between two of 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, and the like.

In the present embodiment, W₁≥1mm is such that on the projection plane perpendicular to the second direction Y, the orthographic projection of the negative pole thinning part 2332 is further away from the orthographic projection of the first inner surface 804 in the first direction Z, further reducing the effect of the negative pole thinning part 2332 on the corresponding part of the first side wall part 111 at the first inner surface 804.

In some embodiments, the negative pole active material layer 233 has a single-sided coating weight of from 90 mg/1540 mm² to 170 mg/1540 mm².

The negative pole active material layer 233 has a single-sided coating weight which may take any discrete value of or any range value between two of 90 mg/1540 mm², 100 mg/1540 mm², 110 mg/1540 mm², 120 mg/1540 mm², 130 mg/1540 mm², 140 mg/1540 mm², 150 mg/1540 mm², 160 mg/1540 mm², 170 mg/1540 mm², and the like.

When measuring a single-sided coating weight the negative pole active material layer 233, the single-sided coated negative pole piece 23 can be taken (if it is the negative pole piece 23 coated on both sides, the negative pole active material layer 233 on one of the sides can be wiped off first), die-cut into small circular pieces with an area of S₁, and the weight of the small circular pieces is measured and denoted as M₁. Then, the negative pole active material layer 233 of the above-mentioned weighed negative pole piece 23 is wiped off, and the weight of the negative pole current collector 232 is measured and denoted as M₂. The negative pole active material layer 233 has a single-sided coating weight of (M₁-M₂)/S₁.

The negative pole active material layer 233 has a single-sided coating weight related to the expansion of the negative pole active material layer 233, the negative pole active material layer 233 has a single-sided coating weight in a range of from 90 mg/1540 mm² to 170 mg/1540 mm², which allows the high energy density requirement of the battery cell 10 and the low expansion requirement of the negative pole piece 23 to be combined to some extent, so that the influence of the expansion of the negative pole piece 23 on the first side wall part 111 can be reduced and the possibility of cracking of the first side wall part 111 of the housing 11 can be reduced.

In some embodiments, the negative pole active material layer 233 has a single-sided coating weight of from 110mg/1540 mm² to 150mg/1540 mm².

In the present embodiment, the negative pole active material layer 233 may have single-sided coating weight which takes any discrete value of or any range value between two of 110 mg/1540 mm², 115 mg/1540 mm², 120 mg/1540 mm², 125 mg/1540 mm², 130 mg/1540 mm², 135 mg/1540 mm², 140 mg/1540 mm², 145 mg/1540 mm², 150 mg/1540 mm², and the like.

In the present embodiment, the negative pole active material layer 233 has a single-sided coating weight of from 110 mg/1540 mm2 to 150 mg/1540 mm2, which makes it possible to further improve the energy density requirement of the battery cell 10 and to further slowdown the expansion of the negative pole piece 23.

In some embodiments, the negative pole piece 23 has a porosity of from 27% to 40%.

The porosity of the negative pole piece 23 may take any discrete value of or any range value between two of 27%, 28%, 29%, 30%, 31%, 32%, 33%, 34%, 35%, 36%, 37%, 38%, 39%, 40%, and the like.

The porosity of the negative pole piece 23 may be a percentage of the pore volume within the negative pole piece 23 to the total volume of the negative pole piece 23. As an example, when the battery cell 10 is in a 0% state of charge, a double-sided coated negative pole piece 23 is selected. The porosity of the negative pole piece 23 is measured using a true density analyzer AccuPyc II 1340 according to the Chinese National Standard GB/T 24586-2009.

In the present embodiment, the negative pole piece 23 has a porosity of 27% to 40%, which makes it possible to provide a space for impurities generated by the negative pole piece 23 due to side reactions, to slowdown the expansion of the negative pole piece 23, and to reduce the influence of the expansion of the negative pole piece 23 on the first side wall part 111.

In some embodiments, the negative pole active material includes a silicon-based material in which silicon is contained in the negative pole active material in an amount of 0.3% to 10% by mass, optionally 1% to 6% by mass.

The mass content of silicon element in the silicon-based material in the negative pole active material may take any discrete value of or any range value between two of 0.3%, 1%, 2%, 3%, 4%, 5%, 6%, 7%, 8%, 9%, 10%, and the like.

In some embodiments, the silicon-based material includes at least one of a silicon-oxygen compound and a silicon-carbon composite.

In some embodiments, with reference to FIGS. 27 and 28, the positive pole piece 22 includes a positive pole current collector 222 and a positive pole active material layer 223 provided on at least one side of the positive pole current collector 222, the positive pole active material layer 223 including a positive pole active material.

The positive pole active material layer 223 can be provided on only one side of the positive pole current collector 222, i.e., only one surface of the positive pole current collector 222 is provided with the positive pole active material layer 223 in the thickness direction; the positive pole active material layers 223 may be provided on both opposite sides of the positive pole current collector 222, i.e., the positive pole active material layers 223 may be provided on both opposite surfaces of the positive pole current collector 222 in the thickness direction.

The positive active material may include at least one of a lithium-containing phosphate, a lithium-transition metal oxide, and respective modified compounds thereof.

In some embodiments, with reference to FIGS. 27 and 28, the positive pole active material layer 223 includes a positive pole body part 2231 and a positive pole thinning part 2232, the positive pole body part 2231 and the positive pole thinning part 2232 are arranged in a first direction Z, and the positive pole body part 2231 is provided with the positive pole thinning part 2232 at an end thereof adjacent to the end cover 12 in the first direction Z.

The thickness of the positive pole body part 2231 is greater than the thickness of the positive pole thinning part 2232. The positive pole thinning part 2232 may be provided at only one end of the positive pole body part 2231 adjacent to the end cover 12 in the first direction Z, or the positive pole thinning part 2232 may be provided at two ends of the positive pole body part 2231 in the first direction Z. The positive pole body part 2231 may be of an equal thickness or of an unequal thickness, and the positive pole thinning part 2232 may be of an equal thickness or of an unequal thickness. If at least one of the positive pole body part 2231 and the positive pole thinning part 2232 is of an unequal thickness structure, the maximum thickness of the positive pole thinning part 2232 may be less than or equal to the minimum thickness of the positive pole body part 2231, so that the thickness of the positive pole body part 2231 is greater than the thickness of the positive pole thinning part 2232.

As an example, the positive pole body part 2231 is of an equal thickness structure, and the thickness of the positive pole thinning part 2232 exhibits a decreasing trend in a direction from the positive pole body part 2231 toward the positive pole thinning part 2232.

In the present embodiment, the positive thinning part 2232 is provided at the end of the positive pole body part 2231 adjacent to the end cover 12, the electrode assembly 2 has a larger expansion gap in the area corresponding to the positive thinning part 2232, and the electrode assembly 2 exerts a smaller force on the first side wall part 111 in the area corresponding to the positive thinning part 2232 after expansion, so that the possibility of cracking of the first side wall part 111 of the housing 11 can be reduced.

In some embodiments, with reference to FIGS. 26 to 28, on the projection plane perpendicular to the second direction Y, the orthographic projection of the positive thinning part 2232 is spaced from the orthographic projection of the first inner surface 804 in the first direction Z.

It should be understood that on the projection plane perpendicular to the second direction Y, the orthographic projection of the positive thinning part 2232 at the end of the positive pole body part 2231 adjacent to the end cover 12 does not overlap with the orthographic projection of the first inner surface 804.

On the projection plane perpendicular to the second direction Y, the orthographic projection of the positive thinning part 2232 located at the end of the positive pole body part 2231 adjacent to the end cover 12 and the orthographic projection of the first inner surface 804 are spaced apart in the first direction Z, so that the influence of the positive thinning part 2232 on the corresponding part of the first side wall part 111 at the first inner surface 804 can be reduced, the expansion force exerted by the expansion of the electrode assembly 2 directly to the corresponding part of the first side wall part 111 at the first inner surface 804 can be reduced, and the possibility of cracking of the first side wall part 111 of the housing 11 can be reduced.

In some embodiments, with reference to FIGS. 26 to 28, on the projection plane perpendicular to the second direction Y, a spacing dimension between the orthographic projection of the positive thinning part 2232 and the orthographic projection of the first inner surface 804 in the first direction Z is greater than or equal to 1 mm.

On the projection plane perpendicular to the second direction Y, a spacing dimension between the orthographic projection of the positive thinning part 2232 at the end of the positive pole body part 2231 adjacent to the end cover 12 and the orthographic projection of the first inner surface 804 in the first direction Z is W₂, W₂≥1 mm, which is the minimum distance in the first direction Z between the orthographic projection of both the positive thinning part 2232 and the first inner surface 804 on the projection plane perpendicular to the second direction Y. It may be that W₁=W₂; may also be W₁≤W₂; and may also be W₁≥W₂. W₂ may take any discrete value of or any range value between two of 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, and the like.

In the present embodiment, W₂≥1mm is such that on the projection plane perpendicular to the second direction Y, the orthographic projection of the positive thinning part 2232 is further away from the orthographic projection of the first inner surface 804 in the first direction Z, further reducing the effect of the positive thinning part 2232 on the first inner surface 804.

In some embodiments, the positive pole active material layer 223 has a single-sided coating weight of from 200 mg/1540 mm² to 370 mg/1540/mm².

The positive pole active material layer 223 has a single-sided coating weight which may take any discrete value of or any range value between two of 200 mg/1540mm², 210 mg/1540mm², 220 mg/1540mm², 230 mg/1540mm², 240 mg/1540mm², 250 mg/1540mm², 260 mg/1540mm², 270 mg/1540mm², 280 mg/1540mm², 290 mg/1540mm², 300 mg/1540mm², 310 mg/1540mm², 320 mg/1540mm², 330 mg/1540mm², 340 mg/1540mm², 350 mg/1540mm², 360 mg/1540mm², 370 mg/1540mm², and the like.

When measuring a single-sided coating weight the positive pole active material layer 223, the single-sided coated positive pole piece 22 can be taken (if it is the positive pole piece 22 coated on both sides, the positive pole active material layer 223 on one of the sides can be wiped off first), die-cut into small circular pieces with an area of S₂, and the weight of the small circular pieces is measured and denoted as M₃. Then, the positive pole active material layer 223 of the above-mentioned weighed positive pole piece 22 is wiped off, and the weight of the positive pole current collector 222 is measured and denoted as M₄. The positive pole active material layer 223 has a single-sided coating weight of (M₃-M₄)/S₂.

The positive pole active material layer 223 has a single-sided coating weight related to the expansion of the positive pole active material layer 223, the positive pole active material layer 223 has a single-sided coating weight in a range of from 200 mg/1540 mm² to 370 mg/1540 mm², which allows the high energy density requirement of the battery cell 10 and the low expansion requirement of the positive pole piece 22 to be combined to some extent, so that the influence of the expansion of the positive pole piece 22 on the first side wall part 111 can be reduced and the possibility of cracking of the first side wall part 111 of the housing 11 can be reduced.

In some embodiments, the positive pole active material layer 223 has a single-sided coating weight of from 240 mg/1540 mm² to 330 mg/1540 mm².

The positive pole active material layer 223 has a single-sided coating weight which may take any discrete value of or any range value between two of 240 mg/1540mm², 245 mg/1540mm², 250 mg/1540mm², 255 mg/1540mm², 260 mg/1540mm², 265 mg/1540mm², 270 mg/1540mm², 275 mg/1540mm², 280 mg/1540mm², 285 mg/1540mm², 290 mg/1540mm², 295 mg/1540mm², 300 mg/1540mm², 305 mg/1540mm², 310 mg/1540mm², 315 mg/1540mm², 320 mg/1540mm², 325 mg/1540mm², 330 mg/1540mm², and the like.

In the present embodiment, the positive pole active material layer 223 has a single-sided coating weight of from 240 mg/1540 mm² to 330 mg/1540 mm², which makes it possible to further improve the energy density requirement of the battery cell 10 and to further slowdown the expansion of the positive pole piece 22.

In some embodiments, the positive pole active material is a lithium-containing phosphate.

In some embodiments, with reference to FIGS. 14, 30, and 31, the housing 11 includes a material of steel. The maximum distance between the second inner surface 805 and the second outer surface 807 in the second direction Y is D₁ and the dimension of the housing 11 in the second direction Y is D, and 0.001≤D₁/D≤0.012.

As an example, respective locations on the second inner surface 805 are at equal distances from the second outer surface 807 in the second direction Y, and the distance between any location on the second inner surface 805 and the second outer surface 807 in the second direction Y may be taken as the maximum distance between the second inner surface 805 and the second outer surface 807 in the second direction Y.

As an example, respective locations on the second inner surface 805 may be at unequal distances from the second outer surface 807 at in the second direction Y.

In the present embodiment, the first inner surface 804 may be partially more adjacent to the electrode assembly 2 in the second direction Y with respect to the second inner surface 805, or the first outer surface 806 may be partially further from the electrode assembly 2 in the second direction Y with respect to the second outer surface 807. As an example, with reference to FIGS. 29 and 30, the first outer surface 806 may be partially further from the electrode assembly 2 in the second direction Y with respect to the second outer surface 807, and the first inner surface 804 is coplanar with the second inner surface 805.

The maximum distance between the second outer surfaces 807 corresponding to both the oppositely arranged first side wall parts 111 of the housing 11 defines the dimension of the housing 11 in the second direction Y. It is to be understood that when measuring the dimension of the housing 11 in the second direction Y, the measurement reference is the second outer surface 807 of the first side wall part 111. As an example, the second outer surfaces 807 of both the oppositely provided first side wall parts 111 are provided in parallel.

For the housing 11 made of steel, D₁/D may take any discrete value of or any range value between two of 0.001, 0.002, 0.003, 0.004, 0.005, 0.006, 0.007, 0.008, 0.009, 0.01, 0.011, 0.012, and the like.

For the housing 11 made of steel, D₁/D≥0.001, a ratio of the distance between the second inner surface 805 and the second outer surface 807 in the second direction Y relative to the total thickness of housing 11 is increased, so that the corresponding part of the first side wall part 111 on the second inner surface 805 has sufficient strength to meet the strength requirement of the housing 11; D₁/D≤0.012, a ratio of the distance between the second inner surface 805 and the second outer surface 807 in the second direction Y relative to the total thickness of the housing 11 is reduced, and in the housing where the volume of the housing 11 is constant, the inner space of the housing 11 can be increased, thereby making more space for the electrode assembly 2, so as to satisfy the requirement of the volumetric energy density of the battery cell 10.

In the embodiments of the present application, for the housing 11 made of steel, since it is necessary to control D₁/D below 0.012 in order to satisfy the requirement of the volumetric energy density of the battery cell 10, the first side wall part 111 of the housing 11 is reinforced by the first side wall part 111 at the corresponding thick part of the first inner surface 804, thereby reducing the possibility of cracking of the first side wall part 111 of the housing 11.

In some embodiments, with reference to FIGS. 14 and 30, the housing 11 includes a material of steel. The maximum distance between the second inner surface 805 and the second outer surface 807 in the second direction Y is D₁, 0.08mm≤Di≤0.35mm; and/or the maximum distance between the first inner surface 804 and the first outer surface 806 in the second direction Y is D₂, 0.1mm≤D₂≤0.6mm.

It should be understood that the maximum distance between the second inner surface 805 and the second outer surface 807 is smaller than the minimum distance between the first inner surface 804 and the first outer surface 806, and therefore, the maximum distance between the second inner surface 805 and the second outer surface 807 is smaller than the maximum distance between the first inner surface 804 and the first outer surface 806. That is, D₁<D₂.

For the housing 11 made of steel, D₁ can take any discrete value of or any range value between two of 0.08mm, 0.1mm, 0.12mm, 0.15mm, 0.18mm, 0.2mm, 0.22mm, 0.25mm, 0.28mm, 0.3mm, 0.32mm, 0.35mm, and the like.; D₂ can take any discrete value of or any range value between two of 0.1 mm, 0.15 mm, 0.2 mm, 0.25 mm, 0.3 mm, 0.35 mm, 0.4 mm, 0.45 mm, 0.5 mm, 0.55 mm and 0.6 mm, and the like.

In the embodiments of the present application, for the housing 11 made of steel, if the maximum distance between the second inner surface 805 and the second outer surface 807 in the second direction Y is set to be 0.08 mm to 0.35 mm, it is possible to satisfy both the strength requirement of the part of the first side wall part 111 corresponding to the second inner surface 805 and the requirement for the volumetric energy density of the battery cell 10. If the maximum distance between the first inner surface 804 and the first outer surface 806 in the second direction Y is set to 0.1 mm to 0.6 mm, the part of the first side wall part 111 corresponding to the first inner surface 804 is effectively reinforced.

In some embodiments, with reference to FIGS. 14, 30, and 31, the housing 11 includes a material of an aluminum alloy. The maximum distance between the second inner surface 805 and the second outer surface 807 in the second direction Y is D₁, and the dimension of the housing 11 in the second direction Y is D, 0.005≤Dᵢ/D≤0.065.

For the housing 11 made of an aluminum alloy, D₁/D may take any discrete value of or any range value between two of 0.005, 0.01, 0.015, 0.02, 0.025, 0.03, 0.035, 0.04, 0.045, 0.05, 0.055, 0.06, 0.65, and the like.

For the housing 11 made of aluminum alloy, D₁/D≥0.005, a ratio of the distance between the second inner surface 805 and the second outer surface 807 relative to the total thickness of housing 11 is increased, so that the corresponding part of the first side wall part 111 on the second inner surface 805 has sufficient strength to meet the strength requirement of the housing 11; D₁/D≤0.065, a ratio of the distance between the second inner surface 805 and the second outer surface 807 relative to the total thickness of the housing 11 is reduced, and in the housing where the volume of the housing 11 is constant, the inner space of the housing 11 can be increased, thereby making more space for the electrode assembly 2, so as to satisfy the requirement of the volumetric energy density of the battery cell 10.

For the housing 11 made of the aluminum alloy, since it is necessary to control the ratio D1/D below 0.065 in order to satisfy the requirement of the volumetric energy density of the battery cell 10, the first side wall part 111 of the housing 11 is reinforced by the thicker part of the first side wall part 111 at the first inner wall part, thereby reducing the possibility cracking of the housing 11.

In some embodiments, with reference to FIGS. 14 and 30, the housing 11 includes a material of an aluminum alloy. The maximum distance between the second inner surface 805 and the second outer surface 807 in the second direction Y is D₁, 0.4mm≤D₁≤0.8mm; and/or the maximum distance between the first inner surface 804 and the first outer surface 806 in the second direction Y is D₂, 0.5mm≤D₂≤1.5mm.

For the housing 11 made of an aluminum alloy, D₁ can take any discrete value of or any range value between two of 0.4 mm, 0.42 mm, 0.45 mm, 0.48 mm, 0.5 mm, 0.52 mm, 0.55 mm, 0.58 mm, 0.6 mm, 0.62 mm, 0.65 mm, 0.68 mm, 0.7 mm, 0.72 mm, 0.75 mm, 0.78 mm and 0.8 mm, and the like.; D₂ can take any discrete value of or any range value between two of 0.5 mm, 0.6 mm, 0.7 mm, 0.8 mm, 0.9 mm, 1 mm, 1.1 mm, 1.2 mm, 1.3 mm, 1.4 mm, 1.5 mm, and the like.

For the housing 11 made of an aluminum alloy, if the maximum distance between the second inner surface 805 and the second outer surface 807 in the second direction Y is set to be 0.4 mm to 0.8 mm, it is possible to satisfy both the strength requirement of the part of the first side wall part 111 corresponding to the second inner surface 805 and the requirement for the volumetric energy density of the battery cell 10. If the maximum distance between the first inner surface 804 and the first outer surface 806 in the second direction Y is set to 0.5mm to 1.5mm, the part of the first side wall part 111 corresponding to the first inner surface 804 has sufficient strength.

In some embodiments, the aluminum alloy includes the following components in the following percentages by mass: aluminum≥99.6%, copper≤0.05%, iron≤0.35%, magnesium≤0.03%, manganese≤0.03%, silicon≤0.25%, titanium≤0.03%, vanadium≤0.05%, zinc≤0.05%, other individual elements≤0.03%. Such aluminum alloy has a good processing and molding property, which facilitates the molding of the housing 11.

In some embodiments, the aluminum alloy includes the following components in the following percentages by mass: aluminum≥96.7%, 0.05%≤copper≤0.2%, iron≤0.7%, manganese≤1.5%, silicon≤0.6%, zinc≤0.1%, other individual element composition≤0.05%, total composition of other elements≤0.15%. Such aluminum alloy has good processing and molding properties and corrosion resistance.

In some embodiments, with reference to FIGS. 6, 26, 29, 32, 34, and 36, the first area 1111 is directly connected to the first connecting part 51, and the first inner surface 804 extends in the first direction Z to an end of the first area 1111 facing the connecting part 5.

The first area 1111 and the first connecting part 51 may be in point contact, line contact, or surface contact to achieve direct connection of the two.

In the present embodiment, the first area 1111 is directly connected to the first connecting part 51, so that the first area 1111 is more adjacent to the first connecting part 51 in the first direction Z, and it is advantageous for reducing the possibility of cracking of the first connecting part 51 by releasing the expansion force of the electrode assembly 2 by the first area 1111 adjacent to the first connecting part 51.

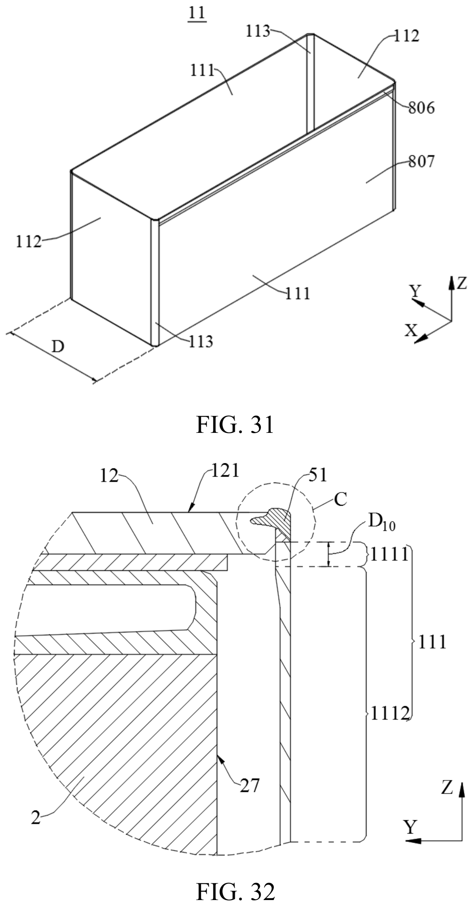

In some embodiments, with reference to FIGS. 32 to 37, the first side wall part 111 further includes a first transition area 1117, the first transition area 1117 is connected to an end of the first area 1111 away from the second area 1112 in the first direction Z, the first transition area 1117 is connected to the first connecting part 51, and the connection location of the first transition area 1117 and the first connecting part 51 forms a first connecting interface 511, the first connecting interface 511 has a first location 5111 most adjacent to the first area 1111 in the first direction Z, and the first location 5111 is located at an end of the first area 1111 away from the second area 1112 in the first direction Z.

The first transition area 1117 may be a part where the first side wall part 111 is connected between the first connecting part 51 and the first area 1111. The first transition area 1117 may be of an equal-thickness structure or of an unequal-thickness structure. The thickness of the first transition area 1117 may be less than the thickness of the first area 1111. As an example, with reference to FIGS. 32 to 37, the thickness of the first transition area 1117 gradually decreases in the direction from the second area 1112 toward the first area 1111.

The first connecting interface 511 is formed at a connection location where the first transition area 1117 and the first connecting part 51 are connected, and the first transition area 1117 and the first connecting part 51 are demarcated at the first connecting interface 511. The first connecting interface 511 may be a flat surface or a curved surface.

The first area 1111 and the first transition area 1117 are demarcated by a first interface U, the first interface U is an imaginary plane, the first interface U passes through a first location 5111, the first interface U is perpendicular to a first direction Z, the first transition area 1117 and the first connecting part 51 are located above the first interface U, and the first area 1111 is located below the first interface U.

In the present embodiment, the first transition area 1117 is connected to the first connecting part 51 to form the first connecting interface 511, such that the first transition area 1117 has a sufficiently large contact area with the first connecting part 51 to improve the security of the first side wall part 111 after being welded to the end cover 12.

In some embodiments, with reference to FIGS. 32 to 37, at least some of the first connecting interfaces 511 extends obliquely with respect to the second direction Y.

The first connecting interface 511 may extend as a whole obliquely with respect to the second direction Y, or the first connecting interface 511 may extend as a part obliquely with respect to the second direction Y.

It should be understood that the extension direction of the part of the first connecting interface 511 that extends obliquely with respect to the second direction Y is not parallel to the second direction Y.

After the end cover 12 and the first side wall part 111 are welded, the first connecting part 51 shrinks as it solidifies, and the first connecting part 51 exerts a tensile stress on the first transition area 1117. When the first side wall part 111 is subjected to an expansion force of the electrode assembly 2, the first side wall part 111 is deformed, and the first transition area 1117 generates a tensile stress to the first connecting part 51. Since the first connecting interface 511 extends at least partially obliquely with respect to the second direction Y, in the vicinity of the part where the first connecting interface 511 extends obliquely with respect to the second direction Y, the tensile stress exerted on the first transition area 1117 by the first connecting part 51 due to shrinkage is not collinear with the tensile stress exerted on the first connecting part 51 by the first transition area 1117 due to deformation of the first side wall part 111, reducing the risk of fatigue cracking of the area where the first transition area 1117 is located in the vicinity of the first connecting interface 511.

In some embodiments, with reference to FIGS. 32 to 37, the first connecting interface 511 includes a first interface 5112 that extends obliquely from the first location 5111 toward the end cover 12, and at least part of the first transition area 1117 is located between the first interface 5112 and the end cover 12 in the second direction Y.

It should be understood that the first interface 5112 extends obliquely with respect to the second direction Y. The first interface 5112 may be a flat surface or a curved surface.

The first location 5111 is the lowest location (most adjacent to the first area 1111) of the first interface 5112 that extends obliquely from the first location 5111 toward the end cover 12, i.e., the first interface 5112 extends obliquely upward from the first location 5111 toward the end cover 12.

In the second direction Y, the first transition area 1117 may be located entirely between the first interface 5112 and the end cover 12, or the first transition area 1117 may be located only partially between the first interface 5112 and the end cover 12.

In the present embodiment, in the second direction Y, at least part of the first transition area 1117 is located between the first interface 5112 and the end cover 12, such that the first connecting part 51 protects the first transition area 1117, when the first side wall part 111 is subjected to an expansion force of the electrode assembly 2, the deformation of the first transition area 1117 during the application of the force is blocked by the first connecting part 51 to reduce the possibility of fatigue cracking of the area of the first transition area 1117 located adjacent to the first interface 5112.

In some embodiments, with reference to FIGS. 32 to 37, the first interface 5112 is connected to the first outer surface 806 at a first location 5111, and the first location 5111 is at least partially located in the first area 1111.

As an example, the first interface 5112 intersects with the first outer surface 806 at a first line that extends in the third direction X at a first location 5111. The first interface 5112 is connected to the inner surface of the first transition area 1117 at a third location 5114, in the first direction Z, the third location 5114 is further away from the first area 1111 than the first location 5111. The first transition area 1117 is generally triangular in shape.

In the present embodiment, the first interface 5112 is connected to the first outer surface 806 at the first location 5111, and the first location 5111 is located in the first area 1111, so that the first outer surface 806 extends to an end of the first area 1111 facing the first connecting part 51 in the first direction Z, and the corresponding part of the first side wall part 111 on the first outer surface 806 can better reinforce the end of the first area 1111 facing the first connecting part 51 to reduce the possibility of fatigue cracking of the end of the first area 1111 facing the first connecting part 51.

In some embodiments, with reference to FIGS. 32 to 37, the first connecting interface 511 includes a second interface 5113 that extends obliquely away from the end cover 12 from the first location 5111, in a second direction Y, at least part of the first transition area 1117 is located on a side of the second interface 5113 facing away from the end cover 12.

It should be understood that the second interface 5113 extends obliquely with respect to the second direction Y. The second interface 5113 may be a flat surface or a curved surface. In the second direction Y, at least part of the first connecting part 51 is located between the second interface 5113 and the end cover 12.

The first location 5111 is the lowest location (most adjacent to the first area 1111) of the second interface 5113 that extends obliquely away from the end cover 12 from the first location 5111, i.e., the second interface 5113 extends obliquely upward away from the end cover 12 from the first location 5111.

In the second direction Y, the first transition area 1117 may be located entirely on a side, facing away from the end cover 12, of the second interface 5113, or the first transition area 1117 may be located only partially on a side, facing away from the end cover 12, of the second interface 5113.

In the present embodiment, in the second direction Y, at least part of the first transition area 1117 is located on a side, facing away from the end cover 12, of the second interface 5113, such that the first transition area 1117 acts as a restraint to the first connecting part 51 to reduce the possibility of the first connecting part 51 falling off.

In some embodiments, with reference to FIGS. 32 to 37, the second interface 5113 is connected to the first inner surface 804 at a first location 5111, and the first location 5111 is at least partially located in the first area 1111.

As an example, the second interface 5113 intersects with the first inner surface 804 at a first straight line that extends in the third direction X at a first location 5111. The second interface 5113 is connected to an outer surface of the first transition area 1117 at a fourth location 5115, in the first direction Z, the fourth location 5115 is further away from the first area 1111 than the first location 5111. The first transition area 1117 is generally triangular in shape.

In the present embodiment, the second interface 5113 is connected to the first inner surface 804 at the first location 5111, and the first location 5111 is at least partially located in the first area 1111, so that the first inner surface 804 extends to an end of the first area 1111 facing the first connecting part 51 in the first direction Z, and the corresponding part of the first side wall part 111 on the first inner surface 804 can better reinforce the end of the first area 1111 facing the first connecting part 51 to reduce the possibility of fatigue cracking of the end of the first area 1111 facing the first connecting part 51.

In some embodiments, with reference to FIGS. 32 to 37, the first connecting interface 511 includes a first interface 5112 that extends obliquely from the first location 5111 toward the end cover 12 and a second interface 5113 that extends obliquely from the first location 5111 away from the end cover 12, in a second direction Y, a part of the first transition area 1117 is located between the first interface 5112 and the end cover 12 and another part of the first transition area 1117 is located on a side, away from the end cover 12, of the second interface 5113.

As an example, the first interface 5112 is connected to an inner surface of the first transition area 1117 at a third location 5114, and the second interface 5113 is connected to an outer surface of the first transition area 1117 at a fourth location 5115.

In some embodiments, the hardness of the first transition area 1117 is less than the hardness of the second area 1112; and/or the hardness of the first transition area 1117 is less than the hardness of the first connecting part 51.

As an example, the hardness of the second area 1112 is less than the hardness of the first connecting part 51.

As an example, the type of hardness of the first transition area 1117, the type of hardness of the first area 1111, the type of hardness of the second area 1112, and the type of hardness of the first connecting part 51 are all Vickers hardnesses.

If the hardness of the first transition area 1117 is less than the hardness of the second transition area 1112, so that the first transition area 1117 having a lower hardness is connected to the first connecting part 51, the rigid pull between the first side wall part 111 and the first connecting part 51 when the first side wall part 111 is deformed can be alleviated, and the possibility of the first side wall part 111 separating from the first connecting part 51 can be reduced. If the hardness of the first transition area 1117 is less than the hardness of the first connecting part 51, the first transition area 1117 is more likely to deform than the first connecting part 51, so that the rigid pull between the first side wall part 111 and the first connecting part 51 when the first side wall part 111 is deformed can be alleviated, and the possibility of the first side wall part 111 separating from the first connecting part 51 can be reduced.

In some embodiments, with reference to FIGS. 32 to 37, the first connecting interface 511 is more adjacent to the second area 1112 than the outer surface 121 of the end cover.

In a first direction Z, the surface of the end cover 12 facing away from the electrode assembly 2 is the outer surface 121 of the end cover.

With reference to FIGS. 32 to 37, in the first direction Z, the third location 5114 and the first location 5111 are both more adjacent to the second area 1112 than the outer surface 121 of the end cover.

With reference to FIGS. 32 to 37, in the first direction Z, the fourth location 5115 and the first location 5111 are both more adjacent to the second area 1112 than the outer surface 121 of the end cover.

With reference to FIGS. 32 to 37, in the first direction Z, the third location 5114, the fourth location 5115, and the first location 5111 are each more adjacent to the second area 1112 than the outer surface 121 of the end cover.

In the present embodiment, the first connecting interface 511 is more adjacent to the second area 1112 in the first direction Z than the outer surface 121 of the end cover, so that the first connecting part 51 can sink deeper into the first side wall part 111, and the connection strength of the first side wall part 111 with the end cover 12 can be effectively improved.

In some embodiments, with reference to FIGS. 7, 15, 16, 18, 19, 22, 23, 31, 38, and 39, the housing 11 further includes a second side wall part 112 and a corner wall 113, the first side wall part 111, the corner wall 113 and the second side wall part 112 being arranged in a circumferential direction of the opening, the corner wall 113 connecting the first side wall part 111 and the second side wall part 112.

The second side wall part 112 and the end cover 12 may be welded to form a third connecting part 5, and the first connecting part 51 and the third connecting part 5 are both part of the connecting part 5. The second side wall part 112 may be of an equal thickness structure or of an unequal thickness structure.

The first side wall part 111 is indirectly connected to the second side wall part 112 in the housing 11 by a corner wall 113, and the sum of the number of the first side walls part 111 and the second side wall parts 112 is equal to the number of the corner walls 113.

As an example, the first side wall part 111, the second side wall part 112, and the corner wall 113 are integrally formed. The cross-section of the outer surface and/or the inner surface of the corner wall 113 may be in the shape of a circular arc, and the cross-section is perpendicular to the first direction Z.

In the present embodiment, the first side wall part 111 is connected to the second side wall part 112 by the corner wall 113, so that the first side wall part 111 can be transitioned to the second side wall part 112 through the corner wall 113, and the risk of stress concentration of the housing 11 at the corner location can be effectively reduced.

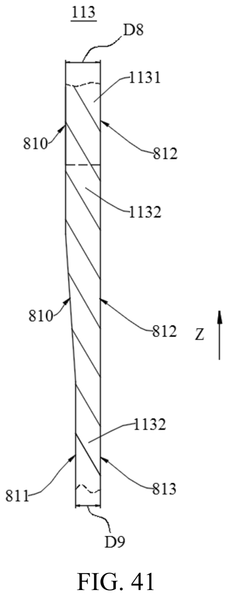

In some embodiments, with reference to FIGS. 38 to 42, the corner wall 113 is welded to the end cover 12 to form the second connecting part 52. The corner wall 113 includes a third area 1131 and a fourth area 1132 arranged in the first direction Z, the hardness of the third area 1131 is less than the hardness of the fourth area 1132, and the third area 1131 is located between the fourth area 1132 and the second connecting part 52.

The third area 1131 is located between the fourth area 1132 and the second connecting part 52, and the third area 1131 having a lower hardness is more adjacent to the second connecting part 52 than the fourth area 1132.

The third area 1131 and the second connecting part 52 may be directly connected.

The third area 1131 and the fourth area 1132 may be directly connected or indirectly connected.

The second connecting parts 52 may correspond to the corner wall 113 on a one-to-one basis, and the second connecting part 52 is a part formed with a weld mark from welding the end cover 12 and the corner wall 113, and may be a second connecting part 52 formed from welding to fuse the end cover 12 and the corner wall 113. A part of the second connecting part 52 is formed on the end cover 12, and another part of the second connecting part 52 is formed on the corner wall 113. The corner wall 113 and the end cover 12 may form the second connecting part 52 by stitch welding, or may form the second connecting part 52 by penetration welding. Both the second connecting part 52 and the first connecting part 51 are part of the connecting part 5.

As an example, the hardness of the third area and the hardness of the fourth area are both be Vickers hardness.

As an example, the hardness of the second connecting part is Vickers hardness.

In the embodiments of the present application, the lower hardness of the third area 1131 causes the third area 1131 to have a higher toughness, and releasing the partial expansion force of the electrode assembly 2 against the corner wall 113 by the higher toughness of the third area 1131 is advantageous for reducing the possibility of cracking of the corner wall 113 at the second connecting part 52 of the second side wall part 112.

It should be noted that the lower hardness of the third area 1131 causes the third area 1131 to have a higher toughness, and the third area 1131 with a higher toughness may generate fatigue cracking under the periodic expansion force of the repeated expansion and contraction of the electrode assembly 2.

In some embodiments, with reference to FIGS. 38 to 42, the corner wall 113 has a third inner surface 810 and a fourth inner surface 811 that face toward the electrode assembly 2 and a third outer surface 812 and a fourth outer surface 813 that face away from the electrode assembly 2, the third inner surface 810 and the fourth inner surface 811 are successively connected in a direction from the end cover 12 toward the electrode assembly 2, the third inner surface 810 and the third outer surface 812 are at least partially formed in the third area 1131, and the fourth inner surface 811 and the fourth outer surface 813 are at least partially formed in the fourth area 1132, a distance between the third inner surface 810 and the third outer surface 812 in the thickness direction of the corner wall 113 is larger than a distance between the fourth inner surface 811 and the fourth outer surface 813 in the thickness direction of the corner wall 113.

Respective locations on the third inner surface 810 may be at equal or unequal distances from the third outer surface 812 in the thickness direction of the corner wall 113. Respective locations on the fourth inner surface 811 may be at equal or unequal distances from the third outer surface 812 in the thickness direction of the corner wall 113. When respective locations on the third inner surface 810 in the thickness direction of the corner wall 113 is at an unequal distance from the third outer surface 812, or respective locations on the fourth inner surface 811 in the thickness direction of the corner wall 113 is at an unequal distance from the third outer surface 812, the minimum distance between the third inner surface 810 in the thickness direction of the corner wall 113 and the third outer surface 812 is greater than the maximum distance between the fourth inner surface 811 in the thickness direction of the corner wall 113 and the fourth outer surface 813 to achieve the distance between the third inner surface 810 and the third outer surface 812 in the thickness direction of the corner wall 113 being greater than the distance between the fourth inner surface 811 and the fourth outer surface 813 in the thickness direction of the corner wall 113.

The third inner surface 810 is more adjacent to the electrode assembly 2 in the thickness direction of the corner wall 113 with respect to the fourth inner surface 811, and/or the third outer surface 812 is further from the electrode assembly 2 in the thickness direction of the corner wall 113 with respect to the fourth outer surface 813. With reference to FIGS. 38 to 41, the third inner surface 810 is more adjacent to the electrode assembly 2 in the thickness direction of the corner wall 113 with respect to the fourth inner surface 811, and the third outer surface 812 and the fourth outer surface 813 are coplanar. With reference to the drawing, the third outer surface 812 is further away from the electrode assembly 2 in the thickness direction of the corner wall 113 with respect to the fourth outer surface 813, and the third inner surface 810 and the fourth inner surface 811 are coplanar.

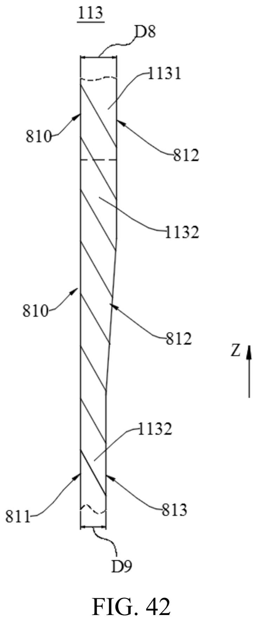

As an example, with reference to FIG. 42, the third inner surface 810 has a distance D₈ from the third outer surface 812 in the thickness direction of the corner wall 113, and the fourth inner surface 811 has a distance D₉ from the fourth outer surface 813 in the thickness direction of the corner wall 113, where D₈> D₉.

In the embodiments of the present application, the distance between the third inner surface 810 in the thickness direction of the corner wall 113 and the third outer surface 812 is greater than the distance between the fourth inner surface 811 in the thickness direction of the corner wall 113 and the fourth outer surface 813, the thickness of the corner wall 113 at the part corresponding to the third inner surface 810 is greater, and the third inner surface 810 and the third outer surface 812 are at least partially formed in the first area 1131, so that the part of the corner wall 113 at the part corresponding to the greater thickness of the third inner surface 810 can reinforce the third area 1131 having higher toughness, which is advantageous for restraining fatigue cracking of the third area 1131, and improving the service life of the battery cell 10.

In some embodiments, with reference to FIGS. 38 and 39, the third area 1131 is directly connected to the first area 1111, the third inner surface 810 extends to an end of the third area 1131 facing the first area 1111, and the first inner surface 804 extends to an end of the first area 1111 facing the third area 1131.

As an example, the third area 1131 is formed integrally with the first area 1111, and the third area 1131 is connected to two ends of the first area 1111 in the third direction X.

In the embodiments of the present application, the third inner surface 810 extends to the end of the third area 1131 facing the first area 1111, the first inner surface 804 extends to the end of the first area 1111 facing the third area 1131, the part of the first side wall part 111 at the first inner surface 804 and the part of the corner wall 113 at the third inner surface 810 are integrally connected, and the part of the first side wall part 111 at the first inner surface 804 and the part of the corner wall 113 at the third inner surface 810 have mutually reinforcing action, so that the part of the first side wall part 111 at the first inner surface 804 and the part of the corner wall 113 at the third inner surface 810 are both better reinforced to reduce the possibility of cracking of the housing 11. Since the first inner surface 804 and the first outer surface 806 are at least partially formed in the first area 1111, and the third inner surface 810 and the third outer surface 812 are at least partially formed in the third area 1131, the part of the first side wall part 111 at the first inner surface 804 and the part of the corner wall 113 at the third inner surface 810 can also have a synergistic effect on the first area 1111 and the third area 1131, thereby reinforcing the first area 1111 and the third area 1131 and reducing the possibility of fatigue cracking of the first area 1111 and the third area 1131.

In some embodiments, with reference to FIGS. 38 and 39, the corner wall 113 has a first connecting end 1133 and a second connecting end 1134, the first side wall part 111 is connected to the first connecting end 1133, the second side wall part 112 is connected to the second connecting end 1134, the distance between the third inner surface 810 and the third outer surface 812 in the thickness direction of the corner wall 113 is a fourth preset thickness, and the fourth preset thickness exhibits a decreasing trend in a direction from the first connecting end 1133 toward the second connecting end 1134.

As an example, the fourth preset thickness gradually decreases in the direction from the first connecting end 1133 toward the second connecting end 1134, the second side wall part 112 is of an equal thickness structure, the third inner surface 810 connects the first inner surface 804 with the inner surface of the second side wall part 112, and the third outer surface 812 connects the first outer surface 806 with the outer surface of the second side wall part 112.

When the first side wall part 111 is subjected to the expansion force of the electrode assembly 2 in the second direction Y, deformation of the first side wall part 111 may cause deformation of the corner wall 113, in the circumferential direction of the opening, the closer the corner wall 113 is to the first side wall part 111, the greater the influence of the first side wall part 111 is, and the greater the amount of deformation is in the area where the corner wall 113 is more adjacent to the first side wall part 111. The fourth preset thickness exhibits a decreasing trend in a direction from the first connecting end 1133 toward the second connecting end 1134, so that the third area 1131 has greater strength in an area adjacent to the first side wall part 111 in the circumferential direction of the opening to reduce the possibility of cracking of the third area 1131 having a lower hardness toward one end of the first side wall part 111. In the housing where the third area 1131 having higher toughness is reinforced, the material consumption for the corner wall 113 at the corresponding part of the third inner surface 810 is reduced, thereby reducing the production cost.

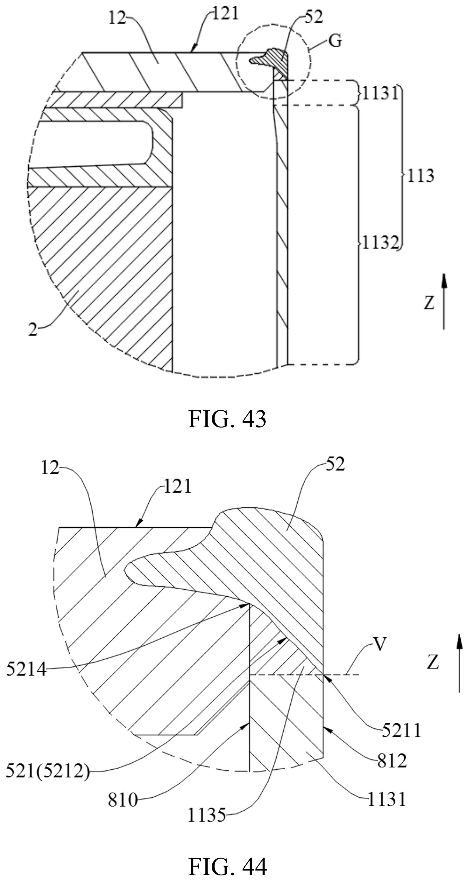

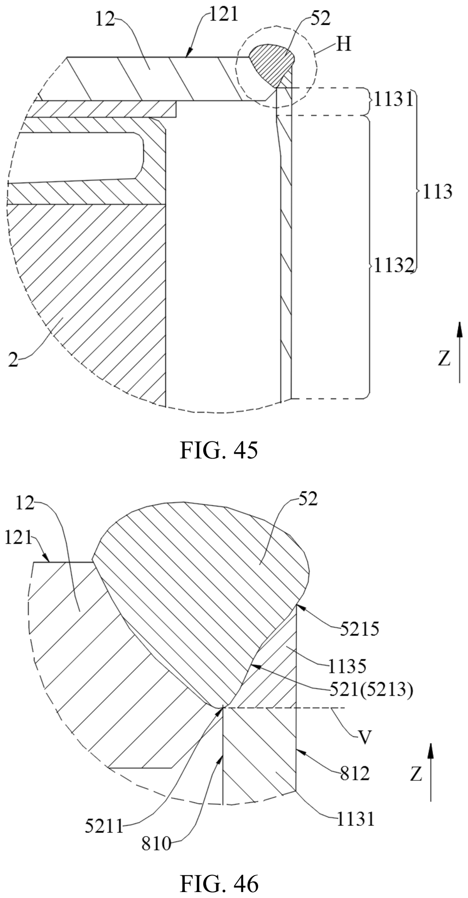

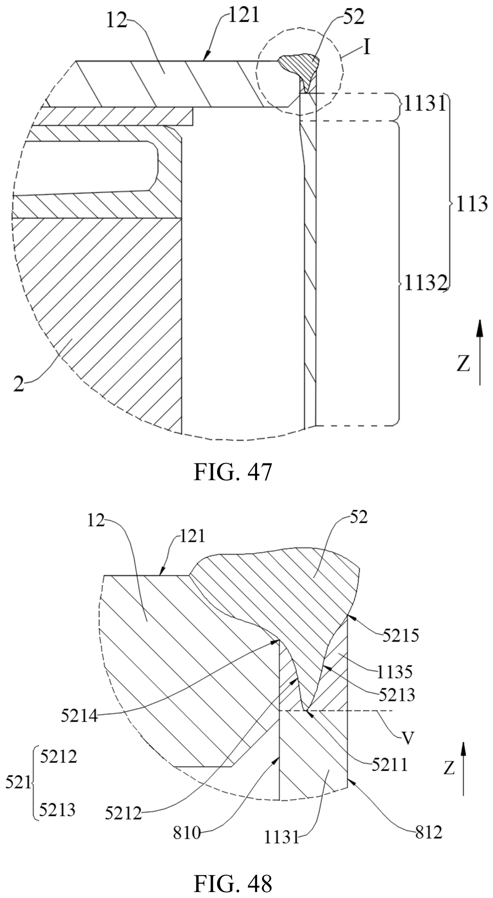

In some embodiments, with reference to FIGS. 38 to 40, and also to FIGS. 44, 46, and 48, the third area 1131 is directly connected to the second connecting part 52, and the third inner surface 810 extends to an end of the third area 1131 facing the second connecting part 52.

The third area 1131 and the second connecting part 52 may be in point contact, line contact, or surface contact to achieve direct connection of the two.

In the present embodiment, the third area 1131 is directly connected to the second connecting part 52, and the third inner surface 810 extends to an end of the third area 1131 facing the second connecting part 52, so that an end of the third area 1131 facing the second connecting part 52, which is higher in toughness, is better reinforced, which is advantageous for reducing the possibility of fatigue cracking at an end of the third area 1131 facing the second connecting part 52.

In some embodiments, with reference to FIGS. 43 to 48, the corner wall 113 further includes a second transition area 1135, the second transition area 1135 is connected to an end of the third area 1131 away from the fourth area 1132 in the first direction Z, and the second transition area 1135 is connected to the second connecting part 52, the connection location of the second transition area 1135 and the second connecting part 52 forms a second connecting interface 521, the second connecting interface 521 has a second location 5211 most adjacent to the third area 1131 in the first direction Z, the second location 5211 is located at an end of the third area 1131 away from the fourth area 1132 in the first direction Z.

The second transition area 1135 may be a part where the corner wall 113 is connected between the second connecting part 52 and the third area 1131. The second transition area 1135 may be of an equal thickness or of an unequal thickness structure. The thickness of the second transition area 1135 may be smaller than the distance between the third inner surface 810 and the third outer surface 812 in the thickness direction of the corner wall 113. As an example, in the embodiment shown in FIGS. 43 to 48, the thickness of the second transition area 1135 gradually decreases in the direction from the fourth area 1132 toward the third area 1131.

The second connecting interface 521 is formed at a connection location of the second transition area 1135 and the second connecting part 52, and the second transition area 1135 and the second connecting part 52 are demarcated at the second connecting interface 521. The second connecting interface 521 may be a flat surface or a curved surface.

The third area 1131 and the second transition area 1135 are demarcated by a second interface V, the second interface V is an imaginary plane, the second interface V passes through a second location 5211, the second interface V is perpendicular to the first direction Z, the second transition area 1135 and the second connecting part 52 are located above the second interface V, and the third area 1131 is located below the second interface V.

In the present embodiment, the second transition area 1135 is connected to the second connecting part 52 to form a second connecting interface 521, such that the second transition area 1135 has a sufficiently large contact area with the second connecting part 52 to improve the security of the corner wall 113 after being welded to the end cover 12.

In some embodiments, with reference to FIGS. 43 to 48, at least part of the second connecting interface 521 extends obliquely with respect to the thickness direction of the corner wall 113.

The second connecting interface 521 may extend obliquely as a whole with respect to the thickness direction of the corner wall 113, or the second connecting interface 521 may extend obliquely as a part with respect to the thickness direction of the corner wall 113.

In the vicinity of a part where the second connecting interface 521 extends obliquely with respect to the thickness direction of the corner wall 113, the tensile stress generated to the second transition area 1135 by the second connecting part 52 due to shrinkage is not collinear with the tensile stress generated to the second connecting part 52 by the second transition area 1135 due to deformation of the corner wall 113, reducing the risk of fatigue cracking of an area where the second transition area 1135 is located in the vicinity of the second connecting interface 521.

In some embodiments, with reference to FIGS. 43 to 48, the second connecting interface 521 includes a third interface 5212 that extends obliquely from the second location 5211 toward the end cover 12, at least part of the second transition area 1135 being located between the third interface 5212 and the end cover 12 in the thickness direction of the corner wall 113.

It should be understood that the third interface 5212 extends obliquely with respect to the thickness direction of the corner wall 113. The third interface 5212 may be a flat surface or a curved surface.

The second location 5211 is the lowest location (most adjacent to the third area 1131) of the third interface 5212 that extends obliquely from the second location 5211 toward the end cover 12, i.e., the third interface 5212 extends obliquely upward from the second location 5211 toward the end cover 12.

In the thickness of the corner wall 113, the second transition area 1135 may be located entirely between the third interface 5212 and the end cover 12, or the second transition area 1135 may be located only partially between the third interface 5212 and the end cover 12.

In the present embodiment, at least part of the second transition area 1135 is located between the third interface 5212 and the end cover 12 in the thickness direction of the corner wall 113, the second connecting part 52 protects the second transition area 1135, and the outward deformation of the second transition area 1135 will be blocked by the second connecting part 52, reducing the risk of fatigue cracking of the area of the second transition area 1135 located adjacent to the third interface 5212.

In some embodiments, with reference to FIGS. 43 to 48, the third interface 5212 is connected to the third outer surface 812 at a second location 5211, and the second location 5211 is located in the third area 1131.

As an example, the third interface 5212 intersects with the third outer surface 812 at a second straight line that extends in the third direction X at a second location 5211. The third interface 5212 is connected to an inner surface of the second transition area 1135 at a fifth location 5214, in the first direction Z, the fifth location 5214 is further away from the third area 1131 than the second location 5211. The second transition area 1135 is generally triangular in shape.

In the present embodiment, the third interface 5212 and the third outer surface 812 are connected to the second location 5211, and the second location 5211 is located in the third area 1131, so that the third outer surface 812 extends to an end of the third area 1131 facing the second connecting part 52 in the first direction Z, and the corresponding part of the third outer surface 812 on the corner wall 113 can better reinforce the end of the third area 1131 facing the second connecting part 52 to reduce the possibility of fatigue cracking of the end of the third area 1131 having a lower hardness and facing the second connecting part 52.

In some embodiments, with reference to FIGS. 43 to 48, the second connecting interface 521 includes a fourth interface 5213 that extends obliquely from the second location 5211 away from the end cover 12, at least part of the second transition area 1135 being located on a side of the fourth interface 5213 facing away from the end cover 12 in the thickness direction of the corner wall 113.

It should be understood that the fourth interface 5213 extends obliquely with respect to the thickness direction of the corner wall 113. The fourth interface 5213 may be a flat surface or a curved surface. At least some of the second connecting part 52 is located between the fourth interface 5213 and the end cover 12 in the thickness direction of the corner wall 113.

The second location 5211 is the lowest location (most adjacent to the first area 1111) of the fourth interface 5213 that extends obliquely away from the second location 5211 from the end cover 12, i.e., the fourth interface 5213 extends obliquely upward from the second location 5211 away from the end cover 12.

In the thickness direction of the corner wall 113, the second transition area 1135 may be located entirely on a side, facing away from the end cover 12, of the fourth interface 5213, or the second transition area 1135 may be located only partially on a side, facing away from the end cover 12, of the fourth interface 5213.

In the present embodiment, at least part of the second transition area 1135 is located on a side, facing away from the end cover 12, of the fourth interface 5213 in the direction of the thickness of the corner wall 113, so that the second transition area 1135 acts as a restriction to the second connecting part 52 to reduce the risk of the second connecting part 52 falling off.

In some embodiments, with reference to FIGS. 43 to 48, the fourth interface 5213 is connected to the third inner surface 810 at a second location 5211, and the second location 5211 is located in the third area 1131.

As an example, the fourth interface 5213 intersects with the third inner surface 810 at a second straight line that extends in the third direction X at a second location 5211. The fourth interface 5213 is connected to an outer surface of the second transition area 1135 at a sixth location 5215, in the first direction Z, the sixth location 5215 is further away from the third area 1131 than the second location 5211. The second transition area 1135 is generally triangular in shape.

In the present embodiment, the fourth interface 5213 and the third inner surface 810 are connected to the second location 5211, and the second location 5211 is located in the third area 1131, so that the third inner surface 810 extends to an end of the third area 1131 facing the second connecting part 52 in the first direction Z, and the corresponding part of the third inner surface 810 on the corner wall 113 can better reinforce the end of the third area 1131 facing the second connecting part 52 to reduce the possibility of fatigue cracking of the end of the third area 1131 having a lower hardness and facing the second connecting part 52.

In some embodiments, the second connecting interface 521 includes a third interface 5212 that extends obliquely from the second location 5211 toward the end cover 12 and a fourth interface 5213 that extends obliquely from the second location 5211 away from the end cover 12, in a thickness direction of the corner wall 113, a part of the second transition area 1135 is located between the third interface 5212 and the end cover 12 and another part of the second transition area 1135 is located on a side, facing away from the end cover 12, of the fourth interface 5213.

As an example, the third interface 5212 is connected to the inner surface of the second transition area 1135 at a fifth location 5214, and the fourth interface 5213 is connected to the outer surface of the second transition area 1135 at a sixth location 5215.

In some embodiments, the hardness of the second transition area 1135 is less than the hardness of the fourth area 1132; and/or the hardness of the second transition area 1135 is less than the hardness of the second connecting part 52.

As an example, the hardness of the fourth area 1132 is less than the hardness of the second connecting part 52.

If the hardness of the second transition area 1135 is less than the hardness of the fourth area 1132, so that the second transition area 1135 having a lower hardness is connected to the second connecting part 52, the rigid pull between the corner wall 113 and the second connecting part 52 when the corner wall 113 is deformed can be alleviated, and the possibility of the corner wall 113 separating from the second connecting part 52 can be reduced. If the hardness of the second transition area 1135 is less than the hardness of the second connecting part 52, the second transition area 1135 is more likely to deform than the second connecting part 52, so that the rigid pull between the corner wall 113 and the second connecting part 52 when the corner wall 113 is deformed can be alleviated, and the possibility of the corner wall 113 separating from the second connecting part 52 can be reduced.

In some embodiments, with reference to FIGS. 43 to 48, the second connecting interface 521 is more adjacent to the fourth area 1132 than the outer surface 121 of the end cover.

In the embodiment shown in FIGS. 43 to 48, in the first direction Z, the fifth location 5214 and the second location 5211 are both more adjacent to the fourth area 1132 than the outer surface 121 of the end cover.

In the embodiment shown in FIGS. 43 to 48, in the first direction Z, the sixth location 5215 and the second location 5211 are both more adjacent to the fourth area 1132 than the outer surface 121 of the end cover.

In the embodiment shown in FIGS. 43 to 48, in the first direction Z, the fifth location 5214, the sixth location 5215, and the second location 5211 are each more adjacent to the fourth area 1132 than the outer surface 121 of the end cover.

In the present embodiment, the second connecting interface 521 is more adjacent to the fourth area 1132 in the first direction Z than the outer surface 121 of the end cover, so that the second connecting part 52 can sink deeper into the corner wall 113, and the connection strength of the corner wall 113 with the end cover 12 can be effectively improved.

In some embodiments, the hardness of the third area 1131 is less than the hardness of the second connecting part 52.

In some embodiments, with reference to FIGS. 7, 16, 19, and 23, the housing 11 includes two first side wall parts 111 and two second side wall parts 112, the two first side wall parts 111 are oppositely provided in a second direction Y, the two second side wall parts 112 are oppositely provided in a third direction X, and the first direction Z, the second direction Y, and the third direction X are perpendicular to each other in pairs.

Two ends of the first side wall part 111 in the third direction X are provided with corner walls 113, and two ends of the second side wall part 112 in the second direction Y are provided with corner walls 113. It should be understood that there are four corner walls 113 in the housing 11.

In the present embodiment, the housing 11 has a substantially rectangular parallelepiped shape, and the dimension of the housing 11 can be made larger, which is advantageous for satisfying the large capacity requirement of the battery cell 10.

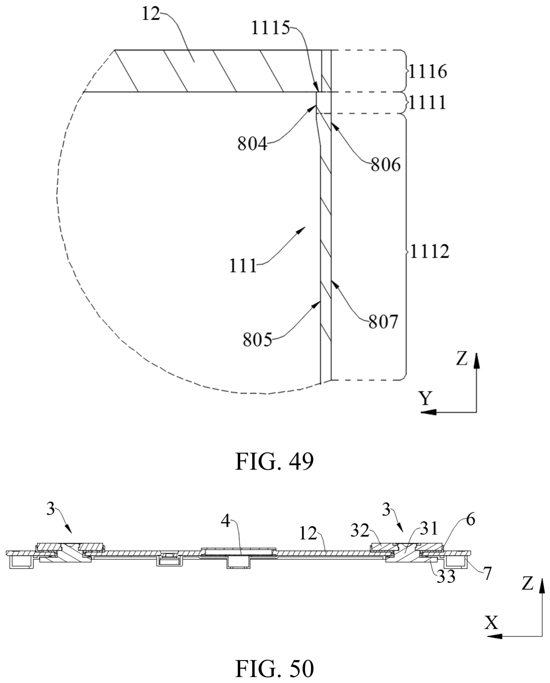

In some embodiments, with reference to FIG. 49, the first side wall part 111 has a limiting face 1115 facing the end cover 12, the limiting face 1115 abutting against the end cover 12 to limit movement of the end cover 12 in the direction toward the electrode assembly 2.

The limiting face 1115 may be perpendicular to the first direction Z; the limiting face 1115 may be an end surface of the first side wall part 111 located at one end of the opening of the housing 11; and the limiting face 1115 may also be a step surface on the first side wall part 111, where the step surface is located at a certain distance from the end surface of the first side wall part 111 located at one end of the opening of the housing 11.

The limiting face 1115 plays a limiting role in limiting the end cover 12 and reducing the risk of the end cover 12 moving in the direction adjacent to the electrode assembly 2 when being welded with the housing 11, which can effectively improve the welding quality of the end cover 12 and the housing 11 and reduce the welding difficulty of the end cover 12 and the housing 11.

In some embodiments, with reference to FIG. 49, the first side wall part 111 further includes a limiting area 1116 provided on the limiting face 1115, the limiting area 1116 being provided opposite the end cover 12 in the second direction Y, the limiting area 1116 being welded to the end cover 12 to form the first connecting part 51.

As an example, the end cover 12 is at least partially received within the housing 11, such that the limiting area 1116 is provided opposite the end cover 12 in the second direction Y.

After the limiting area 1116 is welded to the end cover 12, a part of the limiting area 1116 and a part of the end cover 12 may be fused together to form the first connecting part 51, and the remainder of the limiting area 1116 may form at least part of the first transition area 1117.

The limiting area 1116 can also play a limiting role on the end cover 12, reducing the risk of the end cover 12 moving in the thickness direction of the first side wall part 111 when being welded with the housing 11, further improving the welding quality of the end cover 12 and the housing 11, and reducing the welding difficulty of the end cover 12 and the housing 11.

In some embodiments, in the embodiments of FIGS. 7, 16, 19, and 23, the second side wall part 112 is of an equal thickness structure. In other embodiments, the second side wall part 112 may be of an unequal thickness structure, and the structure of the second side wall part 112 may be the same as the structure of the first side wall part 111, for example, the second side wall part 112 includes a fifth area and a sixth area arranged in the first direction Z, the fifth area has a lower harness than the hardness of the sixth area, and the fifth area is located between the third connecting part 5 and the sixth area, so as to reduce the possibility of cracking of the corresponding third connecting part 5 of the second side wall part 112. The structure of the fifth area may be the same as the structure of the first area 1111, and the structure of the sixth area may be the same as the structure of the second area 1112.

In some embodiments, the fifth area has a lower harness than the hardness of the third connecting part 5.

In some embodiments, the second side wall part 112 has a fifth inner surface and a sixth inner surface facing the electrode assembly 2 and a seventh outer surface and an eighth outer surface facing away from the electrode assembly 2, the fifth inner surface being of the same structure as the structure of the first inner surface 804, the seventh outer surface being of the same structure as the first outer surface 806, the sixth inner surface being of the same structure as the structure of the second inner surface 805, and the eighth outer surface being of the same structure as the second outer surface 807.

In some embodiments, in the embodiment in which the second side wall part includes a fifth area and a sixth area, the third area 1131 may connect the first area 1111 to the fifth area, and the fourth area 1132 may connect the second area 1112 to the sixth area.

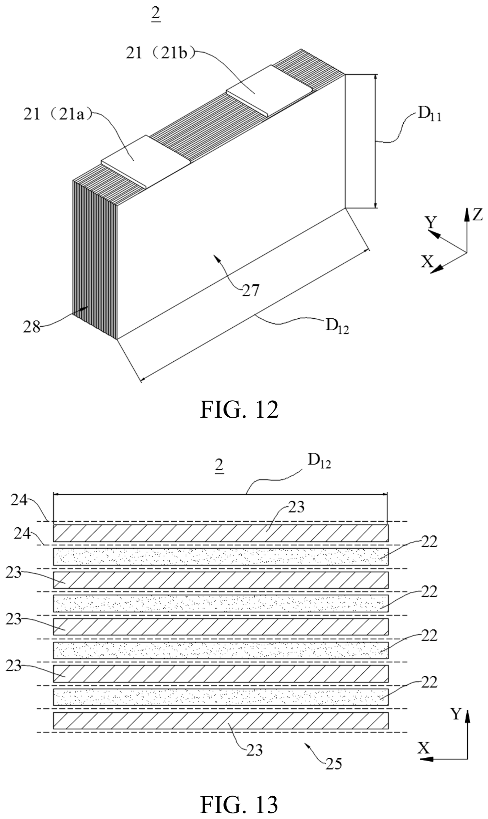

In some embodiments, with reference to FIGS. 12 and 13, the electrode assembly 2 is of a laminated structure, and the electrode assembly 2 includes a plurality of positive pole pieces 22 and a plurality of negative pole pieces 23, which are stacked in the second direction Y.

As an example, the positive pole piece 22 and the negative pole tab 21b in the electrode assembly 2 are alternately arranged in the second direction Y, and a spacer 24 is provided between the positive pole piece 22 and the negative pole piece 23.

In the present embodiment, the electrode assembly 2 is of a laminated structure, which is more compact in structure and has a high extrusion resistance.

In some embodiments, with reference to FIGS. 12 and 13, the number of negative pole pieces 23 is greater than the number of positive pole pieces 22, and one positive pole piece 22 is provided between two adjacent negative pole pieces 23.

As an example, the negative pole piece 23 is one more than the positive pole piece 22.

In some embodiments, with reference to FIGS. 12 and 13, each negative pole piece 23 is provided with a negative pole tab 21b; and/or, each positive pole piece 22 is provided with a positive pole tab 21a.

In some embodiments, the first side wall part 111 has a first inner surface 804 and a second inner surface 805 facing the electrode assembly 2, and a first outer surface 806 and a second outer surface 807 facing away from the electrode assembly 2, the first inner surface 804 and the second inner surface 805 being successively connected in a direction from the end cover 12 toward the electrode assembly 2, and the first outer surface 806 and the second outer surface 807 are successively connected in a direction from the end cover 12 toward the electrode assembly 2, the first inner surface 804 and the first outer surface 806 are at least partially formed in the first area 1111, the second inner surface 805 and the second outer surface 807 are at least partially formed in the second area 1112, a distance between the first inner surface 804 and the first outer surface 806 in the second direction Y is larger than a distance between the second inner surface 805 and the second outer surface 807 in the second direction Y. A dimension of the first inner surface 804 is greater than a dimension of the positive pole piece 22 and/or a dimension of the negative pole piece 23 in the third direction X, and the first direction Z, the second direction Y, and the third direction X are perpendicular to each other in pairs.

If, in the third direction X, the dimension of the first inner surface 804 is greater than the dimension of the positive pole piece 22, the first inner surface 804 exceeds at least one end of the positive pole piece 22 in the third direction X; if, in the third direction X, the dimension of the first inner surface 804 is greater than the dimension of the negative pole piece 23, the first inner surface 804 extends beyond at least one end of the negative pole piece 23 in the third direction X.

As an example, in the third direction X, the dimension of the projection of the first inner surface 804 in the second direction Y overlapping with the first area 1111 is greater than the dimension of the positive pole piece 22 and/or the negative pole piece 23.

In the present embodiment, in the third direction X, the dimension of the first inner surface 804 is greater than the dimension of the positive pole piece 22 and/or the dimension of the negative pole piece 23, so that the dimension of the first inner surface 804 in the third direction X is larger, so that the strength of the first side wall part 111 having more areas in the third direction X is reinforced, which is advantageous for reducing the possibility of cracking of the housing 11.

In some embodiments, with reference to FIG. 50, the battery cell 10 further includes two electrode terminals 3 provided at the end cover 12, and the two electrode terminals 3 have opposite polarities and are both electrically connected to the electrode assembly 2. The end cover 12 is provided with a lead-out hole, the electrode terminal 3 includes a terminal body 31, a first limiting part 32 and a second limiting part 33, the terminal body 31 is connected to the first limiting part 32 and the second limiting part 33, the terminal body 31 passes through the lead-out hole, and in the first direction Z, the first limiting part 32 is located on a side, facing away from the electrode assembly 2, of the end cover 12, and the second limiting part 33 is located on a side, facing the electrode assembly 2, of the end cover 12.

The first limiting part 32 and the second limiting part 33 have a limiting function, the first limiting part 32 and the second limiting part 33 are respectively connected to two ends of the terminal body 31, and the first limiting part 32 and the second limiting part 33 cooperate to limit the terminal body 31 from being separated from the lead-out hole. In the first direction Z, the projected area of the first limiting part 32 and the projected area of the second limiting part 33 are both greater than the projected area of the terminal body 31, and the projected area of the first limiting part 32 may be greater than the projected area of the second limiting part 33, or the projected area of the second limiting part 33 may be greater than the projected area of the first limiting part 32. The first limiting part 32, the second limiting part 33, and the terminal body 31 may be integrally formed, or one of the first limiting part 32 and the second limiting part 33 may be integrally formed with the terminal body 31, and the other may be separately provided and connected to the terminal body 31.

As an example, the battery cell 10 may further include a first insulating member 6 provided at least partially between the electrode terminal 3 and the end cover 12 to insulate and isolate the electrode terminal 3 and the end cover 12, and a second insulating member 7 provided on a side of the end cover 12 facing the electrode assembly 2 to insulate and isolate the electrode assembly 2 and the end cover 12.

In the present embodiment, the electrode terminals 3 can be attached to the end covers 12 by riveting, which is less difficult and more economical to install.

In some embodiments, with reference to FIGS. 10 and 11, the electrode assembly 2 has a flat area 25 in which the part of the positive pole piece 22 and the part of the negative pole piece 23 are stacked in the second direction Y.

The flat area 25 is a flat part of the electrode assembly 2, and the part of the positive pole piece 22 located in the flat area 25 is in a substantially flat state, and the part of the negative pole piece 23 located in the flat area 25 is in a substantially flat state. As an example, the part of the positive pole piece 22 located in the flat area 25 and the part of the negative pole piece 23 located in the flat area 25 are both of flat plate structures. If the electrode assembly 2 is of a winding structure, and the electrode assembly 2 is a winding-type electrode assembly 2, it can be that a part of the electrode assembly 2 is a flat area 25; if the electrode assembly 2 is of a laminated structure, and the electrode assembly 2 is a laminated electrode assembly 2, it is possible that the electrode assembly 2 has a flat area 25 as a whole. The second direction Y is the stacking direction of the part of the positive pole piece 22 located in the flat area 25 and the part of the negative pole piece 23 located in the flat area 25.

As an example, the electrode assembly 2 may further include a spacer 24 provided between the positive pole piece 22 and the negative pole piece 23, the spacer 24 being used to separate the positive pole piece 22 and the negative pole piece 23. A part where the positive pole piece 22 is located in the flat area 25, a part where the negative pole piece 23 is located in the flat area 25, and a part where the spacer 24 is located in the flat area 25 are laminated in the second direction Y.

The second direction Y is the stacking direction of the part of the positive pole piece 22 located in the flat area 25 and the part of the negative pole piece 23 located in the flat area 25, the amount by which the expansion of the electrode assembly 2 occurs in the second direction Y during cycling is greater, and the first side wall part 111 is more affected by the expansion of the electrode assembly 2. However, since the toughness of the first area 1111 is relatively high, the expansion force of the electrode assembly 2 with respect to the first side wall part 111 is released, which is advantageous for reducing the possibility of cracking of the first connecting part 51 of the first side wall part 111.

As an example, when the first inner surface 804 and the first outer surface 806 are at least partially formed in the first area 1111, a corresponding thicker part of the first side wall part 111 at the first inner surface 804 can reinforce the first area 1111 having a lower hardness, and can reduce the possibility of fatigue cracking of the first area 1111 itself having a higher toughness.

In some embodiments, with reference to FIGS. 10 to 13, the electrode assembly 2 includes adjacent fifth outer surface 27 and sixth outer surface, the fifth outer surface 27 is perpendicular to the second direction Y, the area of the fifth outer surface 27 is greater than the area of the sixth outer surface, and the fifth outer surface 27 is provided opposite the first side wall part 111 in the second direction Y.

The fifth outer surface 27 is one of the outer surfaces of the electrode assembly 2 that is perpendicular to the second direction Y, and the sixth outer surface is one of the outer surfaces of the electrode assembly 2 that is adjacent to the fifth outer surface 27. The fifth outer surface 27 is provided facing the first side wall part 111 in the second direction Y. The fifth outer surface 27 may be a flat surface, and the fifth outer surface 27 may or may not be the surface having the largest area among the outer surfaces of the electrode assembly 2. The sixth outer surface may be a flat surface or at least partially an arc surface. It should be noted that the fifth outer surface 27 is substantially perpendicular to the second direction Y, and it should also be understood that the fifth outer surface 27 is perpendicular to the second direction Y.

As an example, the fifth outer surface 27 and the sixth outer surface are both two, the two fifth outer surfaces 27 are oppositely provided to each other in the second direction Y, the two sixth outer surfaces are oppositely provided to each other in the third direction X, the positive pole tab 21a and the negative pole tab 21b protrude from the surface of the electrode assembly 2 in the first direction Z, the outermost part of the electrode assembly 2 in the second direction Y is the spacer 24, and the fifth outer surface 27 is formed on the spacer 24, and the first direction Z, the second direction Y and the third direction X are perpendicular to each other in pairs.

In the present embodiment, the area of the fifth outer surface 27 is greater than the area of the sixth outer surface, so that the first side wall part 111 of the housing 11 provided opposite to the fifth outer surface 27 is subjected to a larger expansion force. Since the toughness of the first area 1111 is relatively high, the expansion force of the electrode assembly 2 with respect to the first side wall part 111 is released, which is advantageous for reducing the possibility of cracking of the first connecting part 51 of the first side wall part 111.

As an example, when the first inner surface 804 and the first outer surface 806 are at least partially formed in the first area 1111, a corresponding thicker part of the first side wall part 111 at the first inner surface 804 can reinforce the first area 1111 having a higher toughness, and can reduce the possibility of fatigue cracking of the first area 1111 itself having a higher toughness.

In some embodiments, with reference to FIGS. 10 to 13, the fifth outer surface 27 is the surface with the largest area among the outer surfaces of the electrode assembly 2.

It should be noted that the fifth outer surface 27 is the largest one of the outer surfaces of the electrode assembly 2, and this does not limit only one of the fifth outer surfaces 27 in the electrode assembly 2. It should be understood that the fifth outer surface 27 of the electrode assembly 2 may be one or two.

As an example, in the illustrated embodiment, the electrode assembly 2 is of a winding structure, the electrode assembly 2 has a flat shape, and the electrode assembly 2 includes six surfaces, of which two surfaces oppositely provided in the second direction Y have the largest area, and both of the surfaces are the fifth outer surfaces 27. In the illustrated embodiment, the electrode assembly 2 is of a laminated structure, the electrode assembly 2 has a substantially rectangular parallelepiped shape, and the electrode assembly 2 includes six surfaces, of which two surfaces oppositely provided in the second direction Y have the largest area, and both of the surfaces are the fifth outer surfaces 27.

In the present embodiment, the fifth outer surface 27 is the surface having the largest area among the outer surfaces of the electrode assembly 2, so that the first side wall part 111 of the housing 11 provided opposite to the fifth outer surface 27 is subjected to a largest expansion force. Since the toughness of the first area 1111 is relatively high, the expansion force of the electrode assembly 2 with respect to the first side wall part 111 is released, which is advantageous for reducing the possibility of cracking of the first connecting part 51 of the first side wall part 111.

As an example, when the first inner surface 804 and the first outer surface 806 are at least partially formed in the first area 1111, a corresponding thicker part of the first side wall part 111 at the first inner surface 804 can reinforce the first area 1111 having a higher toughness, and can reduce the possibility of fatigue cracking of the first area 1111 itself having a higher toughness.

In some embodiments, with reference to FIGS. 10 and 11, the electrode assembly 2 is of a winding structure, the electrode assembly 2 further has a corner area 26, the flat area 25 is provided with a corner area 26 at least one end in the third direction X, and the first direction Z, the second direction Y, and the third direction X are non-coplanar and intersect with each other in pairs. The outer surface of the flat area 25 includes the fifth outer surface 27, the outer surface of the corner area 26 includes the sixth outer surface, and at least part of the sixth outer surface is an arc surface.

The flat area 25 may be provided with a corner area 26 at only one end in the third direction X, or may be provided with a corner area 26 at both opposite ends in the third direction X. The first direction Z, the second direction Y and the third direction X are non-coplanar, and any two of the first direction Z, the second direction Y and the third direction X can be arranged at an acute angle, a right angle, or an obtuse angle. The fifth outer surface 27 may be a part of the outer surface of the flat area 25, the sixth outer surface may be a part of the outer surface of the corner area 26, and the sixth outer surface may be an arc surface as a whole or may be an arc surface only in a part.

As an example, the positive pole piece 22, the spacer 24, and the negative pole piece 23 are laminated and then wound to form a winding structure. The first direction Z, the second direction Y and the third direction X are perpendicular to each other in pairs, and corner areas 26 are provided at two ends of the flat area 25 in the third direction X. The parts of the positive pole piece 22, the negative pole piece 23 and the spacer 24 located in the corner area 26 are in a bent state, and the part of the positive pole piece 22 located in the corner area 26 may be at least partially arc-shaped, the part of the negative pole piece 23 located in the corner area 26 may be at least partially arc-shaped, and the part of the spacer 24 located in the corner area 26 may be at least partially arc-shaped. In the winding direction of the electrode assembly 2, the outermost ring of the electrode assembly 2 is the spacer 24, the fifth outer surface 27 and the sixth outer surface are both part of the outer surface of the outermost ring of the electrode assembly 2, the fifth outer surface 27 is a plane, the sixth outer surface is an arc surface, and the axis of the arc surface extends in the first direction Z. In the second direction Y, the surfaces on both sides of the flat area 25 are both fifth outer surfaces 27; in the third direction X, a surface of a side of the one corner area 26 facing away from the other corner area 26 is a sixth outer surface, and a surface of a side of the other corner area 26 facing away from the one corner area 26 is another sixth outer surface.

In the housing of the rolled electrode assembly 2, the flat area 25 expands in the second direction Y by a larger amount. Since the toughness of the first area 1111 is relatively high, the expansion force of the electrode assembly 2 with respect to the first side wall part 111 is released, which is advantageous for reducing the possibility of cracking of the first connecting part 51 of the first side wall part 111.

As an example, when the first inner surface 804 and the first outer surface 806 are at least partially formed in the first area 1111, a corresponding thicker part of the first side wall part 111 at the first inner surface 804 can reinforce the first area 1111 having a higher toughness, and can reduce the possibility of fatigue cracking of the first area 1111 itself having a higher toughness.

In some embodiments, with reference to FIGS. 12 and 13, the electrode assembly 2 is of a laminated structure, the flat area 25 includes a plurality of positive pole pieces 22 and a plurality of negative pole pieces 23, the plurality of positive pole pieces 22 and the plurality of negative pole pieces 23 are arranged in a stack in the second direction Y, and the fifth outer surface 27 is perpendicular to the sixth outer surface.

As an example, a plurality of positive pole pieces 22, a plurality of negative pole pieces 23, and a plurality of spacers 24 are stacked in the second direction Y to form a laminated structure. The positive pole piece 22 and the negative pole piece 23 are completely located in a flat area 25, a spacer 24 is provided between adjacent positive pole pieces 22 and negative pole pieces 23, the spacer 24 extends beyond two ends of the positive pole piece 22 and two ends of the negative pole piece 23 in a third direction X, the extended parts of a plurality of spacers 24 are connected to form an integral part, and a sixth outer surface is formed on the integral part. In the second direction Y, all of the positive pole pieces 22 and all of the negative pole pieces 23 are between the outermost two spacers 24, and the outer surfaces of the two spacers 24 are the fifth outer surfaces 27.

It should be noted that the fifth outer surface 27 is substantially perpendicular to the sixth outer surface, and it should also be understood that the fifth outer surface 27 is perpendicular to the sixth outer surface. For example, an angle of 85 degrees to 95 degrees between the fifth outer surface 27 and the sixth outer surface can be understood to mean that the fifth outer surface 27 is perpendicular to the sixth outer surface.

For the laminated electrode assembly 2, the amount of expansion of the electrode assembly 2 in the stacking direction of the positive pole piece 22 and the negative pole piece 23 is larger, that is, the expansion force in the second direction Y is larger. Since the toughness of the first area 1111 is relatively high, the expansion force of the electrode assembly 2 with respect to the first side wall part 111 is released, which is advantageous for reducing the possibility of cracking of the first connecting part 51 of the first side wall part 111.

As an example, when the first inner surface 804 and the first outer surface 806 are at least partially formed in the first area 1111, a corresponding thicker part of the first side wall part 111 at the first inner surface 804 can reinforce the first area 1111 having a higher toughness, and can reduce the possibility of fatigue cracking of the first area 1111 itself having a higher toughness.

In some embodiments, with reference to FIGS. 7, 16, 19, and 23, the first side wall part 111 is the wall having the largest outer surface area of the housing 11.

It should be noted that the first side wall part 111 is the wall having the largest outer surface area of the housing 11, and this does not limit the first side wall part 111 to only one in the housing 11. It should be understood that the walls of the housing 11 having the largest outer surface area may be one or two.

Since the first side wall part 111 is the wall having the largest outer surface area of the housing 11 and is more easily deformed by the expansion force of the electrode assembly 2, the first area 1111 having the higher toughness of the first side wall part 111 releases the expansion force of the electrode assembly 2 to the first side wall part 111, which is advantageous for reducing the possibility of cracking of the first connecting part 51 of the first side wall part 111.

As an example, when the first inner surface 804 and the first outer surface 806 are at least partially formed in the first area 1111, a corresponding thicker part of the first side wall part 111 at the first inner surface 804 can reinforce the first area 1111 having a higher toughness, and can reduce the possibility of fatigue cracking of the first area 1111 itself having a higher toughness.

In some embodiments, with reference to FIGS. 3 and 26, the housing 11 includes two first side wall parts 111 provided opposite to each other in the second direction Y, and the electrode assembly 2 is provided between the two first side wall parts 111.

As an example, in the illustrated embodiment, the housing 11 has a rectangular parallelepiped shape, and the housing 11 may include two first side wall parts 111 and two second side wall parts 112, the two first side wall parts 111 are oppositely provided in the second direction Y, the two second side wall parts 112 are oppositely provided in the third direction X, and the outer surface area of the first side wall parts 111 is greater than the outer surface area of the second side wall parts 112. The first direction Z is parallel to the height direction of the housing 11, the second direction Y is parallel to the width direction of the housing 11, and the third direction X is parallel to the length direction of the housing 11.

In the present embodiment, the housing 11 includes the two first side wall parts 111, and the expansion force of the electrode assembly 2 is released by the first areas 1111 of the two first side wall parts 111 having relatively high toughness, thereby reducing the possibility of expanding and cracking of the first connecting parts 51 of the two first side wall parts 111 due to the electrode assembly 2.

In some embodiments, with reference to FIGS. 10 to 13, the number of the electrode assemblies 2 is N₁, each of the electrode assemblies 2 further includes at least one spacer 24, the number of the positive pole pieces 22 is at least one, the number of the negative pole pieces 23 is at least one, the positive pole pieces 22, the negative pole pieces 23, and the spacers 24 are stacked and form a flat area 25, and at least some of the positive pole pieces 22, at least some of the negative pole pieces 23, and at least some of the spacers 24 are laminated in the second direction Y in the flat area 25. The number of layers of the positive pole pieces 22 of each of the electrode assemblies 2 stacked in the flat area 25 is N2, the flat area 25 has an outer surface perpendicular to the second direction, and the area of the outer surface is S, N1≥1, N2≥1, N1 * N2≥50, S≥8000 mm².

As an example, with reference to FIGS. 10 to 13, the outer surface of the flat area 25 perpendicular to the second direction is a fifth outer surface 27, which has an area S.

In the flat area 25 of the electrode assembly 2, the greater the number of stacked positive pole pieces 22 and the greater the number of corresponding negative pole pieces 23, the greater the expansion and deformation of the electrode assembly 2, and thus the expansion of the electrode assembly 2 is positively correlated with the number of positive pole pieces 22, and the greater the area of the outer surface of the flat area 25 perpendicular to the second direction Y, the greater the expansion and deformation of the electrode assembly 2. According to this, in the battery cell in which the total number of layers N1 * N2≥50 of the positive pole piece 22 stacked in the flat area 25 and the area S≥8000 mm² of the outer surface of the flat area 25 perpendicular to the second direction Y, the electrode assembly 2 has a large amount of expansion during the charge and discharge of the battery cell 10. Here, the measurement method of N2 is: after the battery cell 10 is disassembled, the electrode assembly 2 is taken out, and without destroying the integrity of the electrode assembly 2, the number of layers of the positive pole piece in the second direction Y in the flat area 25 is as shown in FIGS. 10 and 13. Here, the measurement method of S is the product of the height dimension D₁₁ of the flat area 25 in the outer plane perpendicular to the second direction Y in the first direction Z and the length dimension D₁₂ in the third direction X.

In the present embodiment, on the one hand, N1 * N2≥50, the number of layers of the positive pole piece in the housing is large, and on the other hand, S≥8000 mm², the area corresponding to the flat area 25 is large, and the area of the corresponding positive pole piece can also be set to be large, so that the battery cell 10 can have a large capacitance. N1*N2≥50, S≥8000 mm², so that the expansion force of the electrode assembly 2 in the second direction Y is relatively large, and by means of the first area 1111 having a lower hardness according to the embodiments of the present application, the toughness of the first area 1111 is relatively high, thereby reducing the possibility of cracking of the first connecting part 51 under the effect of a relatively large expansion force.

In some embodiments, the negative pole piece 23 includes a negative pole current collector 232 and a negative pole active material layer 233 provided on at least one side of the negative pole current collector 232, the negative pole active material layer 233 including a negative pole active material, and a discharge capacity per unit area of the negative pole active material layer 233 is 2.0 mAh/cm² to 5.0 mAh/cm².

The discharge capacity per unit area of the negative pole active material layer 233 refers to the actual lithium intercalation capacity of the negative pole active material. The test method includes the following steps: the battery is disassembled in a PRS340/11-119-11 Braun glove box, the negative pole piece 23 is taken, and assembled into a CR2430-type half-coin cell with lithium foil as the counter electrode. The area of the employed negative pole piece 23 is f mm², and the electrolyte consists of 1 mol/L LiPF₆ in a mixed solvent of EC/EMC/DEC = 3/5/2 (by mass ratio). After assembly, the half-coin cell is allowed to stand for 3 hours, and the test is performed at 25°C, first, the battery is discharged (lithiation) at 0.1 C within a voltage range of 2 V-0 V, then, the battery is charged (delithiation) at 0.05 C until the voltage reaches 2 V; the cycle is repeated twice, and the discharge capacity ZmAh is taken from the second cycle, in the actual battery design, the negative pole piece 23 has a length of h mm, a width of i mm, and the number of coated sides d of the negative electrode active material on the negative pole current collector 232, and the lithium intercalation capacity of the negative electrode is calculated as lithium intercalation capacity of negative electrode is Z/f*h*i*d. LiPF₆ is the electrolyte salt lithium hexafluorophosphate, EC is ethylene carbonate, DEC is diethyl carbonate, and EMC is methyl ethyl carbonate.

The discharge capacity per unit area of the negative pole active material layer 233 may be selected from 2 mAh/cm² to 5 mAh/cm². Illustratively, the discharge capacity per unit area of the negative pole active material layer 233 is any point value of or a range value between any two of 2.0 mAh/cm², 2.1 mAh/cm², 2.2 mAh/cm², 2.3 mAh/cm², 2.4 mAh/cm², 2.5 mAh/cm², 2.6 mAh/cm², 2.7 mAh/cm², 2.8 mAh/cm², 2.9 mAh/cm², 3.0 mAh/cm², 3.1 mAh/cm², 3.2 mAh/cm², 3.3 mAh/cm², 3.4 mAh/cm², 3.5 mAh/cm², 3.6 mAh/cm², 3.7 mAh/cm², 3.8 mAh/cm², 3.9 mAh/cm², 4.0 mAh/cm², 4.1 mAh/cm², 4.2 mAh/cm², 4.4 mAh/cm², 4.8 mAh/cm², and 5.0 mAh/cm².

In the embodiments of the present application, when the discharge capacity per unit area of the negative pole active material layer 233 falls within the specified range, sufficient lithium intercalation sites are available in the negative pole active material layer 233, thereby reducing lithium deposition risks; and rapid charging is facilitated while maintaining controlled expansion forces, consequently decreasing the possibility of cracking of the first connecting part 51 under the expansion stress from the electrode assembly 2.

In some embodiments, the thickness of the negative pole active material layer 233 is T1, and 9 µm≤T1≤75 µm.

T1 may be selected to be 9 µm to 75 µm, and the thickness T1 of the negative pole active material layer 233 may be any discrete value of or any range value between two of 9 µm, 15 µm, 20 µm, 30 µm, 40 µm, 50 µm, 60 µm, 70 µm, and 75 µm.

In the embodiments of the present application, the negative pole active material layer 233 is relatively thick, and accordingly, the expansion force of the single negative pole piece 23 during charging and discharging is relatively large, so that the expansion force exerted on the first side wall part 111 by a part of the first area 1111 having relatively high toughness is released, thereby reducing the possibility of cracking of the first connecting part 51 of the first side wall part 111 under the effect of a relatively large expansion force.

Embodiments of the present application provide a battery apparatus 100 including the battery cell 10 of any of the embodiments described above.

The embodiments of the present application provide an electrical apparatus including a battery cell 10 of any of the above for providing electrical energy to the electrical apparatus.

In the embodiments of the present application, also provided is a battery cell 10 including a housing 11 having an opening formed at one end in a first direction Z, an end cover 12 welded to the housing 11 and closing the opening of the housing 11, and an electrode assembly 2 at least partially accommodated in the housing 11. The housing 11 has a rectangular parallelepiped shape, and the housing 11 includes two first side wall parts 111, two second side wall parts 112 and four corner walls 113, where the first side wall part 111 is a wall with the largest outer surface area in the housing 11, adjacent first side wall parts 111 and second side wall parts 112 are connected by one corner wall 113, the two first side wall parts 111 are oppositely provided to each other in a second direction Y, the two second side wall parts 112 are oppositely provided to each other in a third direction X, and the first direction Z, the second direction Y and the third direction X are perpendicular to each other in pairs. The electrode assembly 2 includes a positive pole piece 22, a negative pole piece 23, and a spacer 24, the spacer 24 being provided between the positive pole piece 22 and the negative pole piece 23, and the electrode assembly 2 has a flat area 25, a part where the positive pole piece 22 is located in the flat area 25, a part where the negative pole piece 23 is located in the flat area 25, and a part where the spacer 24 is located in the flat area 25 are laminated in the second direction Y. The electrode assembly 2 includes a fifth outer surface 27 perpendicular to the second direction Y, the fifth outer surface 27 being a surface having the largest area among the outer surfaces of the electrode assembly 2, and the first side wall part 111 is provided opposite to the fifth outer surface 27 in the second direction Y.

The first side wall part 111 is welded to the end cover 12 to form the first connecting part 51, the first side wall part 111 includes a first area 1111 and a second area 1112 arranged in a first direction Z, the first area 1111 has a lower harness than the second area 1112, and the first area 1111 is located between the first connecting part 51 and the second area 1112. The first area 1111 has a lower hardness than the first connecting part 51. The housing 11 includes a material of an aluminum alloy, the maximum distance between the second inner surface 805 and the second outer surface 807 in the second direction Y is D1, the maximum distance between the first inner surface 804 and the first outer surface 806 in the second direction Y is D2, and the dimensions of the housing 11 in the second direction Y are D, 0.005≤D₁/D≤0.065, 0.4mm≤D₁≤0.8mm, and 0.5mm≤D₂≤1.5mm. The corner wall 113 is welded to the end cover 12 to form the second connecting part 52, and the corner wall 113 includes a third area 1131 and a fourth area 1132 arranged in the first direction Z, the third area 1131 has a lower harness than the harness of the fourth area 1132, and the third area 1131 is located between the fourth area 1132 and the second connecting part 52. A dimension of the first inner surface 804 in the third direction X is greater than a dimension of the first inner surface 804 in the first direction Z, and two ends of the first inner surface 804 in the third direction X are directly connected to the third inner surfaces 810 of the two corner walls 113, respectively. In the circumferential direction of the opening, the corner wall 113 has a first connecting end 1133 and a second connecting end 1134, the first side wall part 111 is connected to the first connecting end 1133, the second side wall part 112 is connected to the second connecting end 1134, the distance between the third inner surface 810 and the third outer surface 812 in the thickness direction of the corner wall 113 is a fourth preset thickness, and the fourth preset thickness exhibits a decreasing trend in a direction from the first connecting end 1133 toward the second connecting end 1134. The first inner surface 804 includes a first sub-face 11111 and a second sub-face 11112 arranged in a first direction Z, the second sub-face 11112 connects the first sub-face 11111 and the second inner surface 805, the distance between the first sub-face 11111 and the first outer surface 806 in a second direction Y is greater than the distance between the second sub-face 11112 and the first outer surface 806 in the second direction Y, and the distance between the second sub-face 11112 and the first outer surface 806 in the second direction Y exhibits a decreasing trend in a direction from the end cover 12 toward the electrode assembly 2.

The positive pole piece 22 includes a positive pole body area 221 protruding from a positive pole tab 21a of the positive pole body area 221, the negative pole piece 23 includes a negative pole body area 231 and a negative pole tab 21b protruding from the negative pole body area 231, in the first direction Z, the positive pole body area 221 has a fifth end 2211 facing the end cover 12, the negative pole body area 231 has a sixth end 2311 facing the end cover 12, and the spacer 24 has a seventh end 241 facing the end cover 12, the seventh end 241 being more adjacent to the end cover 12 than the fifth end 2211 and the sixth end 2311. The spacer 24 includes an extension area 242 that extends beyond the fifth end 2211 and the sixth end 2311 in the first direction Z, on the projection plane perpendicular to the second direction Y, the extension area 242 partially overlaps with the orthographic projection of the first inner surface 804. The first inner surface 804 is more adjacent to the electrode assembly 2 in the second direction Y relative to the second inner surface 805. On the projection plane perpendicular to the second direction Y, the positive pole body area 221 does not overlap with orthographic projection of the first inner surface 804; on the projection plane perpendicular to the second direction Y, the negative pole body area 231 does not overlap with the orthographic projection of the first inner surface 804.

The first side wall part 111 further includes a first transition area 1117, the first transition area 1117 is connected to an end of the first area 1111 away from the second area 1112 in the first direction Z, the first transition area 1117 is connected to the first connecting part 51, and the connection location of the first transition area 1117 and the first connecting part 51 forms a first connecting interface 511, the first connecting interface 511 has a first location 5111 most adjacent to the first area 1111 in the first direction Z, and the first location 5111 is located at an end of the first area 1111 away from the second area 1112 in the first direction Z. The first connecting interface 511 includes a second interface 5113 that extends obliquely from a first location 5111 away from the end cover 12, in a second direction Y, a part of the first connecting part 51 is located between the second interface 5113 and the end cover 12, and the second interface 5113 is connected to the first inner surface 804 at the first location 5111.

The corner wall 113 further includes a second transition area 1135, the second transition area 1135 is connected to an end of the third area 1131 away from the fourth area 1132 in the first direction Z, and the second transition area 1135 is connected to the second connecting part 52, the connection location of the second transition area 1135 and the second connecting part 52 forms a second connecting interface 521, the second connecting interface 521 has a second location 5211 most adjacent to the third area 1131 in the first direction Z, the second location 5211 is located at an end of the third area 1131 away from the fourth area 1132 in the first direction Z. The second connecting interface 521 includes a fourth interface 5213 that extends obliquely from the second location 5211 away from the end cover 12, in a thickness direction of the corner wall 113, a part of the second connecting part 52 is located between the fourth interface 5213 and the end cover 12, and the fourth interface 5213 is connected to the third inner surface 810 at the second location 5211.

In the embodiments of the present application, also provided is a battery cell 10 including a housing 11 having an opening formed at one end in a first direction Z, an end cover 12 welded to the housing 11 and closing the opening of the housing 11, and an electrode assembly 2 at least partially accommodated in the housing 11. The housing 11 has a rectangular parallelepiped shape, and the housing 11 includes two first side wall parts 111, two second side wall parts 112 and four corner walls 113, where the first side wall part 111 is a wall with the largest outer surface area in the housing 11, adjacent first side wall parts 111 and second side wall parts 112 are connected by one corner wall 113, the two first side wall parts 111 are oppositely provided to each other in a second direction Y, the two second side wall parts 112 are oppositely provided to each other in a third direction X, and the first direction Z, the second direction Y and the third direction X are perpendicular to each other in pairs. The electrode assembly 2 includes a positive pole piece 22, a negative pole piece 23, and a spacer 24, the spacer 24 being provided between the positive pole piece 22 and the negative pole piece 23, and the electrode assembly 2 has a flat area 25, a part where the positive pole piece 22 is located in the flat area 25, a part where the negative pole piece 23 is located in the flat area 25, and a part where the spacer 24 is located in the flat area 25 are laminated in the second direction Y. The electrode assembly 2 includes a fifth outer surface 27 perpendicular to the second direction Y, the fifth outer surface 27 being a surface having the largest area among the outer surfaces of the electrode assembly 2, and the first side wall part 111 is provided opposite to the fifth outer surface 27 in the second direction Y.

The first side wall part 111 is welded to the end cover 12 to form the first connecting part 51, the first side wall part 111 includes a first area 1111 and a second area 1112 arranged in a first direction Z, the first area 1111 has a lower harness than the second area 1112, and the first area 1111 is located between the first connecting part 51 and the second area 1112. The housing 11 includes a material of an aluminum alloy, the maximum distance between the second inner surface 805 and the second outer surface 807 in the second direction Y is D1, the maximum distance between the first inner surface 804 and the first outer surface 806 in the second direction Y is D2, and the dimensions of the housing 11 in the second direction Y are D, 0.005≤D₁/D≤0.065, 0.4mm≤D₁≤0.8mm, and 0.5mm≤D₂≤1.5mm.

The dimension of the first inner surface 804 in the third direction X is greater than the dimension of the first inner surface 804 in the first direction Z. The first inner surface 804 includes a first sub-face 11111 and a second sub-face 11112 arranged in a first direction Z, the second sub-face 11112 connects the first sub-face 11111 and the second inner surface 805, the distance between the first sub-face 11111 and the first outer surface 806 in a second direction Y is greater than the distance between the second sub-face 11112 and the first outer surface 806 in the second direction Y, and the distance between the second sub-face 11112 and the first outer surface 806 in the second direction Y exhibits a decreasing trend in a direction from the end cover 12 toward the electrode assembly 2. Two ends of the first inner surface 804 in the third direction X are not in contact with the corner wall 113. The first inner surface 804 includes a second connecting face 11114, a first connecting face 11113, and a third connecting face 11115 arranged in a third direction X, the first connecting face 11113 passing through a middle section. The first connecting face 11113 is formed at least partially in the first area 1111, and a projection obtained by overlapping the first connecting face 11113 with a projection of the first area 1111 in the second direction Y is a second projection, and the second projection passes through the middle section of the first side wall part 111. The distance between the second connecting face 11114 and the first outer surface 806 and the distance between the third connecting face 11115 and the first outer surface 806 are both smaller than the distance between the first connecting face 11113 and the first outer surface 806. The first connecting face 11113 connects the second connecting face 11114 and the third connecting face 11115. A dimension of the first connecting face 11113 in the third direction X is L₁, and a dimension of the first side wall part 111 in the third direction X is L, and 0.2≤L₁/L≤0.6. The first connecting face 11113 has a first end 11113a and a second end 11113b opposite to each other in the third direction X, the first side wall part 111 has a third end 1113 and a fourth end 1114 opposite to each other in the third direction X, the first end 11113a is adjacent to the third end 1113 and the second end 11113b is adjacent to the fourth end 1114. A dimension of the first side wall part 111 in the third direction X is L, a minimum distance between the first end 11113a and the third end 1113 in the third direction X is L₂, and a minimum distance between the second end 11113b and the fourth end 1114 in the third direction X is L₃, L₂/L≤0.3, L₃/L≤0.3, and 100mm≤L≤450mm.

The positive pole piece 22 includes a positive pole body area 221 protruding from a positive pole tab 21a of the positive pole body area 221, the negative pole piece 23 includes a negative pole body area 231 and a negative pole tab 21b protruding from the negative pole body area 231, in the first direction Z, the positive pole body area 221 has a fifth end 2211 facing the end cover 12, the negative pole body area 231 has a sixth end 2311 facing the end cover 12, and the spacer 24 has a seventh end 241 facing the end cover 12, the seventh end 241 being more adjacent to the end cover 12 than the fifth end 2211 and the sixth end 2311. The spacer 24 includes an extension area 242 that extends beyond the fifth end 2211 and the sixth end 2311 in the first direction Z, on the projection plane perpendicular to the second direction Y, the extension area 242 partially overlaps with the orthographic projection of the first inner surface 804. The first inner surface 804 is more adjacent to the electrode assembly 2 in the second direction Y with respect to the second inner surface 805; on the projection plane perpendicular to the second direction Y, the positive pole body area 221 does not overlap with orthographic projection of the first inner surface 804; on the projection plane perpendicular to the second direction Y, the negative pole body area 231 does not overlap with the orthographic projection of the first inner surface 804.

The first side wall part 111 further includes a first transition area 1117, the first transition area 1117 is connected to an end of the first area 1111 away from the second area 1112 in the first direction Z, the first transition area 1117 is connected to the first connecting part 51, and the connection location of the first transition area 1117 and the first connecting part 51 forms a first connecting interface 511, the first connecting interface 511 has a first location 5111 most adjacent to the first area 1111 in the first direction Z, and the first location 5111 is located at an end of the first area 1111 away from the second area 1112 in the first direction Z. The first connecting interface 511 includes a second interface 5113 that extends obliquely from a first location 5111 away from the end cover 12, in a second direction Y, a part of the first connecting part 51 is located between the second interface 5113 and the end cover 12, and the second interface 5113 is connected to the first inner surface 804 at the first location 5111.

It should be noted that, without contradictory, the embodiments in the present application may be combined with the features in the embodiments.

The above descriptions are merely preferable embodiments of the present application, and are not intended to limit the present application. For a person skilled in the art, various modifications and changes may be made to the present application. Any modification, equivalent replacement, or improvement made without departing from the spirit and principle of the present application shall fall within the protection scope of the present application.

## Claims

1. A battery cell, comprising:
a housing having an opening in at least one end thereof in a first direction and comprising a first side wall part;
an electrode assembly at least partially accommodated in the housing, wherein the electrode assembly comprises a positive pole piece and a negative pole piece, at least part of the positive pole piece and at least part of the negative pole piece are stacked in a second direction, the second direction is parallel to the thickness direction of the first side wall part, and the first direction intersects with the second direction;
an end cover used for sealing the opening, wherein the first side wall part and the end cover are welded to form a first connecting part;
wherein the first side wall part comprises, arranged in a first direction, a first area and a second area, the first area is located between the first connecting part and the second area, and the hardness of the first area is less than the hardness of the second area.

2. The battery cell according to claim 1, wherein a ratio of the hardness of the first area to the hardness of the second area is between 0.3 and 0.8.

3. The battery cell according to claim 2, wherein a ratio of the hardness of the first area to the hardness of the second area is between 0.5 and 0.8.

4. The battery cell according to any one of claims 1 to 3, wherein the hardness of the second area ranges from 40 HV to 100 HV, and the hardness of the first area ranges from 20 HV to 55 HV.

5. The battery cell according to any one of claims 1 to 4, wherein a dimension of the first area in the first direction ranges from 0.05 mm to 0.75 mm.

6. The battery cell according to claim 5, wherein a dimension of the first area in the first direction ranges from 0.1 mm to 0.6 mm.

7. The battery cell according to any one of claims 1 to 6, wherein at least some of the grains in the first area are first grains, a ratio of a number of the first grains in the first area to the number of all the grains in the first area is more than 50%, and a dimension of the first grains that extends in the first direction is a first dimension, a maximum dimension of the first grains in the second direction is a second dimension, and a ratio of the first dimension to the second dimension ranges from 0.2 to 5.

8. The battery cell according to claim 7, wherein a ratio of the first dimension to the second dimension ranges from 0.25 to 4.

9. The battery cell according to claim 7 or 8, wherein the first dimension ranges from 5 to 500 µm, and the second dimension ranges from 5 to 500 µm.

10. The battery cell according to any one of claims 1 to 9, wherein at least some of the grains in the second area are second grains, a ratio of a number of the second grains in the second area to a number of all the grains in the second area is more than 50%, and a dimension of the second grains that extends in the first direction is a third dimension, a maximum dimension of the second grains in the second direction is a fourth dimension, and a ratio of the third dimension to the fourth dimension ranges from 4 to 100.

11. The battery cell according to claim 10, wherein a ratio of the third dimension to the fourth dimension ranges from 4 to 50.

12. The battery cell according to claim 10 or 11, wherein the third dimension ranges from 150 to 1000 µm, and the fourth dimension ranges from 5 to 120 µm.

13. The battery cell according to any one of claims 1 to 12, wherein at least some of the grains in the first area are first grains, a ratio of a number of the first grains in the first area to the number of all the grains in the first area is more than 50%, and a dimension of the first grains that extends in the first direction is a first dimension, a maximum dimension of the first grains in the second direction is a second dimension, and a ratio of the first dimension to the second dimension ranges from 0.2 to 5;
at least some of the grains in the second area are second grains, a ratio of a number of the second grains in the second area to a number of all the grains in the second area is more than 50%, and a dimension of the second grains that extends in the first direction is a third dimension, a maximum dimension of the second grains in the second direction is a fourth dimension, and a ratio of the third dimension to the fourth dimension ranges from 4 to 100;
wherein the third dimension is greater than the first dimension.

14. The battery cell according to claim 13, wherein a ratio of the third dimension to the first dimension ranges from 1.5 to 150, or the ratio of the third dimension to the first dimension ranges from 1.8 to 100.

15. The battery cell according to claim 13 or 14, wherein the first dimension ranges from 5 to 500 µm, and the third dimension ranges from 150 to 1000 µm.

16. The battery cell according to any one of claims 1 to 15, wherein a maximum thickness of the first area is greater than a minimum thickness of the second area.

17. The battery cell according to claim 16, wherein the first side wall part has a first inner surface and a second inner surface facing the electrode assembly and a first outer surface and a second outer surface facing away from the electrode assembly, the first inner surface and the second inner surface being successively connected in a direction from the end cover toward the electrode assembly, the first outer surface and the second outer surface are successively connected in a direction from the end cover toward the electrode assembly, the first inner surface and the second inner surface are at least partially formed in the first area, the second inner surface and the second outer surface are at least partially formed in the second area, a distance between the first inner surface and the first outer surface in the second direction is larger than a distance between the second inner surface and the second outer surface in the second direction.

18. The battery cell according to claim 17, wherein the first inner surface comprises a first sub-face and a second sub-face successively connected in the direction from the end cover toward the electrode assembly, the first sub-face being formed at least partially in the first area, the first sub-face being more adjacent to the electrode assembly than the second sub-face in the second direction, a distance between the first sub-face and the first outer surface in the second direction being larger than a distance between the second sub-face and the first outer surface in the second direction.

19. The battery cell according to claim 18, wherein a distance between the second sub-face and the first outer surface in the second direction is a first preset thickness, and the first preset thickness exhibits a decreasing trend in the direction from the end cover toward the electrode assembly.

20. The battery cell according to claim 18 or 19, wherein the first sub-face spans across the first area and the second area, and the first outer surface spans across the first area and the second area; or, the second sub-face spans across the first area and the second area, and the first outer surface spans across the first area and the second area.

21. The battery cell according to any one of claims 17 to 20, wherein the first inner surface spans across the first area and the second area, and the first outer surface spans across the first area and the second area.

22. The battery cell according to any one of claims 17 to 21, wherein a dimension of the first inner surface in a third direction is greater than a dimension of the first inner surface in the first direction, and the first direction, the second direction and the third direction are non-coplanar and intersect with each other in pairs.

23. The battery cell according to any one of claims 17 to 22, wherein in the second direction, a projection obtained by overlapping the projection of the first inner surface with the projection of the first area is a first projection; a dimension of the first projection in the third direction is greater than a dimension of the first projection in the first direction, and the first direction, the second direction, and the third direction are non-coplanar and intersect with each other in pairs.

24. The battery cell according to claim 22 or 23, wherein the first inner surface comprises a first connecting face that passes through a middle section of the first side wall part, the middle section being perpendicular to the third direction, the middle section being at equal distances from two ends of the first side wall part in the third direction.

25. The battery cell according to claim 24, wherein the first connecting face is formed at least partially in the first area, in the second direction, a projection obtained by overlapping the projection of the first connecting face with the projection of the first area is a second projection, and the second projection passes through the middle section of the first side wall part.

26. The battery cell according to claim 24 or 25, wherein the first inner surface further comprises a second connecting face and a third connecting face, the second connecting face, the first connecting face, and the third connecting face are arranged in the third direction, the first connecting face is located between the second connecting face and the third connecting face, and in the second direction, a distance between the second connecting face and the first outer surface and a distance between the third connecting face and the first outer surface are both smaller than a distance between the first connecting face and the first outer surface.

27. The battery cell according to claim 26, wherein the first connecting face, the second connecting face, and the third connecting face are each at least partially formed in the first area.

28. The battery cell according to claim 26 or 27, wherein the first inner surface further comprises a first transition face, the first connecting face, the first transition face, and the second connecting face are arranged in the third direction, the first transition face connects the second connecting face and the first connecting face, the distance between the first transition face and the first outer surface in the second direction is a second preset thickness, and the second preset thickness exhibits a decreasing trend in a direction from the second connecting face toward the first connecting face; and/or the first inner surface further comprises a second transition face, the first connecting face, the second transition face and the third connecting face are arranged in the third direction, the second transition face connects the third connecting face and the first connecting face, the distance between the second transition face and the first outer surface in the second direction is a third preset thickness, and the third preset thickness exhibits a decreasing trend in a direction from the third connecting face toward the first connecting face.

29. The battery cell according to claim 28, wherein the first transition face is at least partially formed in the first area and/or the second transition face is at least partially formed in the first area.

30. The battery cell according to any one of claims 24 to 29, wherein a dimension of the first connecting face in the third direction is L₁, a dimension of the first side wall part in the third direction is L, and 0.2≤L₁/L≤0.6.

31. The battery cell according to any one of claims 24 to 30, wherein the first connecting face has a first end and a second end opposite to each other in the third direction, the first side wall part has a third end and a fourth end opposite to each other in the third direction, the first end is adjacent to the third end, the second end is adjacent to the fourth end, a dimension of the first side wall part in the third direction is L, a minimum distance of the first end from the third end in the third direction is L₂, and a minimum distance of the second end from the fourth end in the third direction is L₃; L₂/L≤0.3; and/or, L₃/L≤0.3.

32. The battery cell according to claim 30 or 31, wherein 100mm≤L≤450mm.

33. The battery cell according to any one of claims 22 to 32, wherein the housing comprises a corner wall to which two ends of the first side wall part in the third direction are connected;
at least one end of the first inner surface in the third direction is not in contact with the corner wall; or, two ends of the first inner surface in the third direction extend to two of the corner walls, respectively.

34. The battery cell according to any one of claims 17 to 33, wherein the electrode assembly further comprises a spacer provided between the positive pole piece and the negative pole piece;
the positive pole piece comprises a positive pole body area and a positive pole tab protruding from the positive pole body area, the positive pole body area has a positive pole active material layer, the negative pole piece comprises a negative pole body area and a negative pole tab protruding from the negative pole body area, the negative pole body area has a negative pole active material layer, in the first direction, the positive pole body area has a fifth end facing the end cover, the negative pole body area has a sixth end facing the end cover, and the spacer has a seventh end facing the end cover, the seventh end being more adjacent to the end cover than the fifth end and the sixth end.

35. The battery cell according to claim 34, wherein the spacer comprises an extension area that extends beyond the fifth end and the sixth end in the first direction, and on a projection plane perpendicular to the second direction, an orthographic projection of the extension area partially overlaps with the orthographic projection of the first inner surface.

36. The battery cell according to claim 34 or 35, wherein the first inner surface protrudes from the second inner surface;
on the projection plane perpendicular to the second direction, the orthographic projection of the positive pole body area does not overlap with the orthographic projection of the first inner surface; and/or on the projection plane perpendicular to the second direction, the orthographic projection of the negative pole body area does not overlap with the orthographic projection of the first inner surface.

37. The battery cell according to any one of claims 17 to 36, wherein the negative pole piece comprises a negative pole current collector and a negative pole active material layer provided on at least one side of the negative pole current collector, the negative pole active material layer comprising a negative pole active material.

38. The battery cell according to claim 37, wherein the negative pole active material layer comprises a negative pole body part and a negative pole thinning part, the negative pole body part and the negative pole thinning part are arranged in the first direction, and the negative pole thinning part is provided at an end, adjacent to the end cover, of the negative pole body part in the first direction.

39. The battery cell according to claim 38, wherein on the projection plane perpendicular to the second direction, an orthographic projection of the negative pole thinning part and an orthographic projection of the first inner surface are provided at intervals in the first direction.

40. The battery cell according to claim 39, wherein on the projection plane perpendicular to the second direction, a spacing dimension between the orthographic projection of the negative pole thinning part and the orthographic projection of the first inner surface in the first direction is greater than or equal to 1 mm.

41. The battery cell according to any one of claims 37 to 40, wherein the negative pole active material layer has a single-sided coating weight of from 90 mg/1540 mm² to 170 mg/1540 mm², optionally 110 mg/1540 mm² to 150 mg/1540 mm².

42. The battery cell according to any one of claims 37 to 41, wherein the negative pole piece has a porosity of from 27% to 40%.

43. The battery cell according to any one of claims 37 to 42, wherein the negative pole active material comprises a silicon-based material in which silicon is contained in the negative pole active material in an amount of 0.3% to 10% by mass, optionally 1% to 6% by mass.

44. The battery cell according to claim 43, wherein the silicon-based material comprises at least one of a silicon-oxygen compound and a silicon-carbon composite.

45. The battery cell according to any one of claims 17 to 44, wherein the positive pole piece comprises a positive pole current collector and a positive pole active material layer provided on at least one side of the positive pole current collector, the positive pole active material layer comprising a positive pole active material.

46. The battery cell according to claim 45, wherein the positive pole active material layer comprises a positive pole body part and a positive pole thinning part, the positive pole body part and the positive pole thinning part are arranged in the first direction, and the positive pole thinning part is provided at an end, adjacent to the end cover, of the positive pole body part in the first direction.

47. The battery cell according to claim 46, wherein on the projection plane perpendicular to the second direction, an orthographic projection of the positive thinning part and an orthographic projection of the first inner surface are provided at intervals in the first direction.

48. The battery cell according to claim 47, wherein on the projection plane perpendicular to the second direction, a spacing dimension between the orthographic projection of the positive thinning part and the orthographic projection of the first inner surface in the first direction is greater than or equal to 1 mm.

49. The battery cell according to any one of claims 45 to 48, wherein the positive pole active material layer has a single-sided coating weight of from 200 mg/1540mm² to 370 mg/1540/mm²; optionally from 240 mg/1540mm² to 330 mg/1540mm².

50. The battery cell according to any one of claims 45 to 49, wherein the positive pole active material is a lithium-containing phosphate.

51. The battery cell according to any one of claims 17 to 50, wherein housing comprises a material of steel;
the maximum distance between the second inner surface and the second outer surface in the second direction is D₁ and the dimension of the housing in the second direction is D, and 0.001≤D₁/D≤0.012.

52. The battery cell according to any one of claims 17 to 51, wherein housing comprises a material of steel;
the maximum distance between the second inner surface and the second outer surface in the second direction is D₁, 0.08mm≤D₁≤0.35mm; and/or the maximum distance between the first inner surface and the first outer surface in the second direction is D₂, 0.1 mm≤D₂≤0.6 mm.

53. The battery cell according to any one of claims 17 to 50, wherein the housing comprises a material of an aluminum alloy;
the maximum distance between the second inner surface and the second outer surface in the second direction is D₁ and the dimension of the housing in the second direction is D, and 0.005≤D₁/D≤0.065.

54. The battery cell according to any one of claims 17 to 50 or 53, wherein the housing comprises a material of an aluminum alloy;
the maximum distance between the second inner surface and the second outer surface in the second direction is D₁, 0.4mm≤D₁≤0.8mm; and/or the maximum distance between the first inner surface and the first outer surface in the second direction is D₂, 0.5mm≤D₂≤1.5mm.

55. The battery cell according to claim 53 or 54, wherein the aluminum alloy comprises the following components in the following percentages by mass: aluminum≥99.6%, copper≤0.05%, iron≤0.35%, magnesium≤0.03%, manganese≤0.03%, silicon≤0.25%, titanium≤0.03%, vanadium≤0.05%, zinc≤0.05%, other individual elements≤0.03%.

56. The battery cell according to any one of claims 17 to 55, wherein the first area is directly connected to the first connecting part, and the first inner surface extends in the first direction to an end of the first area facing the first connecting part.

57. The battery cell according to any one of claims 17 to 56, wherein the first side wall part further comprises a first transition area connected to an end of the first area away from the second area in the first direction, the first transition area being connected to the first connecting part, a connection location of the first transition area and the first connecting part forming a first connecting interface having a first location most adjacent to the first area in the first direction, the first location being at an end of the first area away from the second area in the first direction.

58. The battery cell according to claim 57, wherein at least some of the first connecting interfaces extend obliquely with respect to the second direction.

59. The battery cell according to claim 58, wherein the first connecting interface comprises a first interface that extends obliquely from the first location to the direction adjacent to the end cover, at least part of the first transition area being located between the first interface and the end cover in the second direction.

60. The battery cell according to claim 59, wherein the first interface and the first outer surface are connected to the first location, the first location being at least partially located in the first area.

61. The battery cell according to any one of claims 58 to 60, wherein the first connecting interface comprises a second interface that extends obliquely from the first location in the direction away from the end cover, at least part of the first transition area being located on a side of the second interface facing away from the end cover in the second direction.

62. The battery cell according to claim 61, wherein the second interface is connected to the first inner surface at the first location, the first location being at least partially in the first area.

63. The battery cell according to any one of claims 57 to 62, wherein the hardness of the first transition area is less than the hardness of the second area; and/or the hardness of the first transition area is less than the hardness of the first connecting part.

64. The battery cell according to any one of claims 57 to 63, wherein the first connecting interface is more adjacent to the second area than an outer surface of the end cover.

65. The battery cell according to any one of claims 17 to 64, wherein the housing further comprises a second side wall part and a corner wall, the first side wall part, the corner wall, and the second side wall part being arranged in a circumferential direction of the opening, the corner wall connecting the first side wall part and the second side wall part.

66. The battery cell according to claim 65, wherein the corner wall and the end cover are welded to form a second connecting part;
the corner wall comprises a third area and a fourth area arranged in the first direction, the hardness of the third area is less than the hardness of the fourth area, and the third area is located between the fourth area and the second connecting part.

67. The battery cell according to claim 66, wherein the corner wall has a third inner surface and a fourth inner surface that face toward the electrode assembly and third outer surface and the fourth outer surface that face away from the electrode assembly, the third inner surface and the fourth inner surface are successively connected in a direction from the end cover toward the electrode assembly, the third inner surface and the fourth inner surface are at least partially formed in the third area, the fourth inner surface and the fourth outer surface are at least partially formed in the fourth area, a distance between the third inner surface and the third outer surface in the thickness direction of the corner wall is larger than a distance between the fourth inner surface and the fourth outer surface in the thickness direction of the corner wall.

68. The battery cell according to claim 67, wherein the third area is directly connected to the first area, the third inner surface extends to an end of the third area facing the first area, and the first inner surface extends to an end of the first area facing the third area.

69. The battery cell according to claim 68, wherein the corner wall has a first connecting end and a second connecting end, the first side wall part is connected to the first connecting end, the second side wall part is connected to the second connecting end, a distance between the third inner surface and the third outer surface in a thickness direction of the corner wall is a fourth preset thickness, and the fourth preset thickness exhibits a decreasing trend in a direction from the first connecting end toward the second connecting end.

70. The battery cell according to any one of claims 67 to 69, wherein the third area is directly connected to the second connecting part, and the third inner surface extends to an end, facing the second connecting part, of the third area.

71. The battery cell according to any one of claims 67 to 70, wherein the corner wall further comprises a second transition area connected to an end, away from the fourth area, of the third area in the first direction, the second transition area being connected to the second connecting part, a connection location of the second transition area and the second connecting part forming a second connecting interface having a second location most adjacent to the third area in the first direction, the second location being at an end, away from the fourth area, of the third area in the first direction.

72. The battery cell according to claim 71, wherein at least part of the second connecting interface extends obliquely with respect to the thickness direction of the corner wall.

73. The battery cell according to claim 72, wherein the second connecting interface comprises a third interface that extends obliquely from the second location toward the end cover, at least part of the second transition area being located between the third interface and the end cover in the thickness direction of the corner wall.

74. The battery cell according to claim 73, wherein the third interface is connected to the third outer surface at the second location, the second location being in the third area.

75. The battery cell according to any one of claims 72 to 74, wherein the second connecting interface comprises a fourth interface that extends obliquely from the second location away from the end cover, at least part of the second transition area being located on a side, facing away from the end cover, of the fourth interface in the thickness direction of the corner wall.

76. The battery cell according to claim 75, wherein the fourth interface is connected to the third inner surface at the second location, the second location being in the third area.

77. The battery cell according to any one of claims 71 to 76, wherein the hardness of the second transition area is less than the hardness of the fourth area; and/or the hardness of the second transition area is less than the hardness of the second connecting part.

78. The battery cell according to any one of claims 71 to 77, wherein the second connecting interface is more adjacent to the fourth area than an outer surface of the end cover.

79. The battery cell according to any one of claims 66 to 78, wherein the third area has a lower hardness than the hardness of the second connecting part.

80. The battery cell according to any one of claims 65 to 79, wherein the housing comprises two of the first side wall parts and two of the second side wall parts, two of the first side wall parts are provided opposite to each other in the second direction, two of the second side wall parts are provided opposite to each other in the third direction, and the first direction, the second direction, and the third direction are perpendicular to each other in pairs.

81. The battery cell according to any one of claims 1 to 80, wherein the first side wall part has a limiting face facing the end cover, the limiting face abutting against the end cover to restrict the end cover from moving toward the electrode assembly.

82. The battery cell according to claim 81, wherein the first side wall part further comprises a limiting area provided on the limiting face, the limiting area being provided opposite the end cover in the second direction, the limiting area being welded to the end cover to form the first connecting part.

83. The battery cell according to any one of claims 1 to 82, wherein the electrode assembly is of a laminated structure, the electrode assembly comprises the plurality of positive pole pieces and the plurality of negative pole pieces, and the plurality of the positive pole pieces and the plurality of the negative pole pieces are laminated in the second direction.

84. The battery cell according to claim 83, wherein a number of the negative pole pieces is greater than a number of the positive pole pieces, and the one positive pole piece is provided between two adjacent negative pole pieces.

85. The battery cell according to claim 83 or 84, wherein each of the negative pole pieces is provided with a negative pole tab; and/or each of the positive pole pieces is provided with a positive pole tab.

86. The battery cell according to claims 83 to 85, wherein the first side wall part has a first inner surface and a second inner surface facing the electrode assembly and a first outer surface and a second outer surface facing away from the electrode assembly, the first inner surface and the second inner surface being successively connected in the direction from the end cover toward the electrode assembly, the first outer surface and a second outer surface are successively connected in the direction from the end cover toward the electrode assembly, the first inner surface and the second inner surface are at least partially formed in the first area, the second inner surface and the second outer surface are at least partially formed in the second area, a distance between the first inner surface and the first outer surface in the second direction is larger than a distance between the second inner surface and the second outer surface in the second direction;
a dimension of the first inner surface is greater than a dimension of the positive pole piece and/or a dimension of the negative pole piece in the third direction, and the first direction, the second direction, and the third direction are perpendicular to each other in pairs.

87. The battery cell according to any one of claims 1 to 86, wherein the battery cell further comprises two electrode terminals, wherein the two electrode terminals are provided on the end cover, and the two electrode terminals have opposite polarities and are both electrically connected to the electrode assembly;
the end cover is provided with a lead-out hole, the electrode terminal comprises a terminal body, a first limiting part and a second limiting part, the terminal body is connected to the first limiting part and the second limiting part, the terminal body passes through the lead-out hole, and in the first direction, the first limiting part is located on a side, facing away from the electrode assembly, of the end cover, and the second limiting part is located on a side, facing the electrode assembly, of the end cover.

88. The battery cell according to any one of claims 1 to 87, wherein the electrode assembly has a flat area, and a part of the positive pole piece in the flat area and a part of the negative pole piece in the flat area are stacked in the second direction.

89. The battery cell according to claim 88, wherein the electrode assembly comprises adjacent fifth outer surface and sixth outer surface, the fifth outer surface being perpendicular to the second direction, the fifth outer surface having a larger area than that of the sixth outer surface, the fifth outer surface being provided opposite the first side wall part in the second direction.

90. The battery cell according to claim 89, wherein the fifth outer surface is the surface with the largest area among the outer surfaces of the electrode assembly.

91. The battery cell according to claim 89 or 90, wherein the electrode assembly is of a winding structure, the electrode assembly further has a corner area, at least one end of the flat area in the third direction is provided with the corner area, and the first direction, the second direction, and the third direction are non-coplanar and intersect with each other in pairs;
the outer surface of the flat area comprises the fifth outer surface, the outer surface of the corner area comprises the sixth outer surface, and at least part of the sixth outer surface is an arc surface.

92. The battery cell according to claim 89 or 90, wherein the electrode assembly is of a laminated structure, the flat area comprises the plurality of positive pole pieces and the plurality of negative pole pieces, the plurality of the positive pole pieces and the plurality of the negative pole pieces are stacked in the second direction, and the fifth outer surface is perpendicular to the sixth outer surface.

93. The battery cell according to any one of claims 1 to 92, wherein the first side wall part is a wall having the largest outer surface area of the housing.

94. The battery cell according to any one of claims 1 to 93, wherein the housing comprises two of the first side wall parts that are oppositely provided in the second direction, and the electrode assembly is located between the two first side wall parts.

95. The battery cell according to any one of claims 1 to 94, wherein the first area has a lower hardness than the hardness of the first connecting part.

96. The battery cell according to any one of claims 1 to 95, wherein the number of the electrode assemblies is N1, each of the electrode assemblies further comprises at least one spacer, the number of the positive pole pieces is at least one, the number of the negative pole pieces is at least one, the positive pole pieces, the negative pole pieces, and the spacers are stacked and form a flat area, and at least some of the positive pole pieces, at least some of the negative pole pieces, and at least some of the spacers are laminated in the second direction in the flat area;
the number of layers of the positive pole pieces of each of the electrode assemblies stacked in the flat area is N2, the flat area has an outer surface perpendicular to the second direction, and the area of the outer surface is S, N1≥1, N2≥1, N1 * N2≥50, S≥8000 mm².

97. The battery cell according to any one of claims 1 to 96, wherein the negative pole piece comprises a negative pole current collector and a negative pole active material layer provided on at least one side of the negative pole current collector, the negative pole active material layer comprising a negative pole active material, and a discharge capacity per unit area of the negative pole active material layer is 2.0 mAh/cm² to 5.0 mAh/cm².

98. The battery cell according to claim 96, wherein the negative pole active material layer has a thickness of T1, and 9 µm≤T1≤75 µm.

99. A battery apparatus, comprising the battery cell according to any one of claims 1 to 98.

100. An electrical apparatus, comprising the battery cell according to any one of claims 1 to 98 for providing electrical energy to the electrical apparatus.
